(19) **Europäisches Patentamt / European Patent Office / Office européen des brevets**

(11) **EP 4 273 675 A1**

(12) **EUROPEAN PATENT APPLICATION**
published in accordance with Art. 153(4) EPC

(43) Date of publication:
**08.11.2023 Bulletin 2023/45**

(21) Application number: **22758755.7**

(22) Date of filing: **07.02.2022**

(51) International Patent Classification (IPC):
**G06F 3/048** (2013.01)

(52) Cooperative Patent Classification (CPC):
**G06F 3/048; G06F 3/14**

(86) International application number:
**PCT/CN2022/075354**

(87) International publication number:
**WO 2022/179390 (01.09.2022 Gazette 2022/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.02.2021 CN 202110221565**

(71) Applicant: **Huawei Technologies Co., Ltd.**
**Shenzhen, Guangdong 518129 (CN)**

(72) Inventors:
• **ZHOU, Xingchen**
**Shenzhen, Guangdong 518129 (CN)**
• **LIU, Fengkai**
**Shenzhen, Guangdong 518129 (CN)**
• **WANG, Yilun**
**Shenzhen, Guangdong 518129 (CN)**

(74) Representative: **MERH-IP Matias Erny Reichl Hoffmann**
**Patentanwälte PartG mbB**
**Paul-Heyse-Strasse 29**
**80336 München (DE)**

(54) **TILED DISPLAY METHOD, ELECTRONIC DEVICE, AND SYSTEM**

(57) This application provides a splicing display method, an electronic device, and a system. The method includes: A first electronic device displays a display interface of a first application program. A second electronic device sends first indication information to the first electronic device in response to detecting a first input of a user, where the first indication information indicates the first electronic device to perform splicing display with the second electronic device. The first electronic device displays a first part of image information and sends a second part of image information to the second electronic device based on a type of the first application program, where the first part of image information and the second part of image information are associated with the display interface. The second electronic device displays the second part of image information. In embodiments of this application, an electronic device may adaptively select an appropriate splicing display manner based on a type of an application program, to help improve an intelligence degree of the electronic device, and therefore help improve user experience.

FIG. 46

**Description**

This application claims priority to Chinese Patent Application No. 202110221565.2, filed with the China National Intellectual Property Administration on February 27, 2021 and entitled "SPLICING DISPLAY METHOD, ELECTRONIC DEVICE, AND SYSTEM", which is incorporated herein by reference in its entirety.

**TECHNICAL FIELD**

This application relates to the terminal field, and more specifically, to a splicing display method, an electronic device, and a system.

**BACKGROUND**

Currently, a quantity of electronic devices owned by a user is increasing, and a survey shows that one user has an average of seven electronic devices. When a user uses a single electronic device (for example, a mobile phone) to watch a video or view a document, a watching effect of the user is affected due to a limited screen size. Therefore, how to interconnect a plurality of electronic devices as a whole for the user to watch on a larger screen becomes an urgent problem to be resolved.

**SUMMARY**

This application provides a splicing display method, an electronic device, and a system. Screens of a plurality of electronic devices can be spliced for display, and the electronic device can adaptively select an appropriate splicing display manner based on a type of an application program, to help improve an intelligence degree of the electronic device and improve user experience.

According to a first aspect, a system is provided. The system includes a first electronic device and a second electronic device, and the first electronic device communicates with the second electronic device through a short-distance wireless connection. The first electronic device is configured to display a display interface of a first application program. The second electronic device is further configured to send first indication information to the first electronic device in response to detecting a first input of a user, where the first indication information indicates the first electronic device to perform splicing display with the second electronic device. The first electronic device is further configured to display a first part of image information and send a second part of image information to the second electronic device based on a type of the first application program in response to receiving the first indication information, where the first part of image information and the second part of image information are associated with the display interface. The second electronic device is further configured to display the second part of image information in response to receiving the second part of image information.

In this embodiment of this application, after receiving the first indication information of the second electronic device, the first electronic device may determine, based on a type of a currently displayed application program, a mode for performing splicing display with the second electronic device. In this way, the first electronic device and the second electronic device can be triggered to perform splicing display in a mode suitable for the type of the current application program, without a need to manually select the splicing display mode by the user. This reduces learning costs of the user for mode selection, helps improve an intelligence degree of the electronic device, and helps improve user experience.

In some possible implementations, this embodiment of this application further provides a system. The system includes a first electronic device and a second electronic device, and the first electronic device communicates with the second electronic device through a short-distance wireless connection. The first electronic device is configured to display a display interface of a first application program. The second electronic device is further configured to send first indication information to the first electronic device in response to detecting a first input of a user, where the first indication information indicates the first electronic device to perform splicing display with the second electronic device. The first electronic device is further configured to display a first part of image information and send a second part of image information to the second electronic device in response to receiving the first indication information and based on a layout type of the display interface, where the first part of image information and the second part of image information are associated with the display interface. The second electronic device is further configured to display the second part of image information in response to receiving the second part of image information.

In some possible implementations, when determining that a content element (for example, a video, a picture, or a text) in the current display interface fills an entire screen, the first electronic device determines to perform splicing display with the second electronic device in a full-screen mode. For example, the first electronic device expands and segments image information corresponding to the display interface based on a quantity of electronic devices that perform splicing display, a size of the display of the first electronic device, and a size of a display of the second electronic device, to obtain the first part of image information and the second part of image information.

In some possible implementations, when determining that a content element in the current display interface occupies only a part of an entire screen, and the other part of the screen further includes a navigation element (for example, a tab, a return control, and a search space) and/or an operation element (for example, a comment area, an episode selection area, and a content recommendation area), the first electronic device may determine to perform splicing display with the second electronic device in a companion mode. For example, the first electronic device may display the content element in full screen, and send, to the second electronic device, image information corresponding to an area in which the navigation element and/or the operation element are/is located. The second electronic device is specifically configured to display the area in which the navigation element and/or the operation element are/is located.

With reference to the first aspect, in some implementations of the first aspect, the first electronic device is specifically configured to display the first part of image information and send the second part of image information to the second electronic device based on the type of the first application program and a layout type of the display interface.

In this embodiment of this application, when determining the mode for performing splicing display with the second electronic device, the first electronic device may determine the splicing display mode with reference to the type of the first application program and the layout type of the current display interface. In this way, it can be ensured that the first electronic device determines an appropriate mode, so that the first electronic device and the second electronic device perform splicing display in the mode. This reduces the learning costs of the user for the mode selection, helps improve the intelligence degree of the electronic device, and helps improve user experience.

With reference to the first aspect, in some implementations of the first aspect, the type of the first application program is a multimedia application program, the layout type of the display interface is displaying a first multimedia file in full screen, and the first electronic device is specifically configured to: expand and segment image information corresponding to the display interface based on a quantity of electronic devices that perform splicing display, a size of a display of the first electronic device, and a size of a display of the second electronic device, to obtain the first part of image information and the second part of image information.

In this embodiment of this application, for the multimedia application program (for example, a video application program or a picture application program), when determining that the current display interface is displaying the first multimedia file (or a content element) in full screen, the first electronic device may choose to perform splicing display with the second electronic device in a full-screen mode. In this way, the user can watch the first multimedia file by using a screen spliced by a plurality of devices, and this helps improve a watching sense of the user and improve user experience.

With reference to the first aspect, in some implementations of the first aspect, the type of the first application program is a multimedia application program, the layout type of the display interface is a layout of a first area and a second area, the first area is a display area of a first multimedia file, and the second area is a display area of a details page of the first multimedia file. The first electronic device is specifically configured to: display the first multimedia file in full screen, and send image information corresponding to the details page of the first multimedia file to the second electronic device. The second electronic device is specifically configured to display the details page of the first multimedia file in response to receiving the image information corresponding to the details page of the first multimedia file.

In this embodiment of this application, for the multimedia application program (for example, a video application program or a picture application program), when determining that the first area in the current display interface displays the first multimedia file (or a content element) and the second area displays the details page, the first electronic device may choose to perform splicing display with the second electronic device in a companion mode. In this way, when watching the first multimedia file in full screen by using a device, the user can perform operations such as selection, commenting, and viewing recommended content in the second area, and this helps improve a viewing sense of the user and improve user experience.

In some possible implementations, the details page of the first multimedia file includes but is not limited to a name of the multimedia file, an episode selection area of the multimedia file (for example, a video), a details page of the multimedia file, a comment area of the multimedia file, and the like.

In some possible implementations, the first electronic device is specifically configured to: display the details page of the first multimedia file in full screen, and send image information corresponding to the first multimedia file to the second electronic device. The second electronic device is specifically configured to display the first multimedia file in response to receiving the image information corresponding to the first multimedia file.

With reference to the first aspect, in some implementations of the first aspect, the type of the first application program is a document application program, the display interface displays first-page content of a first document, and the first document further includes second-page content. The first electronic device is specifically configured to: display the first-page content, and send image information corresponding to the second-page content to the second electronic device. The second electronic device is specifically configured to display the second-page content in response to receiving the image information corresponding to the second-page content.

In this embodiment of this application, for the document application program, when determining that the current display interface is displaying the first-page content of the first document, the first electronic device may choose to perform splicing display with the second electronic device in a paging mode. In this way, the user can view content on a plurality of pages of the first document by using a screen spliced by a plurality of devices, and this helps improve efficiency of browsing the document by the user and improve user experience.

With reference to the first aspect, in some implementations of the first aspect, the type of the first application program is a shopping application program or a social application program, the display interface includes a first interface element, and the first interface element is associated with another display interface of the first application program. The first electronic device is specifically configured to: display the display interface, and send image information corresponding to the another display interface to the second electronic device. The second electronic device is specifically configured to display the another display interface in response to receiving the image information corresponding to the another display interface.

In this embodiment of this application, for the shopping application program or the social application program, when determining that the current interface displays content of a specific display interface, the first electronic device chooses to perform splicing display with the second electronic device in a parallel mode. In this way, the user can view the display interface (a level-1 page) and an associated interface (a level-2 page) of the display interface by using a plurality of devices. In this way, the user does not need to switch between a plurality of display interfaces by using a return control, and this helps improve user experience.

With reference to the first aspect, in some implementations of the first aspect, the type of the first application program is a drawing application program, and the display interface includes a picture display area and a drawing function display area. The first electronic device is specifically configured to: display the picture display area, and send image information corresponding to the drawing function display area to the second electronic device. The second electronic device is specifically configured to display the drawing function display area in response to receiving the image information corresponding to the drawing function display area.

In this embodiment of this application, for the drawing application program, if the display interface includes the picture display area and the drawing function display area, the first electronic device may determine to perform splicing display with the second electronic device in a companion mode. In this way, the user can view picture content on one device and edit a picture on another device, and this helps improve user experience in a drawing process.

According to a second aspect, a splicing display method is provided. The method is applied to a first electronic device, the first electronic device communicates with a second electronic device through a short-distance wireless connection, and the method includes: The first electronic device displays a display interface of a first application program. The first electronic device receives first indication information sent by the second electronic device, where the first indication information indicates the first electronic device to perform splicing display with the second electronic device. The first electronic device displays a first part of image information and sends a second part of image information to the second electronic device based on a type of the first application program in response to receiving the first indication information, where the first part of image information and the second part of image information are associated with the display interface.

With reference to the second aspect, in some implementations of the second aspect, that the first electronic device displays a first part of image information and sends a second part of image information to the second electronic device based on a type of the first application program includes: The first electronic device displays the first part of image information and sends the second part of image information to the second electronic device based on the type of the first application program and a layout type of the display interface.

With reference to the second aspect, in some implementations of the second aspect, the type of the first application program is a multimedia application program, the layout type of the display interface is displaying a first multimedia file in full screen, and the method further includes: The first electronic device expands and segments image information corresponding to the display interface based on a quantity of electronic devices that perform splicing display, a size of the display of the first electronic device, and a size of a display of the second electronic device, to obtain the first part of image information and the second part of image information.

With reference to the second aspect, in some implementations of the second aspect, the type of the first application program is a multimedia application program, the layout type of the display interface is a layout of a first area and a second area, the first area is a display area of a first multimedia file, and the second area is a display area of a details page of the first multimedia file. That the first electronic device displays the first part of image information and sends the second part of image information to the second electronic device based on the type of the first application program and a layout type of the display interface includes: The first electronic device displays the first multimedia file in full screen, and sends image information corresponding to the details page of the first multimedia file to the second electronic device.

With reference to the second aspect, in some implementations of the second aspect, the type of the first application program is a document application program, the display interface displays first-page content of a first document, and the first document further includes second-page content. That the first electronic device displays a first part of image information and sends a second part of image information to the second electronic device based on a type of the first application program includes: The first electronic device displays the first-page content, and sends image information corresponding to the second-page content to the second electronic device.

With reference to the second aspect, in some implementations of the second aspect, the type of the first application program is a shopping application program or a social application program, the display interface includes a first interface element, and the first interface element is associated with another display interface of the first application program. That the first electronic device displays a first part of image information and sends a second part of image information to the second electronic device based on a type of the first application program includes: The first electronic device displays the display interface, and sends image information corresponding to the another display interface to the second electronic device.

According to a third aspect, an apparatus is provided. The apparatus includes: a display unit, configured to display a display interface of a first application program; a receiving unit, configured to receive first indication information sent by a second electronic device, where the first indication information indicates the apparatus to perform splicing display with the second electronic device, where the display unit is further configured to display a first part of image information based on a type of the first application program; and a sending unit, configured to send a second part of image information to the second electronic device, where the first part of image information and the second part of image information are associated with the display interface.

According to a fourth aspect, an electronic device is provided. The device includes one or more processors, a memory, and one or more computer programs. The one or more computer programs are stored in the memory. The one or more computer programs include instructions. When the instructions are executed by the electronic device, the electronic device is enabled to perform the method in any possible implementation of the second aspect.

According to a fifth aspect, a computer program product including instructions is provided. When the computer program product runs on a first electronic device, the electronic device is enabled to perform the method according to the second aspect.

According to a sixth aspect, a computer-readable storage medium is provided. The computer-readable storage medium includes instructions. When the instructions are run on a first electronic device, the electronic device is enabled to perform the method according to the second aspect.

According to a seventh aspect, a chip is provided. The chip is configured to execute instructions. When the chip runs, the chip performs the method according to the second aspect.

**BRIEF DESCRIPTION OF DRAWINGS**

FIG. 1 is a schematic diagram of a hardware structure of an electronic device according to an embodiment of this application;
FIG. 2 is a block diagram of a software structure according to an embodiment of this application;
FIG. 3(a) to FIG. 3(d) show a group of graphical user interfaces according to an embodiment of this application;
FIG. 4(a) to FIG. 4(d) show another group of graphical user interfaces according to an embodiment of this application;
FIG. 5(a) to FIG. 5(c) show another group of graphical user interfaces according to an embodiment of this application;
FIG. 6(a) to FIG. 6(e) show another group of graphical user interfaces according to an embodiment of this application;
FIG. 7(a) to FIG. 7(d) show another group of graphical user interfaces according to an embodiment of this application;
FIG. 8(a) to FIG. 8(c) show another group of graphical user interfaces according to an embodiment of this application;
FIG. 9(a) to FIG. 9(f) show another group of graphical user interfaces according to an embodiment of this application;
FIG. 10(a) and FIG. 10(b) show another group of graphical user interfaces according to an embodiment of this application;
FIG. 11(a) to FIG. 11(c) show another group of graphical user interfaces according to an embodiment of this application;
FIG. 12(a) to FIG. 12(c) show another group of graphical user interfaces according to an embodiment of this application;
FIG. 13(a) and FIG. 13(b) show another group of graphical user interfaces according to an embodiment of this application;
FIG. 14(a) and FIG. 14(b) show another group of graphical user interfaces according to an embodiment of this application;
FIG. 15(a) to FIG. 15(c) show another group of graphical user interfaces according to an embodiment of this application;
FIG. 16(a) and FIG. 16(b) show another group of graphical user interfaces according to an embodiment of this application;
FIG. 17(a) and FIG. 17(b) show another group of graphical user interfaces according to an embodiment of this application;

FIG. 18(a) and FIG. 18(b) show another group of graphical user interfaces according to an embodiment of this application;

FIG. 19(a) and FIG. 19(b) show another group of graphical user interfaces according to an embodiment of this application;

FIG. 20(a) to FIG. 20(e) show another group of graphical user interfaces according to an embodiment of this application;

FIG. 21(a) to FIG. 21(c) show another group of graphical user interfaces according to an embodiment of this application;

FIG. 22(a) to FIG. 22(c) show another group of graphical user interfaces according to an embodiment of this application;

FIG. 23(a) to FIG. 23(c) show another group of graphical user interfaces according to an embodiment of this application;

FIG. 24(a) to FIG. 24(c) show another group of graphical user interfaces according to an embodiment of this application;

FIG. 25(a) to FIG. 25(c) show another group of graphical user interfaces according to an embodiment of this application;

FIG. 26(a) and FIG. 26(b) show another group of graphical user interfaces according to an embodiment of this application;

FIG. 27(a) to FIG. 27(c) show another group of graphical user interfaces according to an embodiment of this application;

FIG. 28 is a schematic diagram of structures of a source device and a sink device according to an embodiment of this application;

FIG. 29A and FIG. 29B are a schematic flowchart of a method in which a source device and a sink device perform display in a full-screen mode according to an embodiment of this application;

FIG. 30 shows a process in which a source device performs cropping in a segmentation manner and displays a cropped canvas on a virtual screen according to an embodiment of this application;

FIG. 31 shows a process in which a source device performs cropping in a mask manner and displays a cropped canvas on a virtual screen according to an embodiment of this application;

FIG. 32 shows another process in which a source device performs cropping in a segmentation manner and displays a cropped canvas on a virtual screen according to an embodiment of this application;

FIG. 33 shows another process in which a source device performs cropping in a mask manner and displays a cropped canvas on a virtual screen according to an embodiment of this application;

FIG. 34 is a schematic flowchart of a method in which a source device and a sink device perform display in a paging mode according to an embodiment of this application;

FIG. 35A and FIG. 35B are a schematic diagram of displaying a desktop of a source end in a paging mode according to an embodiment of this application;

FIG. 36 is a schematic flowchart of a method in which a source device and a sink device perform display in a parallel mode according to an embodiment of this application;

FIG. 37A to FIG. 37C show a process of opening an activity page in an application program in a parallel mode according to an embodiment of this application;

FIG. 38 is a schematic flowchart of a method in which a source device and a sink device perform display in a dual-application mode according to an embodiment of this application;

FIG. 39 is a schematic flowchart of a method in which a source device and a sink device perform display in a companion mode according to an embodiment of this application;

FIG. 40A to FIG. 40C show a process of cropping a display interface of a video application program in a companion mode according to an embodiment of this application;

FIG. 41 is a schematic flowchart of a method in which a source device and a sink device perform display in a tabs mode according to an embodiment of this application;

FIG. 42A and FIG. 42B show a process of cropping a display interface of a music application program in a tabs mode according to an embodiment of this application;

FIG. 43 is a schematic flowchart of an adaptive mode selection method according to an embodiment of this application;

FIG. 44 is a schematic flowchart of a splicing display mode switching method according to an embodiment of this application;

FIG. 45 is another schematic flowchart of a splicing display mode switching method according to an embodiment of this application;

FIG. 46 is a schematic flowchart of a splicing display method according to an embodiment of this application;

FIG. 47 is a schematic diagram of a structure of an apparatus according to an embodiment of this application; and

FIG. 48 is another schematic diagram of a structure of an electronic device according to an embodiment of this application.

## DESCRIPTION OF EMBODIMENTS

The following describes technical solutions in embodiments of this application with reference to accompanying drawings in embodiments of this application. In descriptions of embodiments of this application, unless otherwise specified, "/" represents an "or" relationship. For example, A/B may represent A or B. "And/or" in this specification is merely an association relationship for describing associated objects, and represents that three relationships may exist. For example, A and/or B may represent the following three cases: Only A exists, both A and B exist, and only B exists. In addition, in the descriptions of embodiments of this application, "a plurality of" or "multiple" means two or more than two.

Terms "first" and "second" mentioned below are merely used for the purpose of description, and shall not be understood as indicating or implying relative importance or implicitly indicating a quantity of indicated technical features. Therefore, a feature limited by "first" or "second" may explicitly or implicitly include one or more features. In the descriptions of embodiments, unless otherwise specified, "a plurality of" means two or more than two.

A method provided in embodiments of this application may be applied to electronic devices such as a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, and a personal digital assistant (personal digital assistant, PDA). A specific type of the electronic device is not limited in embodiments of this application.

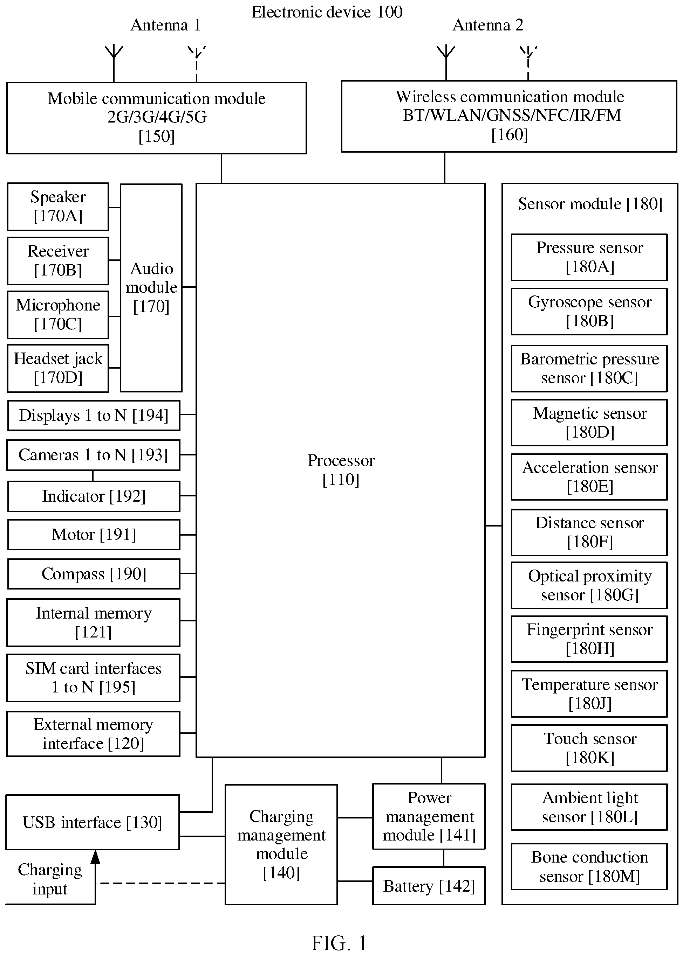

For example, FIG. 1 is a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has just been used or is cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used for audio communication, and implement analog signal sampling, quantization, and coding. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to peripheral components such as the display 194 and the camera 193. The MIPI interface includes a camera serial interface (camera serial interface, CSI), a display serial interface (display serial interface, DSI), and the like. In some embodiments, the processor 110 communicates with the camera 193 through a CSI interface, to implement a photographing function of the electronic device 100. The processor 110 communicates with the display 194 through a DSI interface, to implement a display function of the electronic device 100.

The GPIO interface may be configured by using software. The GPIO interface may be configured as a control signal interface, or may be configured as a data signal interface. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, an MIPI interface, or the like.

The USB interface 130 is an interface that complies with a USB standard specification, and may be specifically a mini USB interface, a micro USB interface, a USB type C interface, or the like. The USB interface 130 may be configured to connect to the charger to charge the electronic device 100, may be configured to transmit data between the electronic device 100 and a peripheral device, and may be configured to connect to a headset to play audio through the headset. The interface may be further configured to connect to another electronic device, for example, an AR device.

It may be understood that an interface connection relationship between the modules shown in this embodiment of this application is merely an example for description, and does not constitute a limitation on the structure of the electronic device 100. In some other embodiments of this application, the electronic device 100 may alternatively use an interface connection manner different from that in this embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device through the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the external memory, the display 194, the camera 193, the wireless communication module 160, and the like. The power management module 141 may be further configured to monitor parameters such as a battery capacity, a battery cycle count, and a battery status of health (electric leakage and impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a solution that is applied to the electronic device 100 and that is for wireless communication including 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the electromagnetic wave to the modem processor for demodulation. The mobile communication module 150 may further amplify a signal modulated by the modem processor, and the amplified signal is converted by the antenna 1 into an electromagnetic wave for radiation. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transfers an obtained signal to the application processor. The application processor outputs a sound signal through an audio device (which is not limited to the speaker 170A or the receiver 170B), or displays an image or a video on the display 194. In some embodiments, the modem processor may be an independent component. In some other embodiments, the modem processor may be independent of the processor 110, and is disposed in a same component as the mobile communication module 150 or another functional module.

The wireless communication module 160 may provide a solution that is applied to the electronic device 100 and that is for wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

In some embodiments, the antenna 1 of the electronic device 100 is coupled to the mobile communication module 150, and the antenna 2 is coupled to the wireless communication module 160, so that the electronic device 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may further process another digital signal in addition to the digital image signal. For example, when the electronic device 100 selects a frequency, the digital signal processor is configured to perform Fourier transform and the like on energy of the frequency.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information with reference to a structure of a biological neural network, for example, with reference to a transfer mode between human brain neurons, and may further continuously perform self-learning. Application such as intelligent cognition of the electronic device 100, for example, image identification, facial identification, speech identification, and text understanding, may be implemented through the NPU.

The external memory interface 120 may be configured to connect to an external memory card, for example, a micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The processor 110 runs the instructions stored in the internal memory 121, to perform various functional applications and data processing of the electronic device 100. The internal memory 121 may include a program storage area and a data storage area. The program storage area may store an operating system, an application program required by at least one function (for example, a sound playing function or an image playing function), and the like. The data storage area may store data (for example, audio data, and a phone book) created in a process of using the electronic device 100, and the like. In addition, the internal memory 121 may include a high-speed random access memory, and may further include a nonvolatile memory, for example, at least one magnetic disk storage component, a flash memory component, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal output, and is further configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an electrical audio signal into a sound signal. The electronic device 100 may be configured to listen to music or answer a hands-free call through the speaker 170A.

The receiver 170B, also referred to as an "earpiece", is configured to convert an electrical audio signal into a sound signal. When the electronic device 100 is used to answer a call or receive voice information, a voice may be received by placing the receiver 170B close to an ear.

The microphone 170C, also referred to as a "mike" or a "mic", is configured to convert a sound signal into an electrical signal. When making a call or sending voice information, a user may place the mouth close to the microphone 170C to make a sound, to input a sound signal into the microphone 170C. At least one microphone 170C may be disposed in the electronic device 100. In some other embodiments, two microphones 170C may be disposed in the electronic device 100, to collect a sound signal and further implement a noise reduction function. In some other embodiments, three, four, or more microphones 170C may alternatively be disposed in the electronic device 100, to collect a sound signal, implement noise reduction, identify a sound source, implement a directional recording function, and so on.

The headset jack 170D is configured to connect to a wired headset. The headset jack 170D may be the USB interface 130, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates with conductive materials. When a force is applied to the pressure sensor 180A, a capacitance between electrodes changes. The electronic device 100 determines intensity of pressure based on a change of the capacitance. When a touch operation is performed on the display 194, the electronic device 100 detects strength of the touch operation through the pressure sensor 180A. The electronic device 100 may also calculate a touch position based on a detection signal of the pressure sensor 180A. In some embodiments, touch operations that are performed at a same touch position but have different touch operation strength may correspond to different operation instructions. For example, when a touch operation whose touch operation strength is less than a first pressure threshold is performed on a short message service message application icon, an instruction for viewing a short message service message is executed. When a touch operation whose touch operation strength is greater than or equal to the first pressure threshold is performed on the short message service message application icon, an instruction for newly creating a short message service message is executed.

The gyroscope sensor 180B may be configured to determine a motion posture of the electronic device 100. In some embodiments, angular velocities of the electronic device 100 around three axes (that is, an x-axis, a y-axis, and a z-axis) may be determined through the gyroscope sensor 180B. The gyroscope sensor 180B may be configured to implement image stabilization during photographing. For example, when the shutter is pressed, the gyroscope sensor 180B detects an angle at which the electronic device 100 shakes, and calculates, based on the angle, a distance that needs to be compensated by a lens module, so that a lens cancels shaking of the electronic device 100 through reverse motion, to implement image stabilization. The gyroscope sensor 180B may be further used in scenarios of navigation and motion sensing gaming.

The barometric pressure sensor 180C is configured to measure barometric pressure. In some embodiments, the electronic device 100 calculates an altitude based on a value of the barometric pressure measured by the barometric pressure sensor 180C, to assist in positioning and navigation.

The magnetic sensor 180D includes a Hall sensor. The electronic device 100 may detect opening and closing of a flip leather case through the magnetic sensor 180D. In some embodiments, when the electronic device 100 is a flip phone, the electronic device 100 may detect opening and closing of a flip cover through the magnetic sensor 180D. Further, features such as automatic unlocking through flipping are set based on a detected opening/closing state of the leather case or the flip cover.

The acceleration sensor 180E may detect magnitudes of accelerations of the electronic device 100 in various directions (usually along the three axes). When the electronic device 100 is stationary, a magnitude and a direction of gravity may be detected. The acceleration sensor 180E may be further configured to identify a posture of the electronic device, and is used in applications such as landscape/portrait orientation switching and a pedometer.

The distance sensor 180F is configured to measure a distance. The electronic device 100 may measure the distance by using infrared or lasers. In some embodiments, in a photographing scenario, the electronic device 100 may use the distance sensor 180F to measure a distance to implement fast focusing.

The optical proximity sensor 180G may include, for example, a light-emitting diode (LED) and an optical detector, for example, a photodiode. The light-emitting diode may be an infrared light-emitting diode. The electronic device 100 emits infrared light through the light-emitting diode. The electronic device 100 uses the photodiode to detect infrared reflected light from a nearby object. When sufficient reflected light is detected, it may be determined that there is an object near the electronic device 100. When insufficient reflected light is detected, the electronic device 100 may determine that there is no object near the electronic device 100. The electronic device 100 may detect, through the optical proximity sensor 180G, whether the user holds the electronic device 100 close to an ear to make a call, to automatically turn off a screen to save power. The optical proximity sensor 180G may be further used in a leather case mode or a pocket mode to automatically unlock or lock the screen.

The ambient light sensor 180L is configured to sense ambient light brightness. The electronic device 100 may adaptively adjust brightness of the display 194 based on the sensed ambient light brightness. The ambient light sensor 180L may be further configured to automatically adjust a white balance during photographing. The ambient light sensor 180L may further cooperate with the optical proximity sensor 180G to detect whether the electronic device 100 is in a pocket, to implement mistouch prevention.

The fingerprint sensor 180H is configured to collect a fingerprint. The electronic device 100 may implement functions such as unlocking, accessing an application lock, photographing, and answering a call by using a collected fingerprint feature.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor near the temperature sensor 180J, to reduce power consumption and implement thermal protection. In some other embodiments, when the temperature is less than another threshold, the electronic device 100 heats the battery 142, to avoid abnormal shutdown of the electronic device 100 caused by a low temperature. In some other embodiments, when the temperature is less than still another threshold, the electronic device 100 boosts an output voltage of the battery 142, to avoid abnormal shutdown caused by a low temperature.

The touch sensor 180K is also referred to as a "touch panel". The touch sensor 180K may be disposed on the display 194, and the touch sensor 180K and the display 194 form a touchscreen. The touchscreen is also referred to as a "touch panel". The touch sensor 180K is configured to detect a touch operation performed on or near the touch sensor. The touch sensor may transfer the detected touch operation to the application processor to determine a touch event type. A visual output related to the touch operation may be provided through the display 194. In some other embodiments, the touch sensor 180K may alternatively be disposed on a surface of the electronic device 100 at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, and receive a blood pressure beating signal. In some embodiments, the bone conduction sensor 180M may alternatively be disposed in the headset, to constitute a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt or a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 can support a nano-SIM card, a micro-SIM card, a SIM card, and the like. A plurality of cards may be simultaneously inserted into a same SIM card interface 195. The plurality of cards may be of a same type or of different types. The SIM card interface 195 is also compatible with different types of SIM cards. The SIM card interface 195 is also compatible with an external storage card. The electronic device 100 interacts with a network through the SIM card, to implement functions such as a call and data communication. In some embodiments, the electronic device 100 uses an embedded-SIM (embedded-SIM, eSIM) card, that is, an embedded SIM card. The eSIM card may be embedded into the electronic device 100, and cannot be separated from the electronic device 100.

It should be understood that a calling card in embodiments of this application includes but is not limited to a SIM card, an eSIM card, a universal subscriber identity module (universal subscriber identity module, USIM), a universal integrated circuit card (universal integrated circuit card, UICC), and the like.

A software system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100.

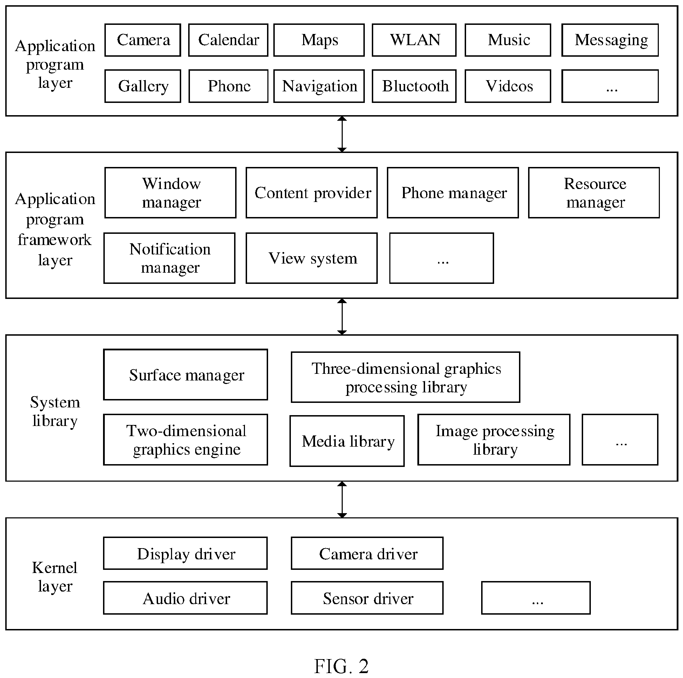

FIG. 2 is a block diagram of the software structure of the electronic device 100 according to an embodiment of this application. In the layered architecture, software is divided into several layers, and each layer has a clear role and task. The layers communicate with each other through a software interface. In some embodiments, the Android system is divided into four layers: an application program layer, an application program framework layer, an Android runtime (Android runtime) and system library, and a kernel layer from top to bottom. The application program layer may include a series of application program packages.

As shown in FIG. 2, the application program packages may include application programs such as Camera, Gallery, Calendar, Phone, Maps, Navigation, WLAN, Bluetooth, Music, Videos, and Messaging.

The application program framework layer provides an application programming interface (application programming interface, API) and a programming framework for the application programs at the application program layer. The application program framework layer includes some predefined functions.

As shown in FIG. 2, the application program framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and so on.

The content provider is configured to store and obtain data, and enable the data to be accessed by an application program. The data may include a video, an image, audio, calls that are made and received, a browsing history and a browsing bookmark, an address book, and the like.

The view system includes visual controls such as a control for displaying a text and a control for displaying a picture. The view system may be configured to construct an application program. A display interface may include one or more views. For example, a display interface including an SMS message notification icon may include a text display view and a picture display view.

The phone manager is configured to provide a communication function for the electronic device 100, for example, management of a call status (including answering, declining, or the like).

The resource manager provides various resources such as a localized character string, an icon, a picture, a layout file, and a video file for an application program.

The notification manager enables an application program to display notification information in a status bar, and may be configured to convey a notification message. The notification information may automatically disappear after a short pause without requiring a user interaction. For example, the notification manager is configured to notify download completion and provide a message prompt. The notification manager may alternatively be a notification that appears in a top status bar of the system in a form of a graph or a scroll bar text, for example, a notification of an application program that is run on a background, or may be a notification that appears on a screen in a form of a dialog window. For example, text information is displayed in the status bar, a prompt tone is given, the electronic device vibrates, or the indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application program layer and the application program framework layer are run on the virtual machine. The virtual machine executes Java files at the application program layer and the application program framework layer as binary files. The virtual machine is configured to implement functions such as object life cycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of application programs.

The media library supports playback and recording in a plurality of commonly used audio and video formats, static image files, and the like. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be understood that the technical solutions in embodiments of this application may be applied to systems such as Android, iOS, and HarmonyOS.

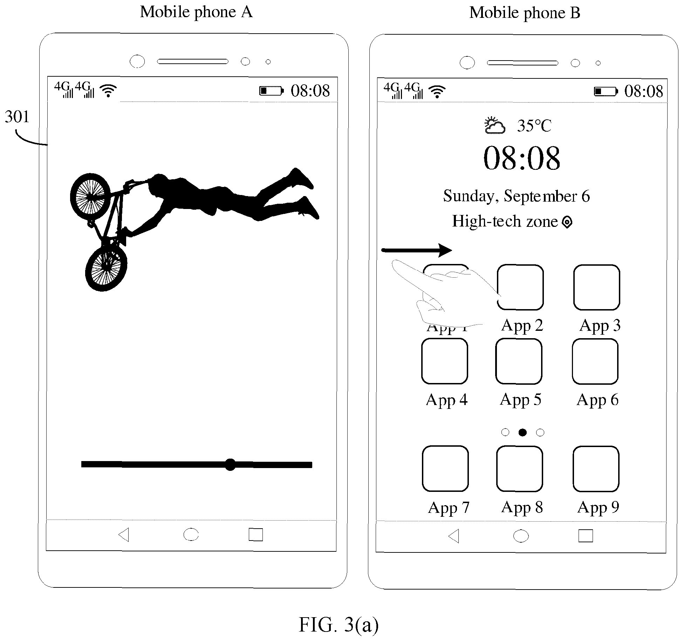

FIG. 3(a) to FIG. 3(d) show a group of graphical user interfaces (graphical user interfaces, GUIs) according to an embodiment of this application.

Refer to a GUI shown in FIG. 3(a). A mobile phone A displays a playback interface of a video application, and a video playback image 301 is displayed in the playback interface. In this case, a mobile phone B displays a desktop of the mobile phone B.

After the mobile phone B approaches the mobile phone A, the mobile phone A and the mobile phone B may be networked in a near field wireless connection manner. Networking manners include but are not limited to access point (access point, AP) networking and peer-to-peer (peer-to-peer, P2P) networking. The AP networking means that devices served by a same AP (for example, a home Wi-Fi router) may communicate with each other through the AP device, to form many-to-many networking. For example, the mobile phone A and the mobile phone B may be served by a same home router. When the mobile phone B approaches the mobile phone A, the mobile phone A may use a received signal strength indication (received signal strength indication, RSSI) technology to calculate a distance between the device A and the device B based on strength of a received signal. When the distance is less than or equal to a preset distance, the mobile phone A and the mobile phone B may perform AP networking.

Wi-Fi direct (Wi-Fi direct), also referred to as Wi-Fi peer-to-peer (Wi-Fi peer-to-peer, Wi-Fi P2P), is a peer-to-peer connection manner. The Wi-Fi direct may enable a plurality of Wi-Fi devices to form a peer-to-peer network (peer-to-peer network, P2P network) without an access point (access point, AP) to communicate with each other. A station (station, STA) may serve as a conventional AP, and is referred to as a group owner (group owner, GO). Another STA may be referred to as a group client (group client, GC), and the GC may be connected to the GO as connected to the AP. One STA may play a role of the GO (in other words, serve as the AP), and another STA may play a role of the GC. In this embodiment of this application, when a device approaches another device, a device on a left side may be considered as a GO and a device on a right side may be considered as a GC by default. For example, the mobile phone A may serve as a GO, and the mobile phone B may serve as a GC. Alternatively, when a device detects an operation of sliding to the right by a user, the device may serve as a GC, and the device may select another device on a left side of the device as a GO. Alternatively, when a device detects an operation of sliding to the left by a user, the device may serve as a GC, and the device may select another device on a right side of the device as a GO.

To construct a P2P network, first, an electronic device needs to scan another electronic device by using a P2P protocol. This process is referred to as a discovery phase. After discovery, establishment of a P2P connection can be triggered. After the mobile phone B approaches the mobile phone A, the mobile phone A may use an RSSI technology to calculate a distance between the device A and the device B based on an RSSI. When the distance is less than or equal to a preset distance, the mobile phone A and the mobile phone B may perform P2P networking.

The Wi-Fi P2P technology is a basis of upper-layer services. Currently, P2P applications established based on P2P mainly include Miracast applications and WLAN direct applications. In a Miracast application scenario, an electronic device that supports P2P may discover and connect to a large-screen device that supports P2P through scanning, and then directly send resources such as a video and a picture of the electronic device to the large-screen device for display. The P2P technology greatly enriches experience of a Wi-Fi technology.

When the mobile phone B detects an operation of sliding to the right on the desktop by a user, the mobile phone B sends indication information to the mobile phone A, where the indication information indicates that the mobile phone B expects to enter a full-screen mode.

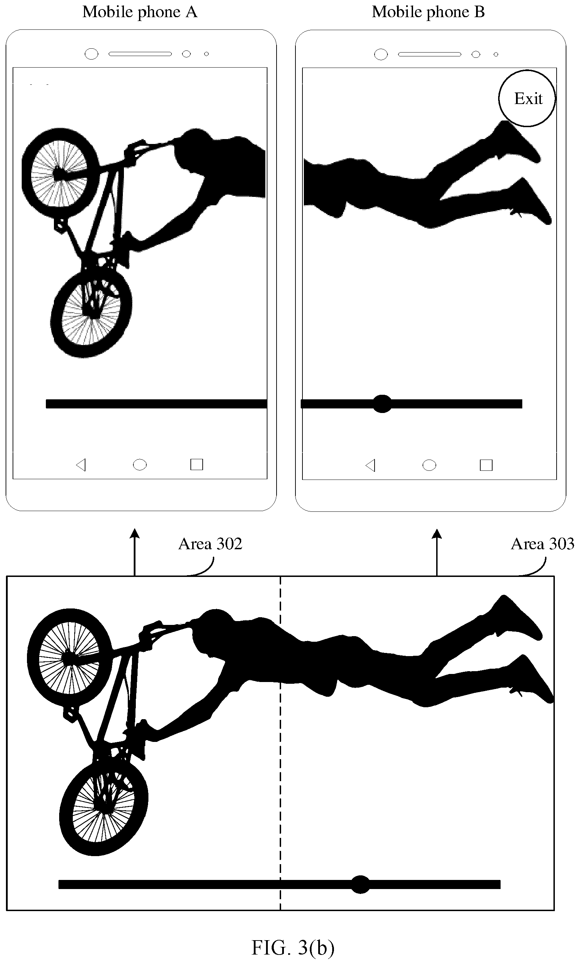

Refer to a GUI shown in FIG. 3(b). After receiving the indication information sent by the mobile phone B, the mobile phone A may double a size of a canvas displayed in the current playback interface. The mobile phone A may crop a doubled canvas, to obtain two areas (an area 302 and an area 303) of a same size. The mobile phone A may display a canvas shown in the area 302 on a display, and project a canvas of the area 303 to the mobile phone B, so that the mobile phone B displays the canvas of the area 303 on a display.

In an embodiment, a display interface of the mobile phone B further includes an exit control. When the mobile phone B detects that the user taps the exit control, the mobile phone B may send indication information to the mobile phone A, where the indication information indicates the mobile phone A to exit the full-screen mode.

In an embodiment, the exit control may be drawn by the mobile phone B. After the mobile phone A and the mobile phone B enter the full-screen mode, the exit control may be drawn and displayed on the display of the mobile phone B.

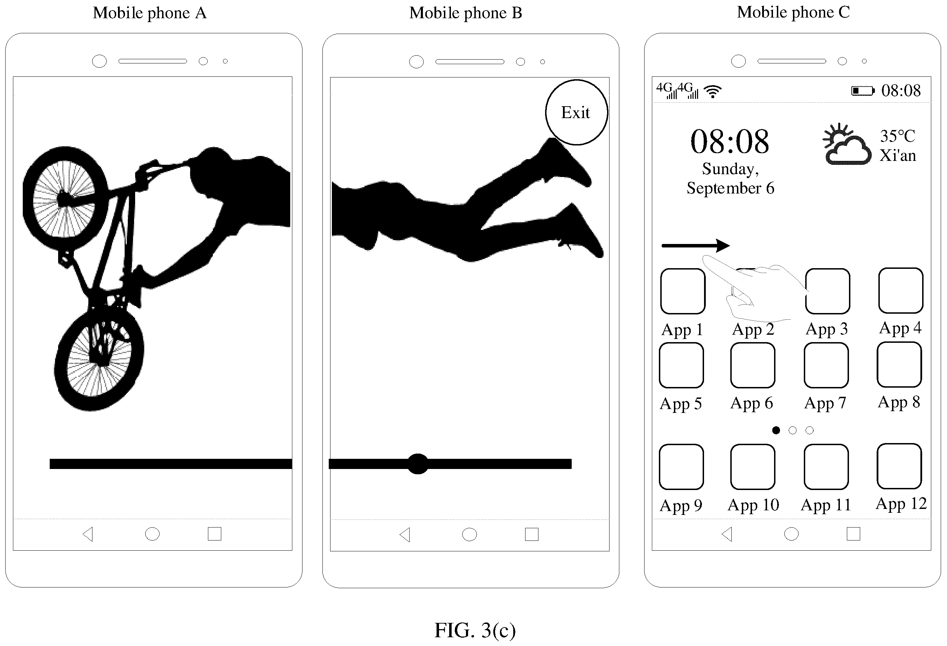

Refer to a GUI shown in FIG. 3(c). When a mobile phone C approaches the mobile phone A, the mobile phone A, the mobile phone B, and the mobile phone C may perform AP networking or P2P networking. When the mobile phone C detects an operation of sliding to the right by the user, the mobile phone C may send indication information to the mobile phone A, where the indication information indicates that the mobile phone C expects to enter the full-screen mode.

In an embodiment, when the mobile phone C approaches the mobile phone B, the mobile phone B may determine, in an RSSI ranging manner, that a distance between the mobile phone C and the mobile phone B is less than or equal to a preset distance. The mobile phone A, the mobile phone B, and the mobile phone C may perform AP networking, or the mobile phone A, the mobile phone B, and the mobile phone C may perform P2P networking.

In an embodiment, when the mobile phone C approaches the mobile phone B, the mobile phone A and the mobile phone B may respectively determine a distance between the mobile phone A and the mobile phone C and a distance between the mobile phone B and the mobile phone C in an RSSI ranging manner. When the distance between the mobile phone A and the mobile phone C is less than or equal to a first preset distance, and the distance between the mobile phone B and the mobile phone C is less than or equal to a second preset distance, the mobile phone A, the mobile phone B, and the mobile phone C may perform AP networking, or the mobile phone A, the mobile phone B, and the mobile phone C may perform P2P networking.

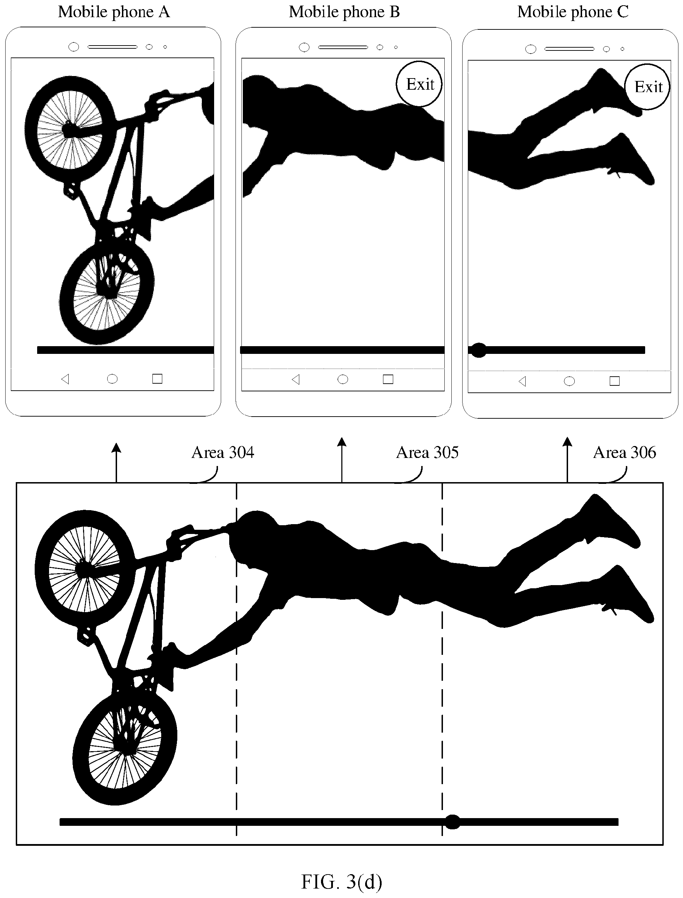

Refer to a GUI shown in FIG. 3(d). After receiving the indication information sent by the mobile phone C, the mobile phone A may triple the size of the canvas displayed in the current playback interface. The mobile phone A may crop a tripled canvas, to obtain three areas (an area 304, an area 305, and an area 306) of a same size. The mobile phone A may display a canvas shown in the area 304 on the display, project a canvas shown in the area 305 to the mobile phone B, and project a canvas shown in the area 306 to the mobile phone C, so that the mobile phone B displays the canvas shown in the area 305 on the display, and the mobile phone C displays the canvas shown in the area 306 on a display.

In an embodiment, a display interface of the mobile phone C further includes an exit control. When the mobile phone C detects that the user taps the exit control, the mobile phone C may send indication information to the mobile phone A, where the indication information indicates the mobile phone A to exit the full-screen mode.

In an embodiment, the exit control may be drawn by the mobile phone C. After the mobile phone A, the mobile phone B, and the mobile phone C enter the full-screen mode, the mobile phone C may draw the exit control and display the exit control on the display of the mobile phone C. In this case, both the mobile phone B and the mobile phone C may include an exit control.

In this embodiment of this application, in the near field wireless connection manner, a plurality of devices may be spliced into a larger screen, without a need to add an additional hardware device. A source (source) device may dynamically modify a size of a display canvas, and distribute a modified display canvas to each sink (sink) device for display after cropping. This helps improve user experience.

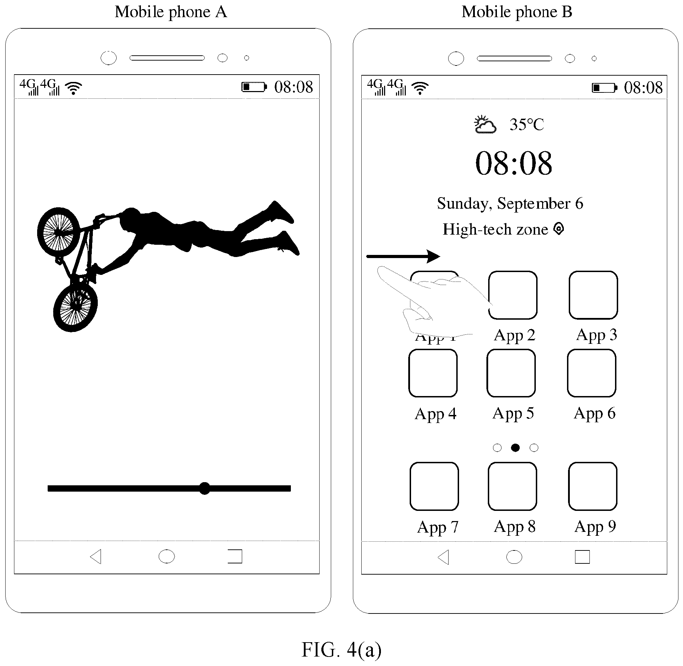

With reference to FIG. 3(a) to FIG. 3(d), the foregoing shows that after expanding the canvas, the mobile phone A evenly divides the canvas size based on a quantity of a plurality of devices, to completely display the canvas on the devices. This manner may also be considered as a segmentation manner. Considering that there is a spacing between the mobile phone A and the mobile phone B or between the mobile phone B and the mobile phone C, after expanding the canvas, the mobile phone A considers a seam between devices as a mask element, and the canvas is partially blocked by the mask element. The mobile phone A may alternatively process the expanded canvas in a mask manner. With reference to GUIs shown in FIG. 4(a) to FIG. 4(d), the following describes a process of performing processing in a mask manner.

Refer to a GUI shown in FIG. 4(a). A mobile phone A displays a playback interface of a video application, and a video playback image is displayed in the playback interface. In this case, a mobile phone B displays a desktop of the mobile phone B.

After the mobile phone B approaches the mobile phone A, the mobile phone A and the mobile phone B may be networked in a near field wireless connection manner. When the mobile phone B detects an operation of sliding to the right on the desktop by a user, the mobile phone B sends indication information to the mobile phone A, where the indication information indicates that the mobile phone B expects to enter a full-screen mode.

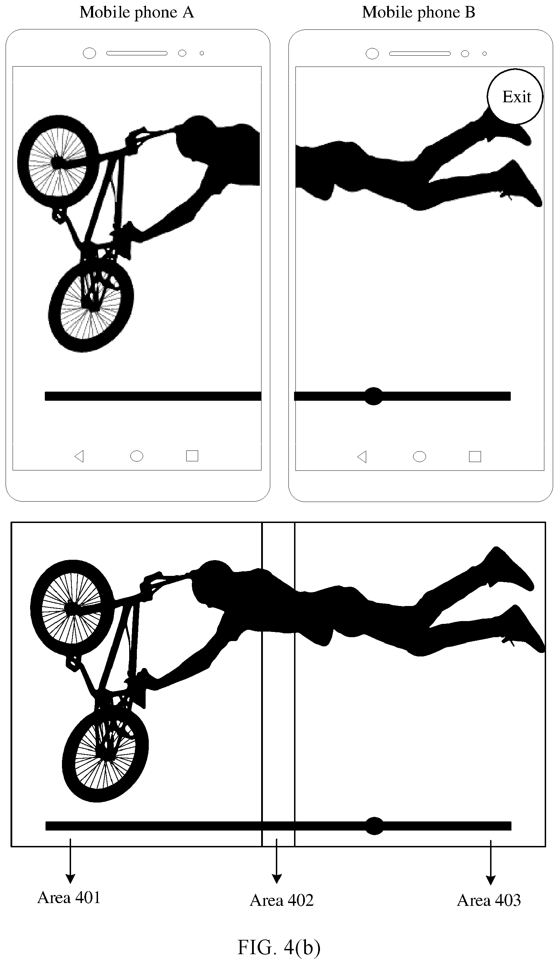

Refer to a GUI shown in FIG. 4(b). After receiving the indication information sent by the mobile phone B, the mobile phone A may double a size of a canvas displayed in the current playback interface. The mobile phone A may crop a doubled canvas based on a distance between the mobile phone A and the mobile phone B, to obtain canvases shown in an area 401, an area 402, and an area 403. The mobile phone A may display a canvas shown in the area 401 on a display, and project a canvas shown in the area 403 to the mobile phone B, so that the mobile phone B displays the canvas shown in the area 403 on a display.

A pixel value of the area 402 is determined based on the distance between the mobile phone A and the mobile phone B. In a possible implementation, a physical size of a screen of the mobile phone A is X (6 cm), a screen resolution is M (1080)×N (2340). It is assumed that a physical size of a width of the area 402 is Y (for example, 0.5 cm). In this case, a pixel value Z for cropping is equal to $(Y/X)×M=90$, in other words, 90 pixels need to be removed. In this embodiment of this application, the physical size of the width of the area 402 may be obtained by the mobile phone A by measuring the distance between the mobile phone A and the mobile phone B based on an RSSI. Alternatively, the physical size of the width of the area 402 may be a sum of physical frame sizes of the mobile phone A and the mobile phone B when the mobile phone A and the mobile phone B are completely attached.

In an embodiment, if the distance between the mobile phone A and the mobile phone B is greater than a preset distance (for example, 3 cm), the mobile phone A may crop the expanded canvas in a segmentation manner. Alternatively, if the distance between the mobile phone A and the mobile phone B is less than or equal to the preset distance, the mobile phone A may crop the expanded canvas in the mask manner.

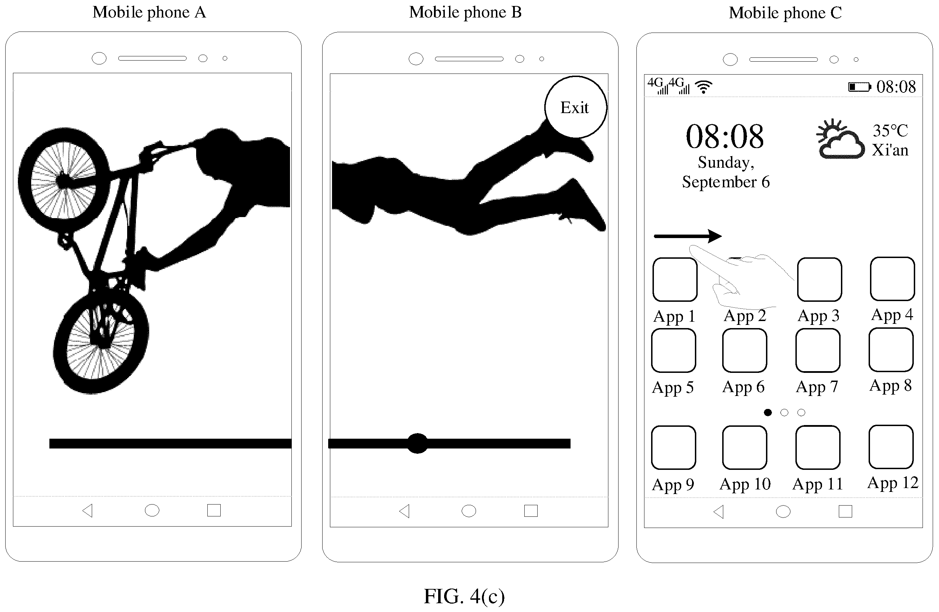

Refer to a GUI shown in FIG. 4(c). When a mobile phone C approaches the mobile phone B, the mobile phone A, the mobile phone B, and the mobile phone C may perform AP networking or P2P networking. When the mobile phone C detects an operation of sliding to the right by the user, the mobile phone C may send indication information to the mobile phone A, where the indication information indicates that the mobile phone C expects to enter the full-screen mode.

In an embodiment, the mobile phone C may further indicate a distance between the mobile phone B and the mobile phone C to the mobile phone A.

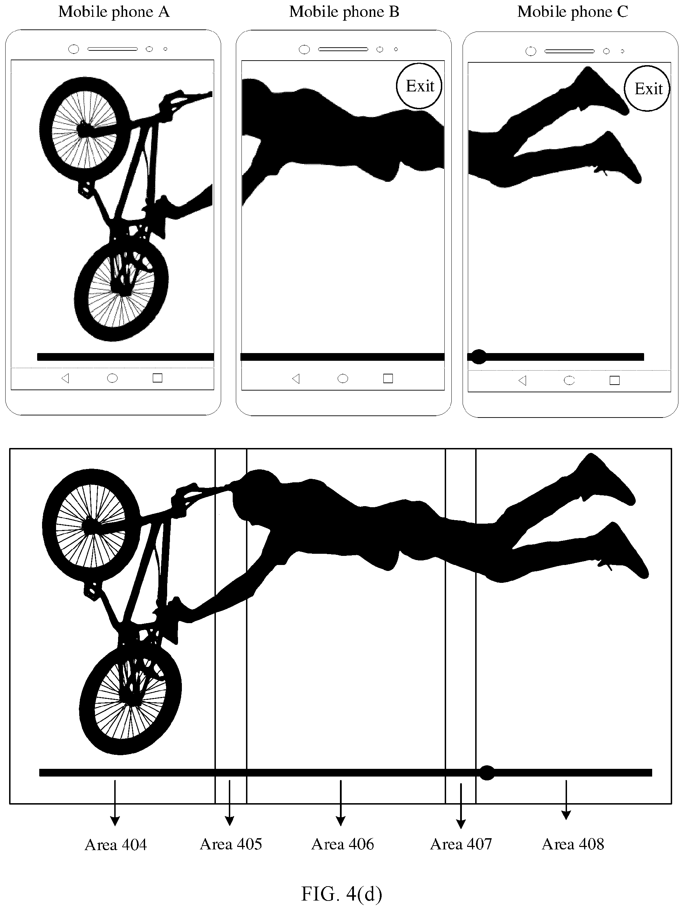

Refer to a GUI shown in FIG. 4(d). After receiving the indication information sent by the mobile phone C, the mobile phone A may triple the size of the canvas displayed in the current playback interface. The mobile phone A may crop a tripled canvas based on the distance between the mobile phone A and the mobile phone B and the distance between the mobile phone B and the mobile phone C. As shown in FIG. 4(d), the mobile phone A may crop the tripled canvas, to obtain an area 404, an area 405, an area 406, an area 407, and an area 408. Pixel values of the area 405 and the area 407 may be determined based on the distance between the mobile phone A and the mobile phone B and the distance between the mobile phone B and the mobile phone C. For a specific determining process, refer to the descriptions in the foregoing embodiment. For brevity, details are not described herein again. The mobile phone A may display a canvas shown in the area 404 on the display, project a canvas shown in the area 406 to the mobile phone B, and project a canvas shown in the area 408 to the mobile phone C, so that the mobile phone B displays the canvas shown in the area 406 on the display, and the mobile phone C displays the canvas shown in the area 408 on a display.

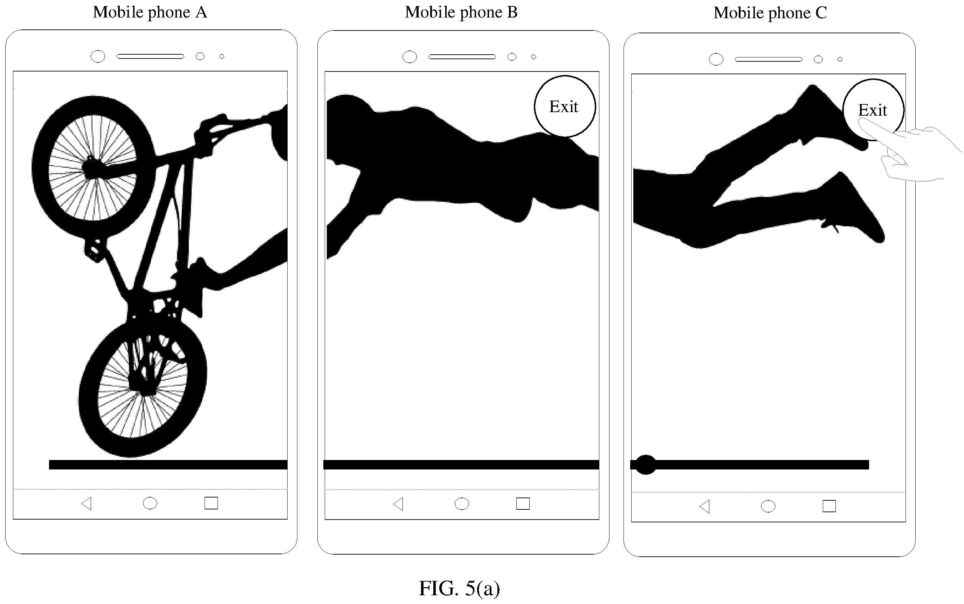

The foregoing respectively describes, with reference to FIG. 3(a) to FIG. 3(d) and FIG. 4(a) to FIG. 4(d), a process of cropping a canvas in the segmentation manner and a process of cropping a canvas in the mask manner. With reference to FIG. 5(a) to FIG. 5(c), the following describes a process of exiting a full-screen mode between a plurality of devices. FIG. 5(a) to FIG. 5(c) show another group of GUIs according to an embodiment of this application.

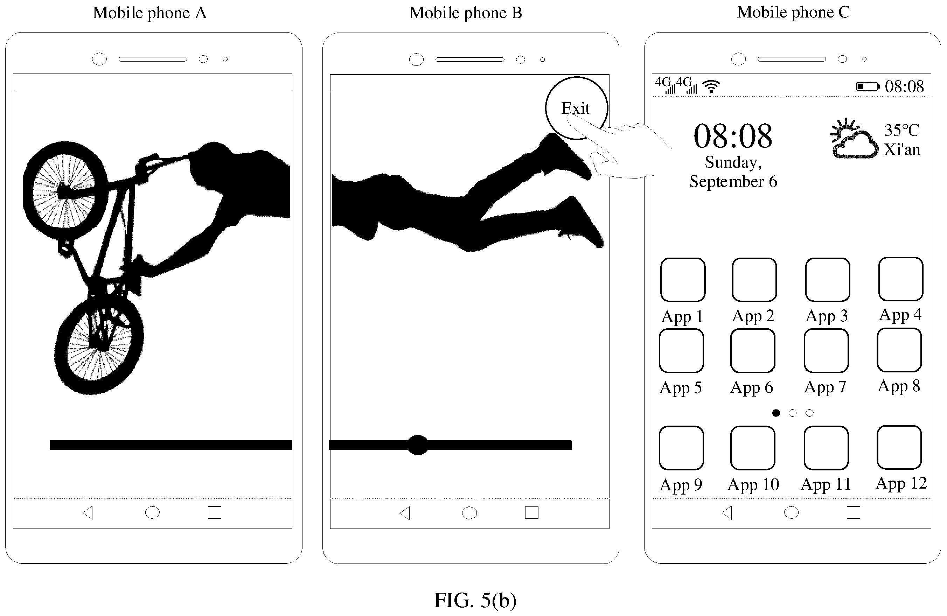

Refer to a GUI shown in FIG. 5(a). A mobile phone A, a mobile phone B, and a mobile phone C are currently in the full-screen mode. When the mobile phone C detects that a user taps an exit control, a GUI shown in FIG. 5(b) is displayed.

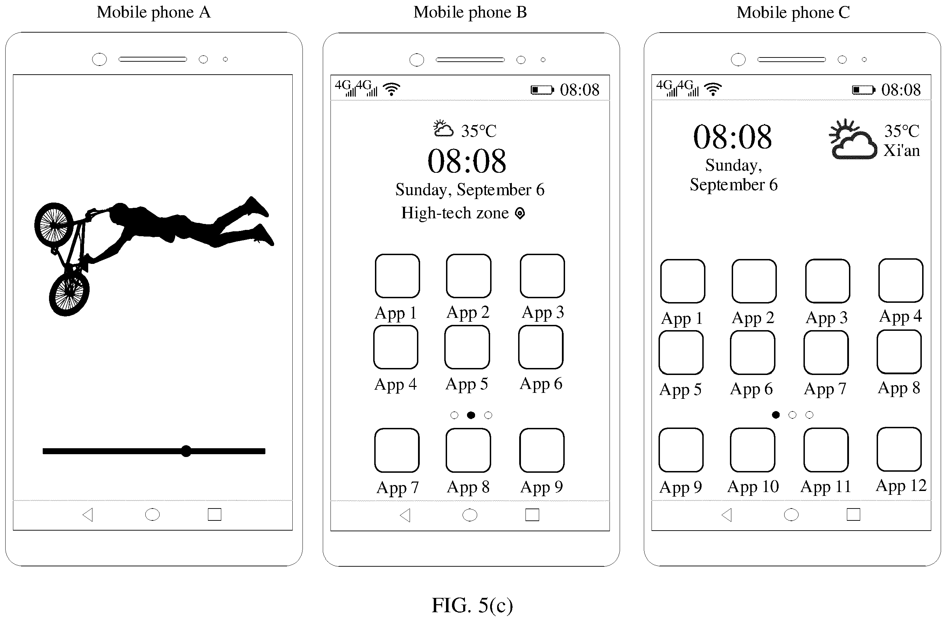

Refer to the GUI shown in FIG. 5(b). In response to detecting that the user taps the exit control, the mobile phone C may send indication information to the mobile phone A, where the indication information indicates that the mobile phone C exits the full-screen mode. After receiving the indication information, the mobile phone A may double a size of a canvas, instead of originally triple the size of the canvas. The mobile phone A may crop a doubled canvas, to obtain two areas (for example, the area 302 and the area 303 that are shown in FIG. 3(b)) of a same size. The mobile phone A may display a canvas shown in the area 302 on a display, and project a canvas shown in the area 303 to the mobile phone B, so that the mobile phone B displays the canvas of the area 303 on a display. The mobile phone C exits the full-screen mode, and displays a desktop of the mobile phone C. When the mobile phone B detects an operation of tapping an exit control by the user, a GUI shown in FIG. 5(c) may be displayed.

Refer to the GUI shown in FIG. 5(c). In response to detecting that the user taps the exit control, the mobile phone B may send indication information to the mobile phone A, where the indication information indicates that the mobile phone B exits the full-screen mode. After receiving the indication information, the mobile phone A may not expand the size of the canvas, instead of originally double the size of the canvas. In this way, the mobile phone A may display a playback interface of a video, and the mobile phone B exits the full-screen mode and displays a desktop of the mobile phone B.

It should be further understood that, in the GUI shown in FIG. 5(a), the mobile phone A processes a tripled canvas in a segmentation manner. In this case, after receiving an indication indicating that the mobile phone C exits the full-screen mode, the mobile phone A may continue to process the doubled canvas in the segmentation manner. In an embodiment, if the mobile phone A processes the tripled canvas in a mask manner, after receiving an indication indicating that the mobile phone C exits the full-screen mode, the mobile phone A may continue to process the doubled canvas in the mask manner.

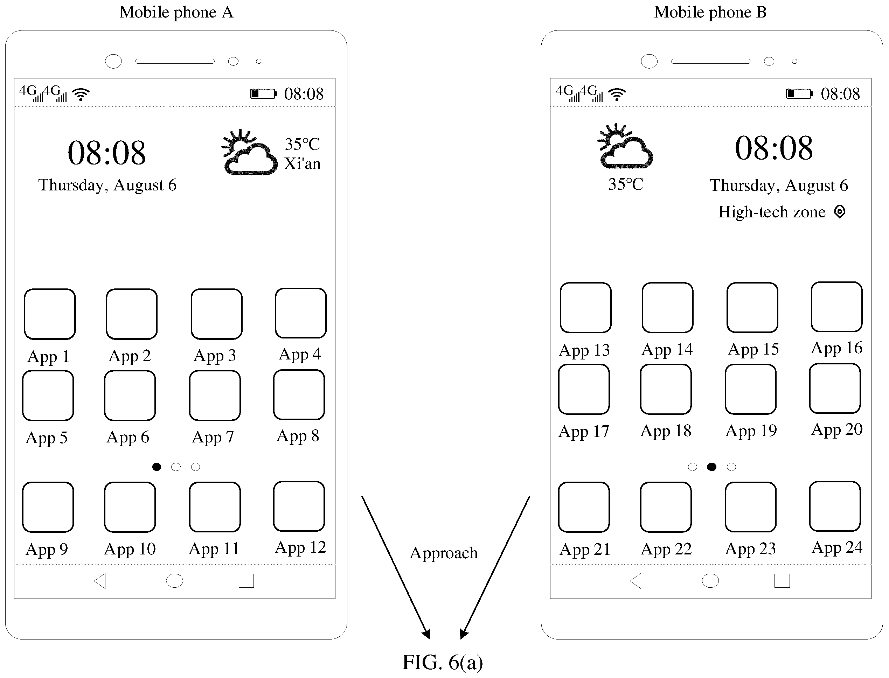

FIG. 6(a) to FIG. 6(e) show another group of GUIs according to an embodiment of this application.

Refer to a GUI shown in FIG. 6(a). A distance between a mobile phone A and a mobile phone B is greater than a preset distance, the mobile phone A displays a desktop of the mobile phone A, and the mobile phone B displays a desktop of the mobile phone B.

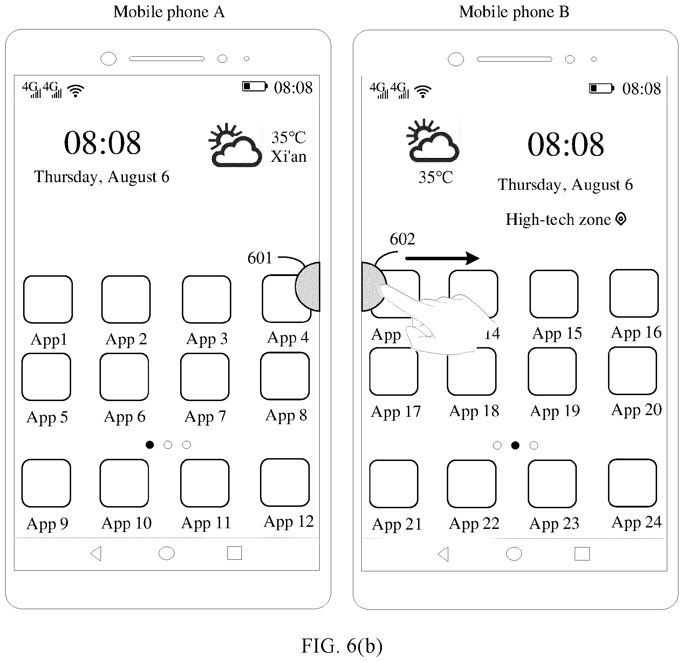

When the mobile phone A and the mobile phone B approach each other, and the distance between the mobile phone A and the mobile phone B is less than or equal to the preset distance, the mobile phone A and the mobile phone B display a GUI shown in FIG. 6(b).

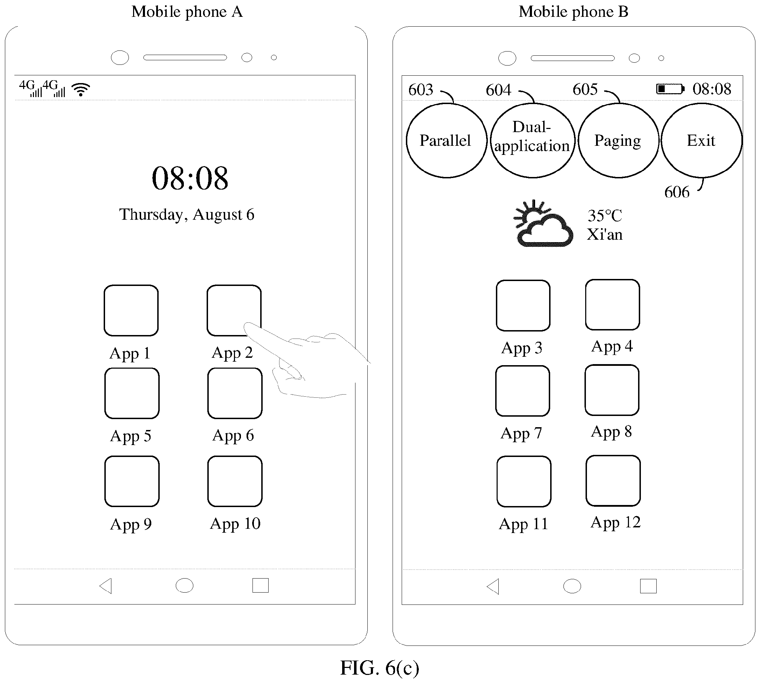

Refer to the GUI shown in FIG. 6(b). When the distance between the mobile phone A and the mobile phone B is less than or equal to the preset distance, a control 601 is displayed on the desktop of the mobile phone A, and a control 602 is displayed on the desktop of the mobile phone B. When the mobile phone B detects an operation of dragging the control 602 to the right by a user, a GUI shown in FIG. 6(c) is displayed.

Refer to the GUI shown in FIG. 6(c). In response to detecting the operation of dragging the control 602 to the right by the user, the mobile phone B sends indication information to the mobile phone A, where the indication information indicates that the mobile phone B expects to enter a full-screen mode. After receiving the indication information, the mobile phone A may double a canvas in a current interface (the desktop of the mobile phone A). The mobile phone A may crop a doubled canvas, to obtain two areas (a left area and a right area) of a same size. The mobile phone A may display a canvas (including a network standard, signal strength, and a Wi-Fi connection status in a status bar, time information (08:08) and date information (Thursday, August 6), and icons of App 1, App 2, App 5, App 6, App 9, and App 10) shown in the left area on a display, and project a canvas (including battery level information and time information (08:08) in a status bar, weather information (35°C), location information (Xi'an), and icons of App 3, App 4, App 7, App 8, App 11, and App 12) shown in the right area to the mobile phone B, so that the mobile phone B displays the canvas of the right area on a display. In addition, the mobile phone B may further include an icon 603 of a parallel mode, an icon 604 of a dual-application mode, an icon 605 of a paging mode, and an exit control 606.

In an embodiment, the icon 603 of the parallel mode, the icon 604 of the dual-application mode, the icon 605 of the paging mode, and the exit control 606 may be drawn by the mobile phone B. After receiving projection content of the mobile phone A, the mobile phone B may add the icons and the control to the projection content.

In an embodiment, the icon 603 of the parallel mode, the icon 604 of the dual-application mode, the icon 605 of the paging mode, and the exit control 606 may alternatively be drawn by the mobile phone A and displayed on the mobile phone A.

In an embodiment, the icon 603 of the parallel mode, the icon 604 of the dual-application mode, and the icon 605 of the paging mode may be drawn by the mobile phone A and displayed on the mobile phone A, and the exit control 606 may be drawn by the mobile phone B and displayed on the mobile phone B.

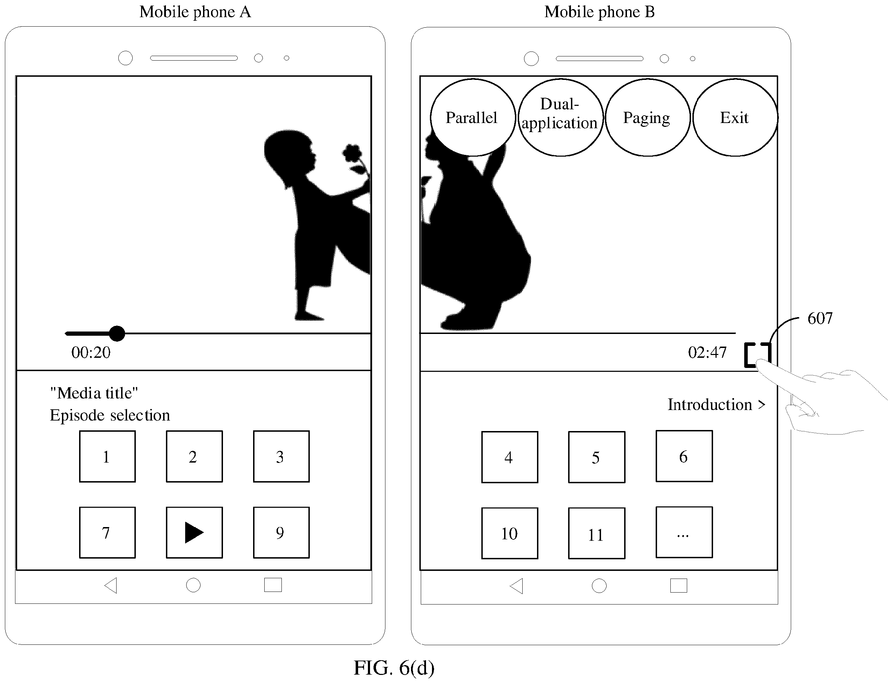

When the mobile phone A detects an operation of tapping an icon of App 2 by the user, a GUI shown in FIG. 6(d) is displayed. In response to detecting that the user taps the icon of App 2, the mobile phone A starts App 2, doubles a canvas displayed by App 2, and processes a doubled canvas. For display manners of the mobile phone A and the mobile phone B, refer to the descriptions in the foregoing embodiment. For brevity, details are not described herein again.

In this embodiment of this application, App 2 may be a video App.

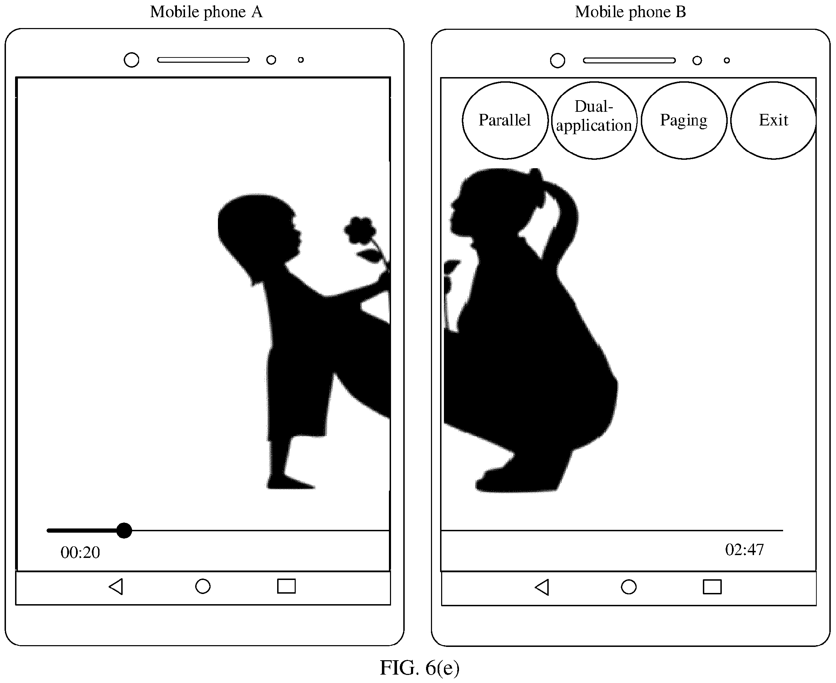

As shown in a GUI shown in FIG. 6(e), when the mobile phone B detects an operation of tapping a control 607 by the user, the mobile phone B may send a touch event and coordinate information to the mobile phone A. The touch event indicates that the mobile phone B detects a tapping operation of the user, and the coordinate information indicates coordinates when the mobile phone B detects the tapping operation of the user. The mobile phone A may determine, based on the touch event and the coordinate information, that the user taps a full-screen viewing control on the mobile phone B, to display a video window in full screen on the mobile phone A and the mobile phone B. It should be understood that, for a process in which the mobile phone A and the mobile phone B display the video window in full screen, refer to the descriptions in the foregoing embodiment. For brevity, details are not described herein again.

It should be understood that, the mobile phone A shown in FIG. 6(a) to FIG. 6(e) may crop the doubled canvas in a segmentation manner, or the mobile phone A may crop the doubled canvas in a mask manner. For a specific implementation process, refer to the descriptions in the foregoing embodiment. For brevity, details are not described herein again.

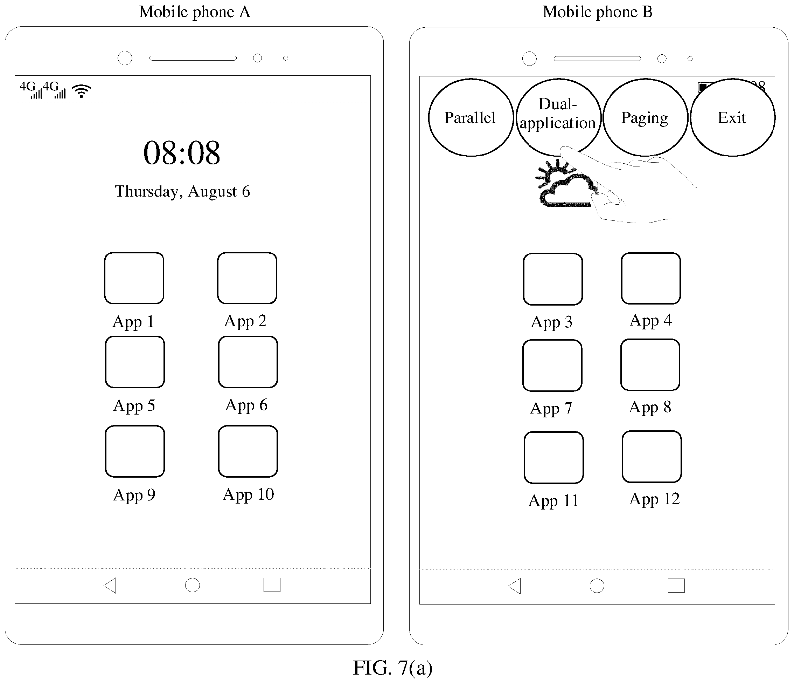

FIG. 7(a) to FIG. 7(d) show another group of GUIs according to an embodiment of this application. The GUIs show a process of switching from a full-screen mode to a dual-application mode.

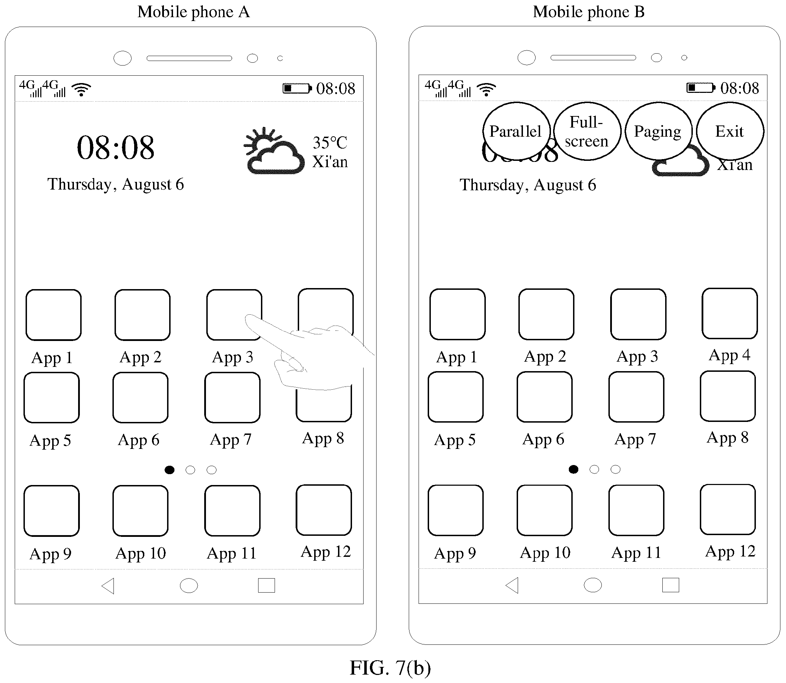

Refer to a GUI shown in FIG. 7(a). A mobile phone A and a mobile phone B are in the full-screen mode. When the mobile phone B detects an operation of tapping the dual-application mode by a user, a GUI shown in FIG. 7(b) is displayed.

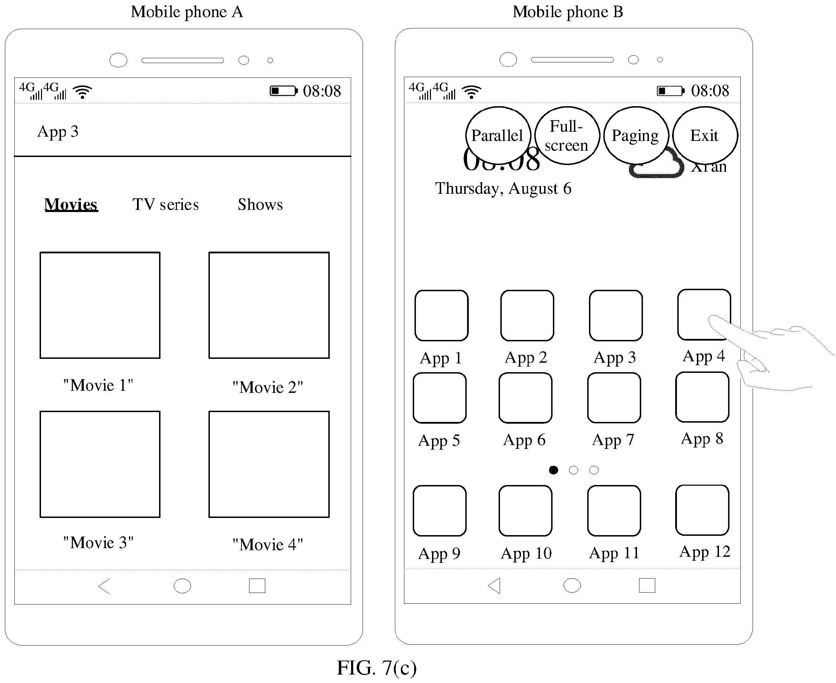

Refer to the GUI shown in FIG. 7(b). In response to detecting the operation of tapping an icon of the dual-application mode by the user, the mobile phone B may send indication information to the mobile phone A, where the indication information indicates that the mobile phone B detects that the user taps the icon of the dual-application mode. In response to receiving the indication information sent by the mobile phone A, the mobile phone A displays a desktop of the mobile phone A, and sends a canvas corresponding to the desktop of the mobile phone A to the mobile phone B, so that the mobile phone B also displays the desktop of the mobile phone A. When the mobile phone A detects an operation of tapping an icon of App 3 by the user, a GUI shown in FIG. 7(c) is displayed.

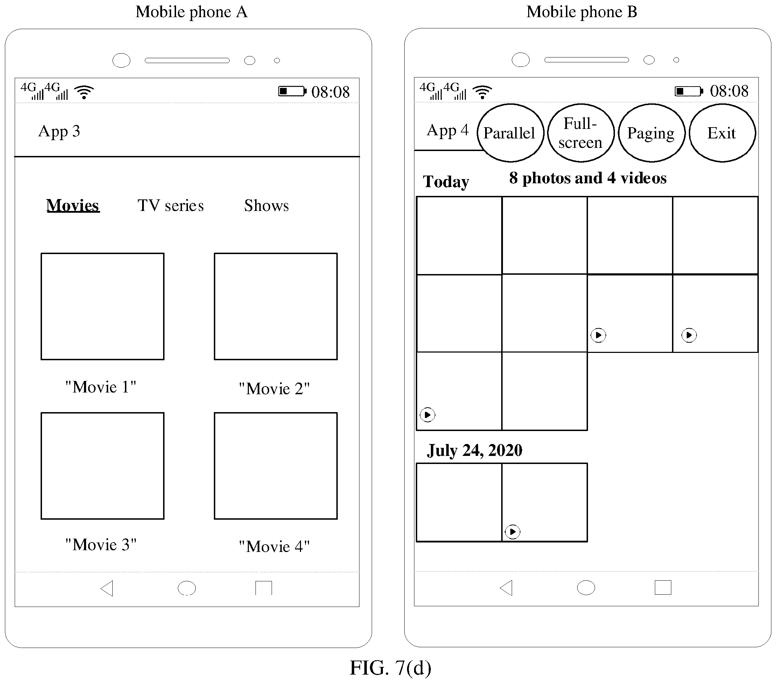

Refer to the GUI shown in FIG. 7(c). In response to detecting the operation of tapping the icon of App 3 by the user, the mobile phone A may display a display interface of App 3. In this case, the mobile phone B displays the desktop of the mobile phone A. When the mobile phone B detects an operation of tapping an icon of App 4 by the user, a GUI shown in FIG. 7(d) is displayed.

In this embodiment of this application, App 3 may be a video App, and App 4 may be a photo App.

Refer to the GUI shown in FIG. 7(d). In response to detecting the operation of tapping the icon of App 4 by the user, the mobile phone B may send a touch event and coordinate information to the mobile phone A. The touch event indicates that the mobile phone B detects a tap operation of the user, and the coordinate information indicates coordinates when the mobile phone B detects the tapping operation of the user. The mobile phone A may determine, based on the coordinate information, that the user taps the icon of App 4 on the mobile phone B. In this way, the mobile phone A may start App 4 in the background, and project a display interface of App 4 to the mobile phone B, so that the mobile phone B displays the interface of App 4.

In this embodiment of this application, when the mobile phone A and the mobile phone B are in the dual-application mode, the user may separately start different applications of the mobile phone A on the mobile phone A and the mobile phone B. This helps improve user experience. For example, the user may use the mobile phone A and the mobile phone B to respectively open a shopping App 1 and a shopping App 2, to compare prices of commodities. Alternatively, the user may use a video App on the mobile phone B to watch a video while using a social App on the mobile phone A to chat.

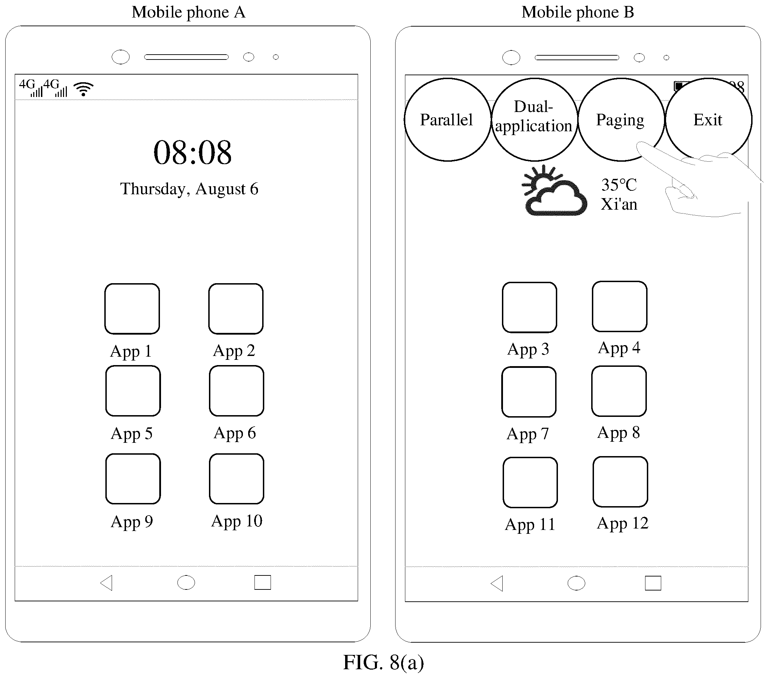

FIG. 8(a) to FIG. 8(c) show another group of GUIs according to an embodiment of this application. The GUIs show a process of switching from a full-screen mode to a paging mode.

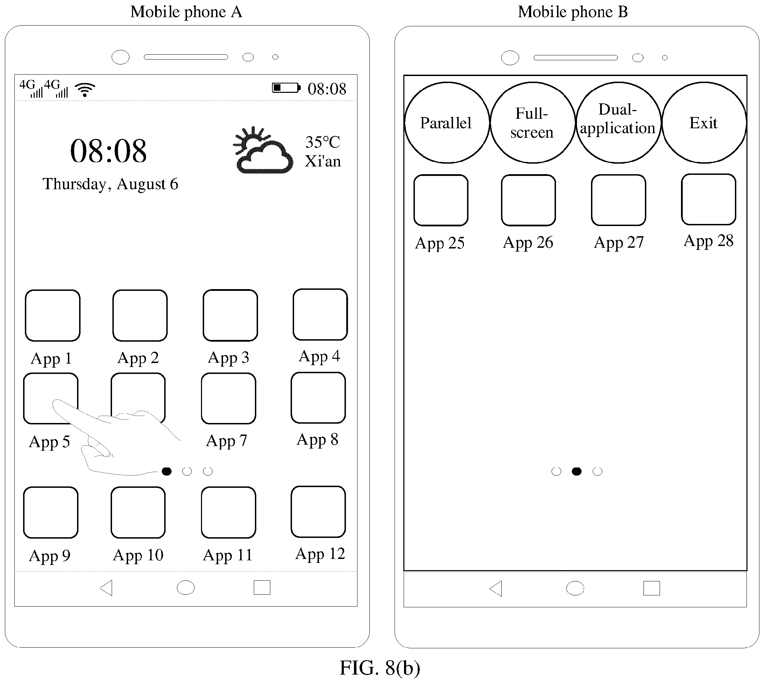

Refer to a GUI shown in FIG. 8(a). A mobile phone A and a mobile phone B are in the full-screen mode. When the mobile phone B detects an operation of tapping the paging mode by a user, a GUI shown in FIG. 8(b) is displayed.

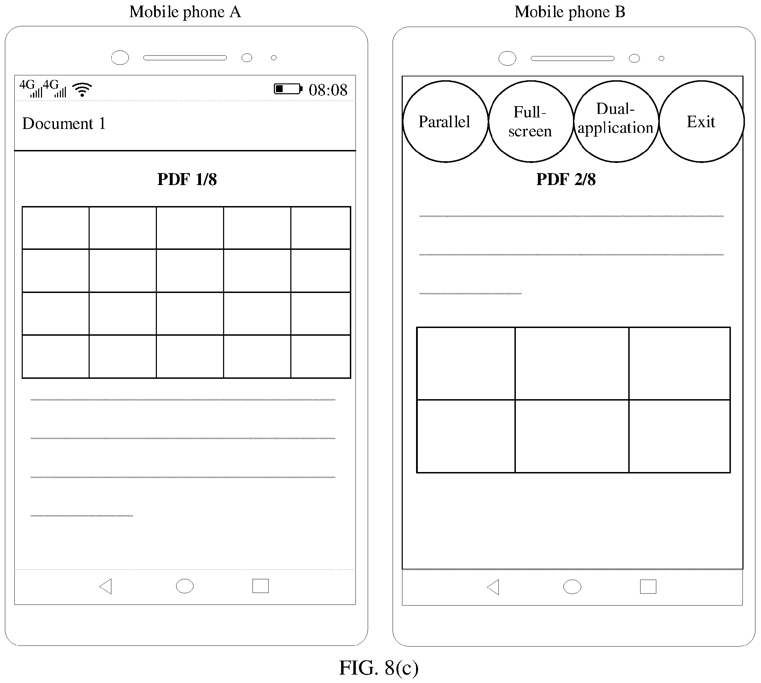

Refer to the GUI shown in FIG. 8(b). In response to detecting the operation of tapping an icon of the paging mode by the user, the mobile phone B may send indication information to the mobile phone A, where the indication information indicates that the user B detects that the user taps the icon of the paging mode. The mobile phone A may switch from the full-screen mode to the paging mode based on the indication information. The mobile phone A displays a desktop of the mobile phone A. The desktop of the mobile phone A includes three desktop pages, and the mobile phone A currently displays a first desktop page. The mobile phone A projects a canvas corresponding to a second desktop page of the mobile phone A to the mobile phone B, so that the mobile phone B displays the second desktop page of the mobile phone A. When the mobile phone A detects an operation of tapping an icon of App 5 by the user, a GUI shown in FIG. 8(c) is displayed.

Refer to the GUI shown in FIG. 8(c). In response to detecting the operation of tapping the icon of App 5 by the user, the mobile phone A may display a display interface of App 5. The display interface is a display interface of a document 1, and the document 1 includes eight pages. The mobile phone A may display content on a first page of the document 1, and the mobile phone A may project content on a second page of the document 1 to the mobile phone B, so that the mobile phone B displays the content on the second page of the document 1.

In an embodiment, when the mobile phone A detects a sliding operation (for example, sliding upwards) of the user on a display, the mobile phone A may display content on a third page of the document 1, and the mobile phone A projects content on a fourth page of the document 1 to the mobile phone B, so that the mobile phone B displays the content on the fourth page of the document 1.

In this embodiment of this application, when the mobile phone A and the mobile phone B are in the paging mode, this helps improve efficiency of browsing interface content by the user, and therefore helps improve user experience.

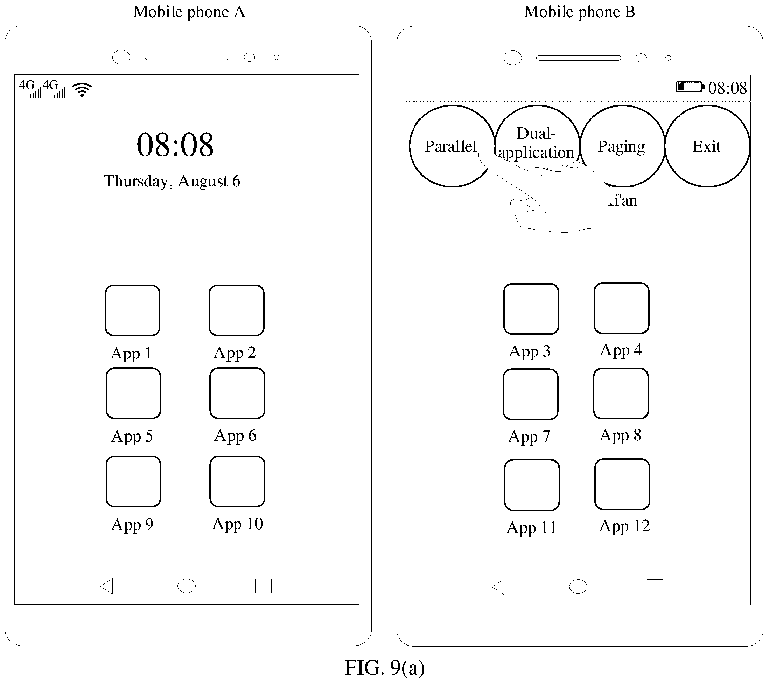

FIG. 9(a) to FIG. 9(f) show another group of GUIs according to an embodiment of this application. The GUIs show a process of switching from a full-screen mode to a parallel mode.

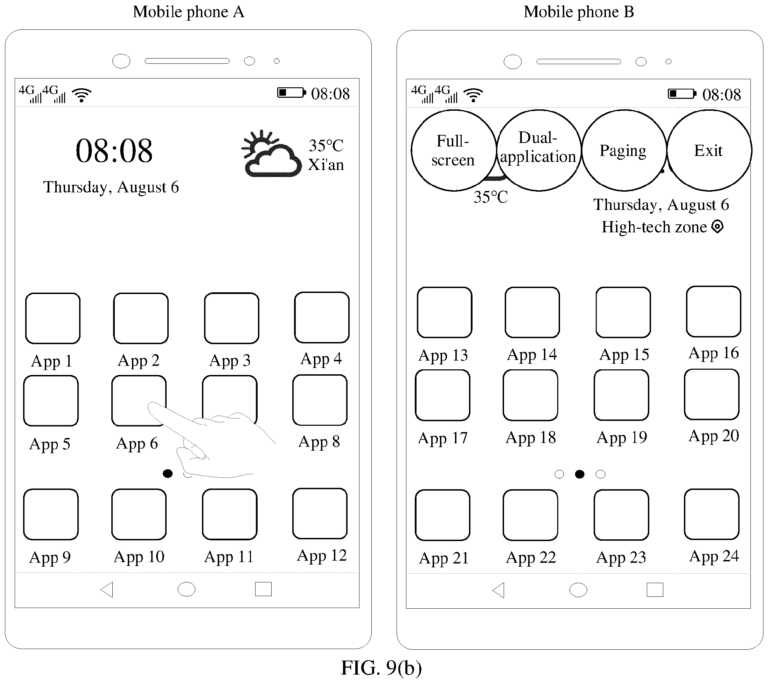

Refer to a GUI shown in FIG. 9(a). A mobile phone A and a mobile phone B are in the full-screen mode. When the mobile phone B detects an operation of tapping the parallel mode by a user, a GUI shown in FIG. 9(b) is displayed.

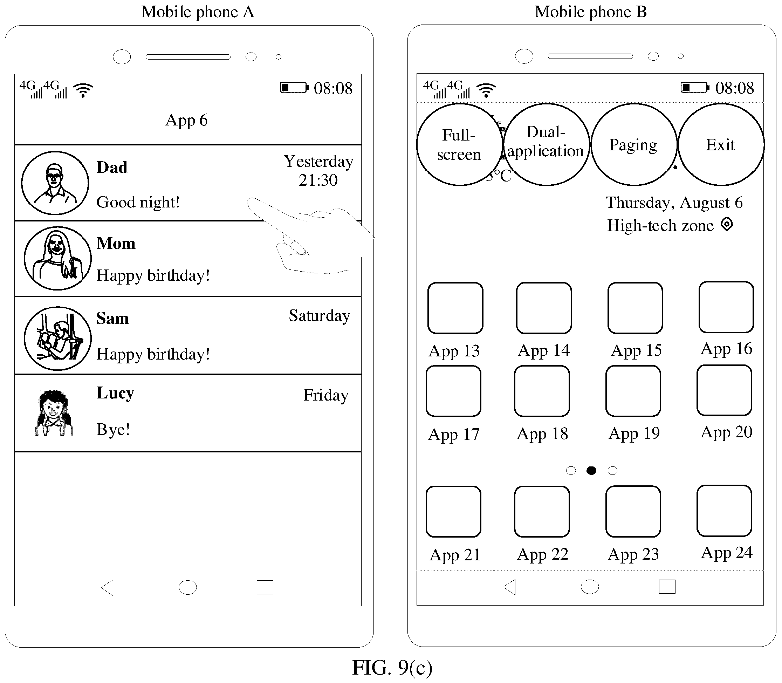

Refer to the GUI shown in FIG. 9(b). In response to detecting the operation of tapping an icon of the parallel mode by the user, the mobile phone B may send indication information to the mobile phone A, where the indication information indicates that the mobile phone B detects that the user taps the icon of the parallel mode. The mobile phone A may determine, based on the indication information, to switch from the full-screen mode to the parallel mode. The mobile phone A displays a desktop of the mobile phone A, and the mobile phone B displays a desktop of the mobile phone B. When the mobile phone A detects an operation of tapping an icon of App 6 by the user, a GUI shown in FIG. 9(c) is displayed.

It should be understood that, as shown in FIG. 9(a), when the mobile phone A determines to switch from the full-screen mode to the parallel mode, content displayed on the mobile phone B is not limited. The mobile phone B may display the desktop of the mobile phone B. Alternatively, when the mobile phone A and the mobile phone B enter the parallel mode, the mobile phone A may project a canvas corresponding to the desktop of the mobile phone A to the mobile phone B, so that the mobile phone B displays the desktop of the mobile phone A.

In an embodiment, the mobile phone A may display a first display interface of an application program, and the mobile phone B may display the desktop of the mobile phone B. When the mobile phone B detects an operation of sliding from left to right on a screen by the user, the mobile phone B may send indication information to the mobile phone A, where the indication information may indicate the mobile phone B and the mobile phone A to perform splicing display in the parallel mode. In response to receiving the indication information sent by the mobile phone B, the mobile phone A may continue to display the first display interface of the application program, and may not send any image information to the mobile phone B, so that the mobile phone B may continue to display the desktop of the mobile phone B. Alternatively, in response to receiving the indication information sent by the mobile phone B, the mobile phone A may continue to display the first display interface of the application program, and may send image information corresponding to the first display interface to the mobile phone B, so that the mobile phone B may display the first display interface. Alternatively, the first display interface includes a first interface element, and the first interface element is associated with another display interface of the application program. In response to receiving the indication information sent by the mobile phone B, the mobile phone Amay continue to display the first display interface of the application program, and may send, to the mobile phone B, image information corresponding to the second display interface. It should be understood that, when receiving the indication information, the mobile phone A may randomly select an interface element from the display interface, or the mobile phone A may select an interface element at a specific position (for example, an upper left corner) of the interface. After selecting the interface element, the mobile phone A may send a display interface associated with the interface element to the mobile phone B, so that the mobile phone B displays the display interface corresponding to the interface element.

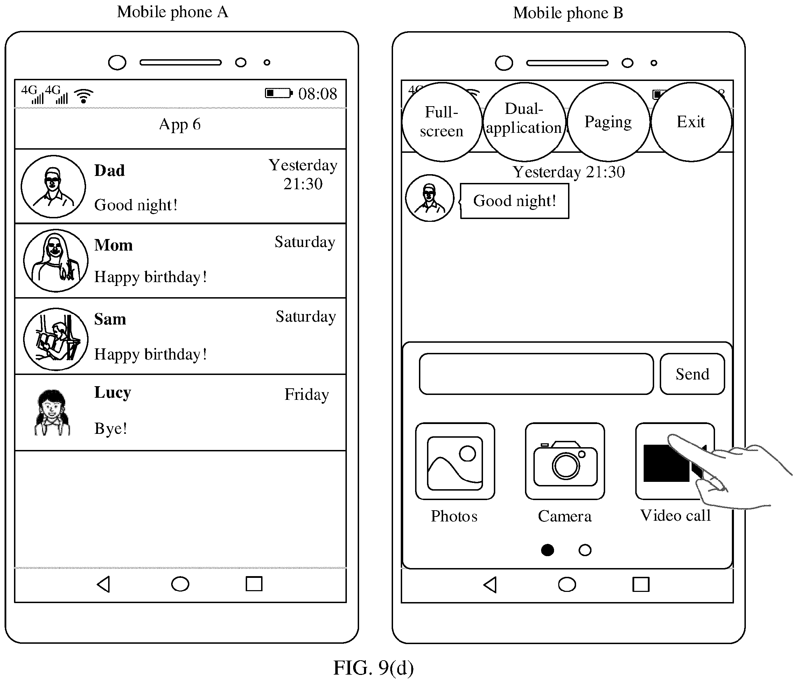

Refer to the GUI shown in FIG. 9(c). In response to detecting the operation of tapping the icon of App 6 by the user, the mobile phone A may start App 6. App 6 is a social application App, and the mobile phone A displays a chat list between the user and a plurality of contacts. In this case, the mobile phone B displays the desktop of the mobile phone B. When the mobile phone A detects that the user taps a chat record between the user and a contact Dad, a GUI shown in FIG. 9(d) is displayed.

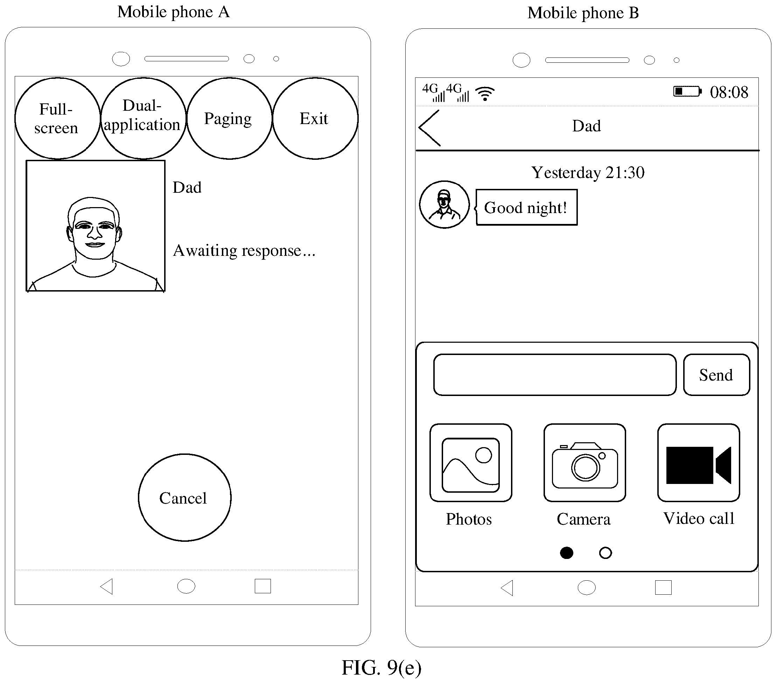

Refer to the GUI shown in FIG. 9(d). In response to detecting that the user taps the chat record between the user and the contact Dad, the mobile phone A displays the chat list between the user and the plurality of contacts, and may project a chat interface between the user and the contact Dad to the mobile phone B, so that the mobile phone B displays the chat interface between the user and the contact Dad. The chat interface includes a text input box, a send control, a control for sending a local photo, a control for sending a photo taken in real time, and a video call control. When the mobile phone B detects an operation of tapping the video call control by the user, a GUI shown in FIG. 9(e) is displayed.

Refer to the GUI shown in FIG. 9(e). In response to detecting the operation of tapping the video call control by the user, the mobile phone B sends a touch event and coordinate information to the mobile phone A. The touch event indicates that the mobile phone B detects a tapping operation of the user, and the coordinate information indicates coordinates when the mobile phone B detects the tapping operation of the user. The mobile phone A may determine, based on the coordinate information, that the user taps the video call control on the mobile phone B. The mobile phone A may display an interface for requesting the contact Dad to answer a video call.

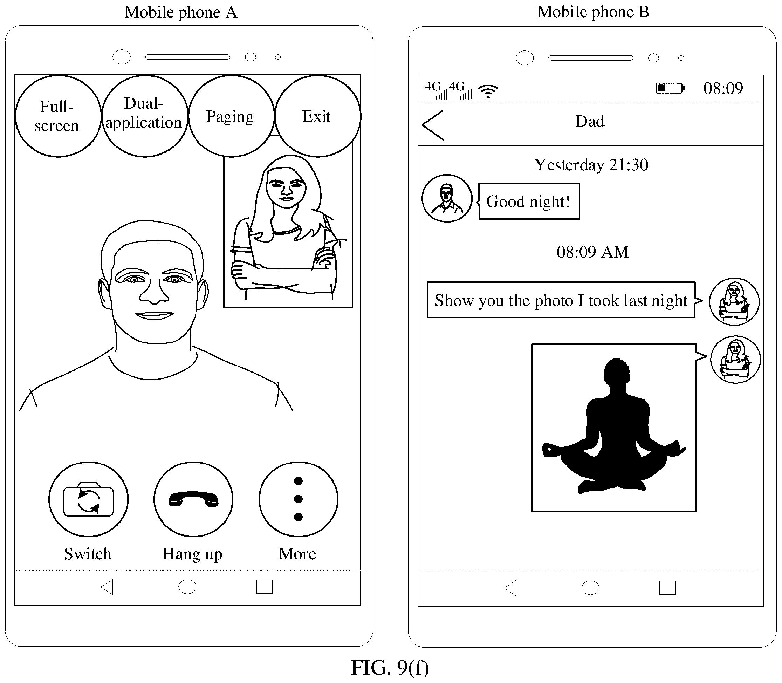

Refer to a GUI shown in FIG. 9(f). After the contact Dad accepts the video call request, the mobile phone A may display a video call interface between the user and the contact Dad. In this case, the mobile phone B may display the chat interface between the user and the contact Dad. When the mobile phone B detects text content entered by the user, the mobile phone B may send the text content to the mobile phone A, to complete a real reply to the message on the mobile phone A. After completing the real reply to the message, the mobile phone A may project an updated chat interface between the user and the contact Dad to the mobile phone B, so that the mobile phone B displays the updated chat interface between the user and the contact Dad.

When the mobile phone A displays the video chat interface between the user and the contact Dad, the user may chat with the contact Dad on the mobile phone B. The user may send text information (for example, "Show you the photo I took last night") and a picture to the contact Dad through the chat interface.

This embodiment of this application provides a manner of displaying upper-level and lower-level activity (activity) pages of an application program in parallel. The application program may be adjusted to display two activity pages simultaneously in this mode, to bring better user experience during multi-device splicing.

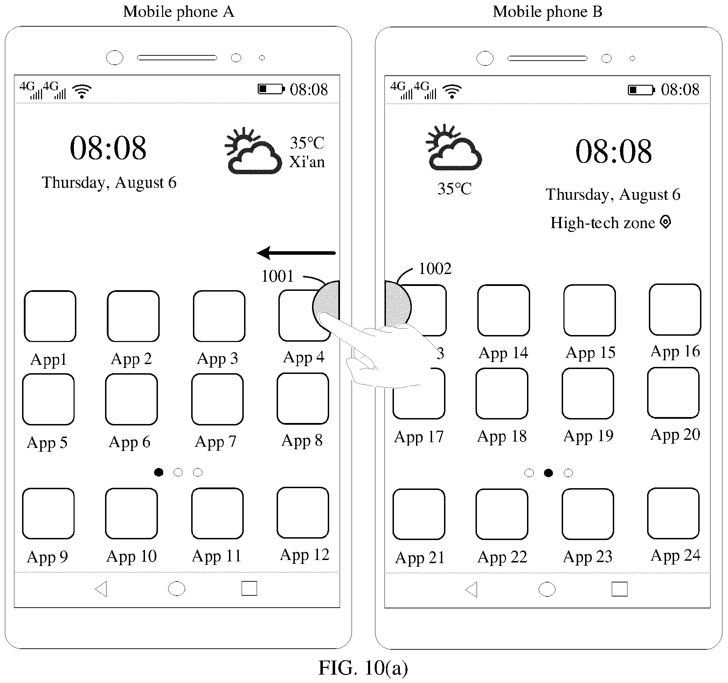

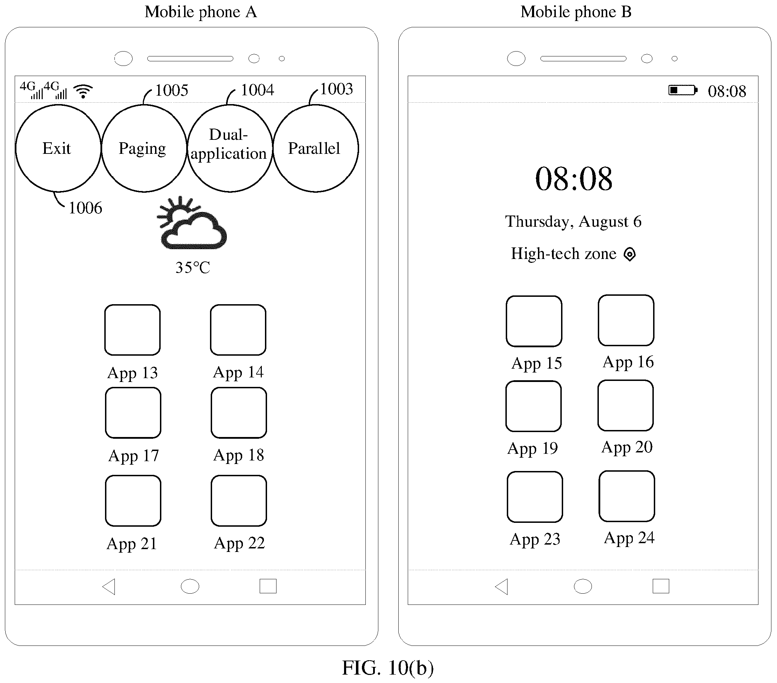

FIG. 10(a) and FIG. 10(b) show another group of GUIs according to an embodiment of this application.

Refer to a GUI shown in FIG. 10(a). When a distance between a mobile phone A and a mobile phone B is less than or equal to a preset distance, a control 1001 is displayed on a desktop of the mobile phone A, and a control 1002 is displayed on a desktop of the mobile phone B. When the mobile phone A detects an operation of dragging the control 1001 to the left by a user, a GUI shown in FIG. 10(b) is displayed.

Refer to the GUI shown in FIG. 10(b). In response to detecting the operation of dragging the control 1001 to the left by the user, the mobile phone A sends indication information to the mobile phone B, where the indication information indicates that the mobile phone A expects to enter a full-screen mode. After receiving the indication information, the mobile phone B may double a canvas in a current interface (the desktop of the mobile phone B). The mobile phone B may crop a doubled canvas, to obtain two areas (a left area and a right area) of a same size. The mobile phone B may display a canvas (including battery level information, time information (08:08) and date information (Thursday, August 6), location information (high-tech zone), and icons of App 15, App 16, App 19, App 20, App 23, and App 24) shown in the right area on a display, and project a canvas (including a network standard and a Wi-Fi connection status in a status bar, weather information (35°C), and icons of App 13, App 14, App 17, App 18, App 21, and App 22) shown in the left area to the mobile phone A, so that the mobile phone A displays the canvas shown in the left area on a display. In addition, the mobile phone A may further include an icon 1003 of a parallel mode, an icon 1004 of a dual-application mode, an icon 1005 of a paging mode, and an exit control 1006.

In an embodiment, the icon 1003 of the parallel mode, the icon 1004 of the dual-application mode, the icon 1005 of the paging mode, and the exit control 1006 may be drawn by the mobile phone A and displayed on the display of the mobile phone A.

In an embodiment, after the mobile phone A and the mobile phone B enter the full-screen mode, the icon 1003 of the parallel mode, the icon 1004 of the dual-application mode, the icon 1005 of the paging mode, and the exit control 1006 may alternatively be drawn by the mobile phone B and displayed on the display of the mobile phone B.

In an embodiment, after the mobile phone A and the mobile phone B enter the full-screen mode, the icon 1003 of the parallel mode, the icon 1004 of the dual-application mode, and the icon 1005 of the paging mode may be displayed on the mobile phone B, and the exit control 1006 may be displayed on the mobile phone A.

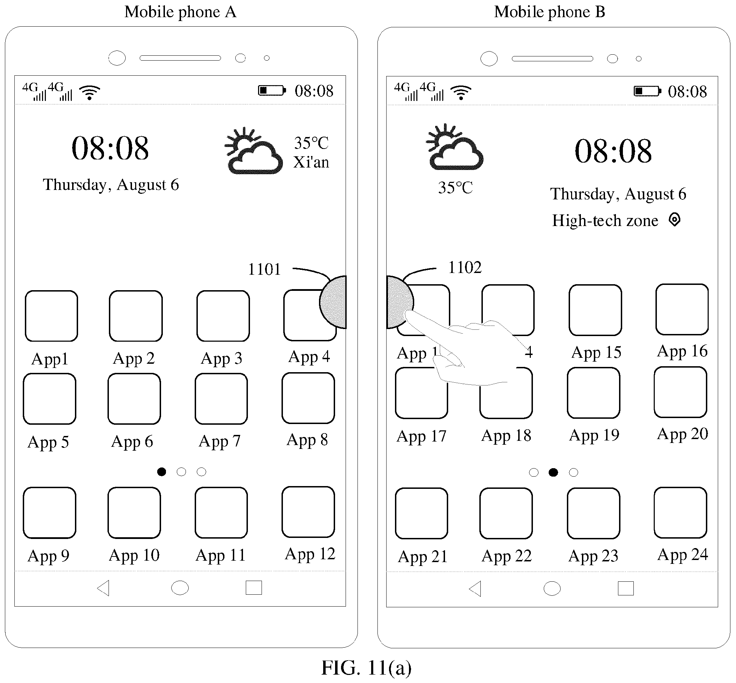

FIG. 11(a) to FIG. 11(c) show another group of GUIs according to an embodiment of this application.

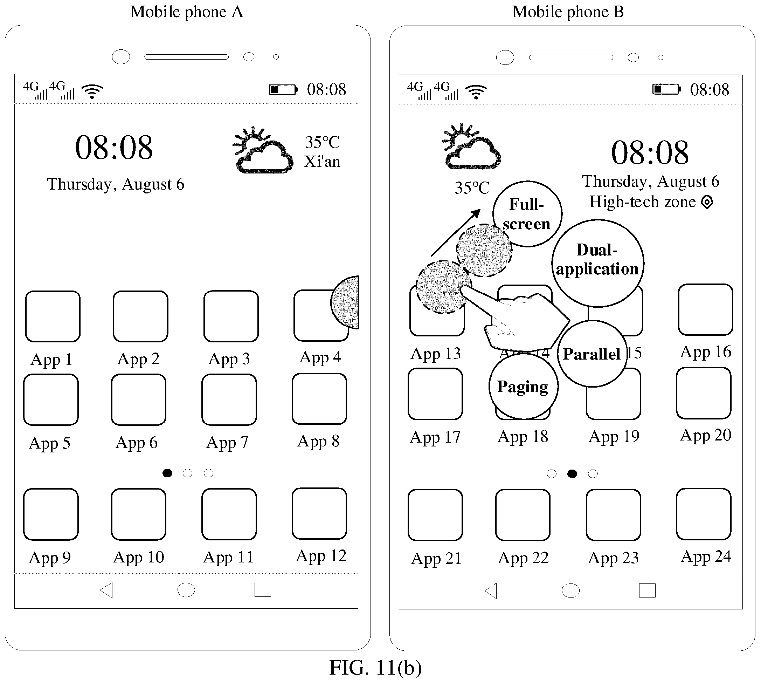

Refer to a GUI shown in FIG. 11(a). When a distance between a mobile phone A and a mobile phone B is less than or equal to a preset distance, a control 1101 is displayed on a desktop of the mobile phone A, and a control 1102 is displayed on a desktop of the mobile phone B. When the mobile phone B detects an operation of dragging the control 1102 to the right by a user, a GUI shown in FIG. 11(b) is displayed.

Refer to the GUI shown in FIG. 11(b). In response to detecting the operation of dragging the control 1102 to the right by the user, the mobile phone B may display an icon of a full-screen mode, an icon of a dual-application mode, an icon of a parallel mode, and an icon of a paging mode on a display. If the user expects the mobile phone A and the mobile phone B to enter the full-screen mode, the user may drag the control 1102 to the upper right.

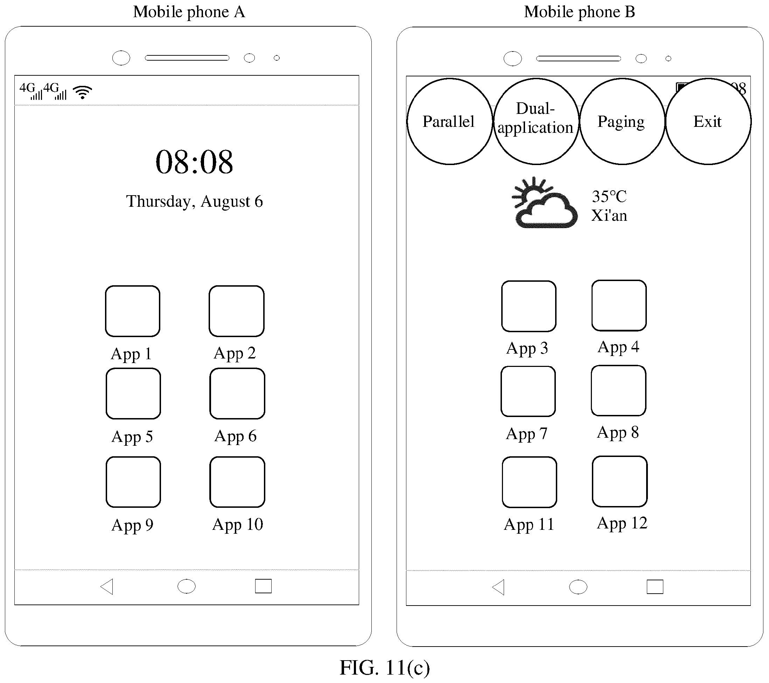

Refer to a GUI shown in FIG. 11(c). After the mobile phone B detects that the user drags the control 1102 to partially or completely overlap the icon corresponding to the full-screen mode, the mobile phone B may send indication information to the mobile phone A, where the indication information indicates that the mobile phone B expects to enter the full-screen mode. After receiving the indication information, the mobile phone A may double a canvas in a current interface (the desktop of the mobile phone A). The mobile phone A may crop a doubled canvas, to obtain two areas (a left area and a right area) of a same size. The mobile phone A may display a canvas (including a network standard and a Wi-Fi connection status in a status bar, time information (08:08) and date information (Thursday, August 6), and icons of App 1, App 2, App 5, App 6, App 9, and App 10) shown in the left area on a display, and project a canvas (including battery level information, weather information (35°C), and icons of App 3, App 4, App 7, App 8, App 11, and App 12) shown in the right area to the mobile phone B, so that the mobile phone B displays the canvas of the right area on the display. In addition, the mobile phone B may further display the icon of the parallel mode, the icon of the dual-application mode, the icon of the paging mode, and an exit control.

In an embodiment, as shown in FIG. 11(b), when the mobile phone B detects that an area of an overlapping part of the control 1102 dragged by the user and the icon of the full-screen mode is greater than or equal to a preset area, the mobile phone B may send the indication information to the mobile phone A.

It should be understood that, the mobile phone A shown in FIG. 11(a) to FIG. 11(c) may crop the doubled canvas in a segmentation manner, or the mobile phone A may crop the doubled canvas in a mask manner.

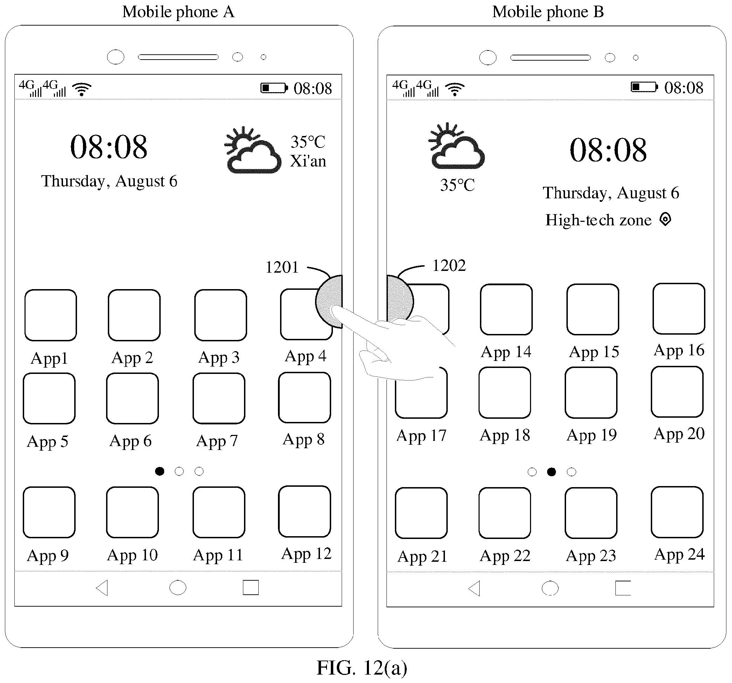

FIG. 12(a) to FIG. 12(c) show another group of GUIs according to an embodiment of this application.

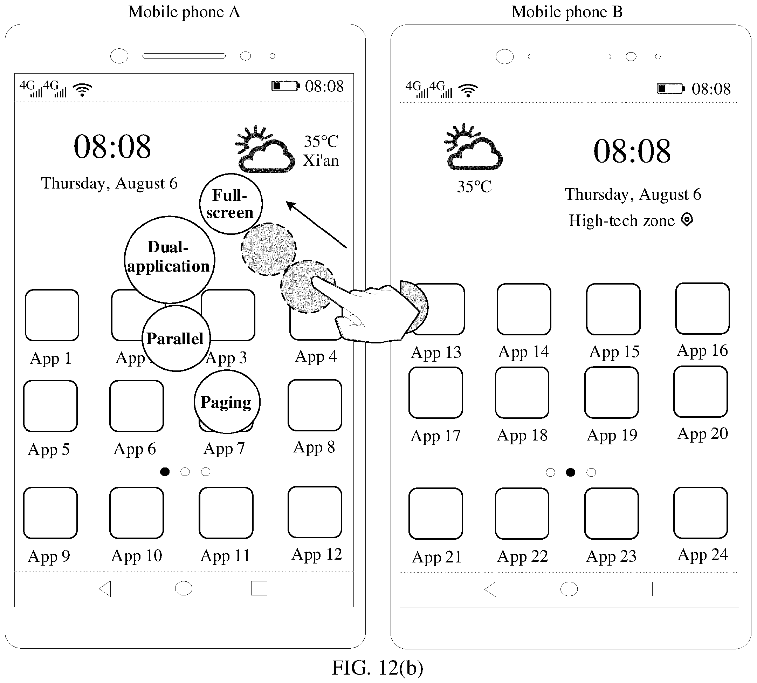

Refer to a GUI shown in FIG. 12(a). When a distance between a mobile phone A and a mobile phone B is less than or equal to a preset distance, a control 1201 is displayed on a desktop of the mobile phone A, and a control 1202 is displayed on a desktop of the mobile phone B. When the mobile phone A detects an operation of dragging the control 1201 to the left by a user, a GUI shown in FIG. 12(b) is displayed.

Refer to the GUI shown in FIG. 12(b). In response to detecting, by the mobile phone A, the operation of dragging the control 1201 to the left by the user, the mobile phone B may display an icon of a full-screen mode, an icon of a dual-application mode, an icon of a parallel mode, and an icon of a paging mode on a display. If the user expects the mobile phone A and the mobile phone B to enter the full-screen mode, the user may drag the control 1201 to the upper left.

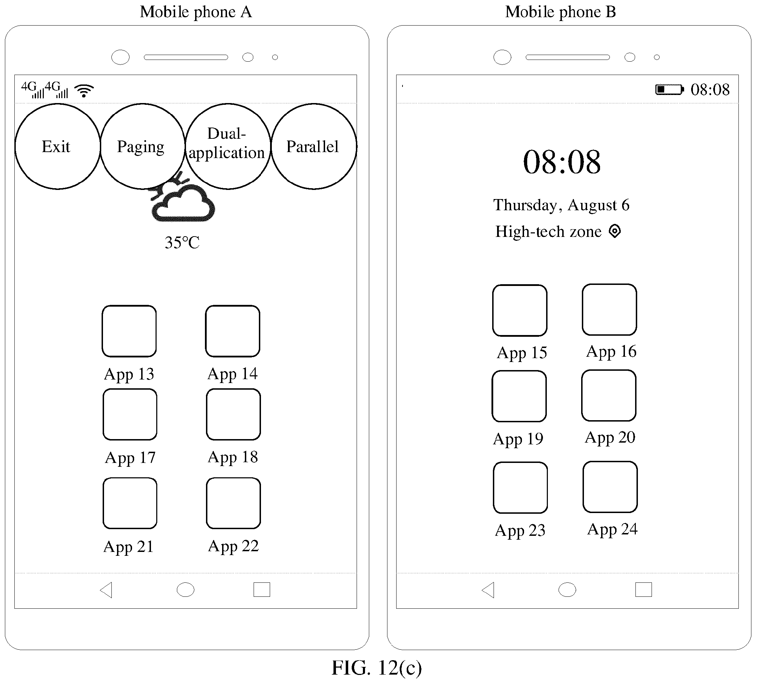

Refer to a GUI shown in FIG. 12(c). After the mobile phone A detects that the user drags the control 1201 to partially or completely overlap the icon of the full-screen mode, the mobile phone A sends indication information to the mobile phone B, where the indication information indicates that the mobile phone A expects to enter the full-screen mode. After receiving the indication information, the mobile phone B may double a canvas in a current interface (the desktop of the mobile phone B). The mobile phone B may crop a doubled canvas, to obtain two areas (a left area and a right area) of a same size. The mobile phone B may display a canvas (including battery level information, time information (08:08) and date information (Thursday, August 6), location information (high-tech zone), and icons of App 15, App 16, App 19, App 20, App 23, and App 24) shown in the right area on a display, and project a canvas (including a network standard and a Wi-Fi connection status in a status bar, weather information (35°C), and icons of App 13, App 14, App 17, App 18, App 21, and App 22) shown in the left area to the mobile phone A, so that the mobile phone A displays the canvas shown in the left area on the display. In addition, the mobile phone A may further display the icon of the parallel mode, the icon of the dual-application mode, the icon of the paging mode, and an exit control.

In an embodiment, when the mobile phone A detects that an area of an overlapping part of the control 1201 dragged by the user and the icon of the full-screen mode is greater than or equal to a preset area, the mobile phone A may send the indication information to the mobile phone B.

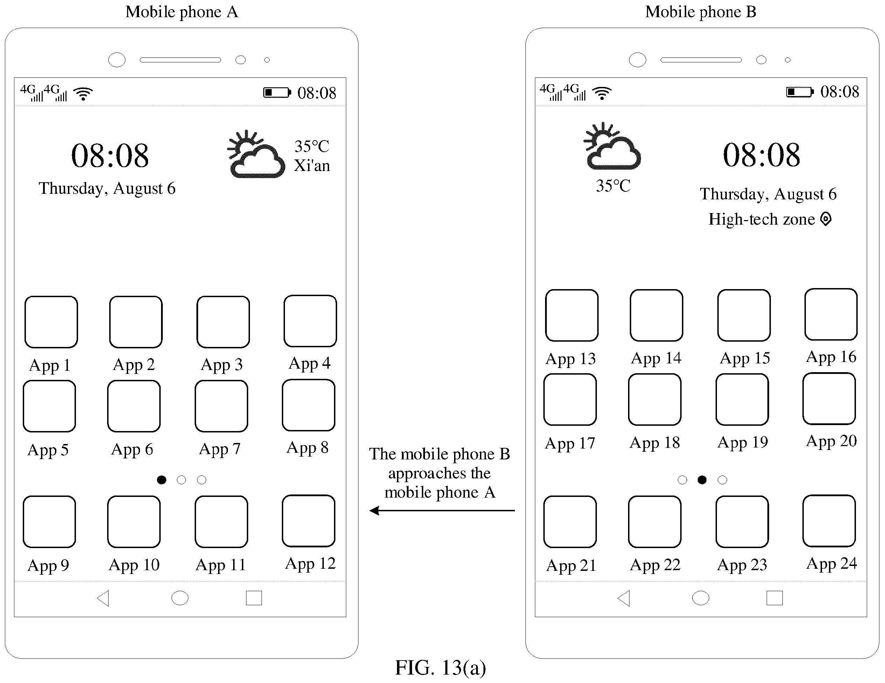

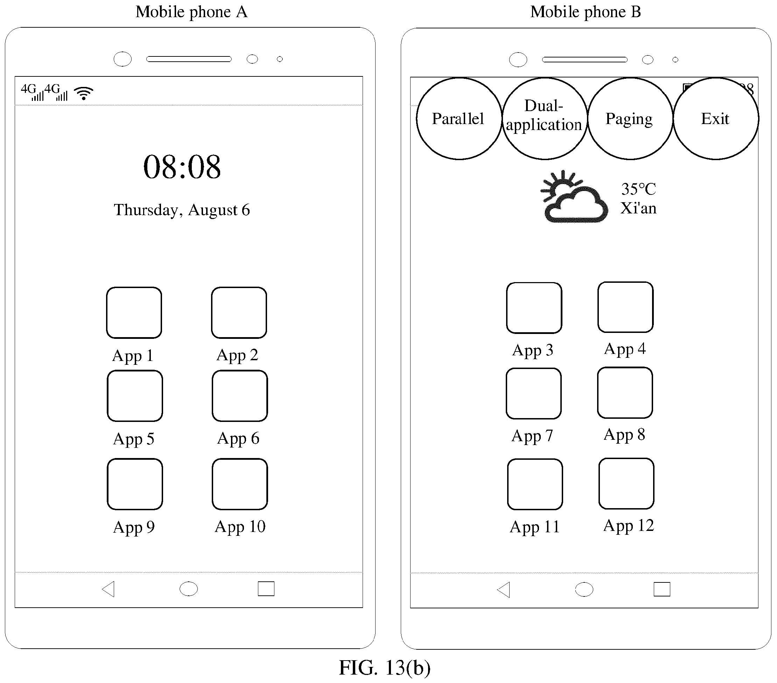

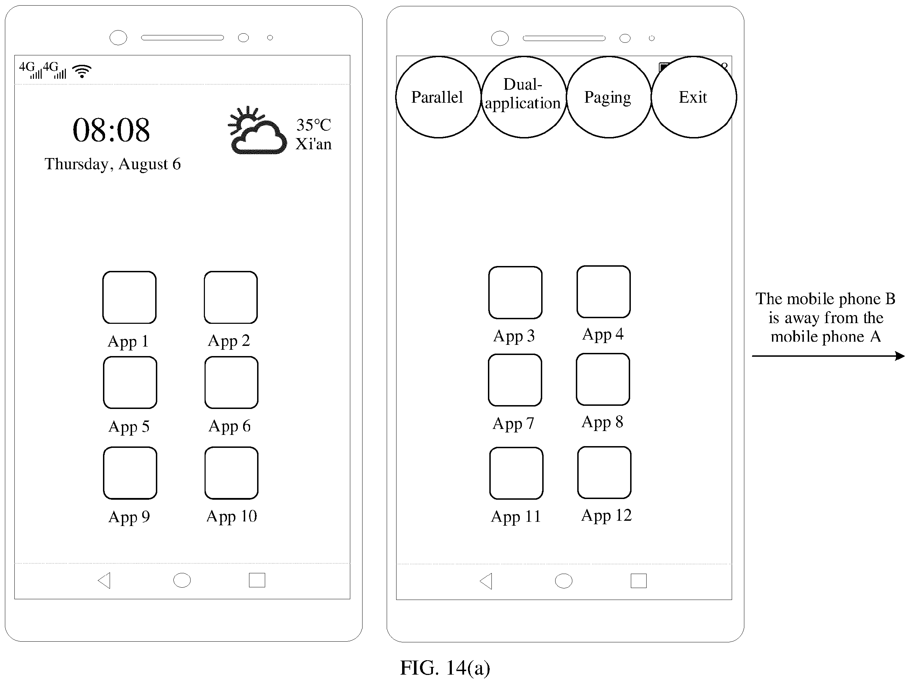

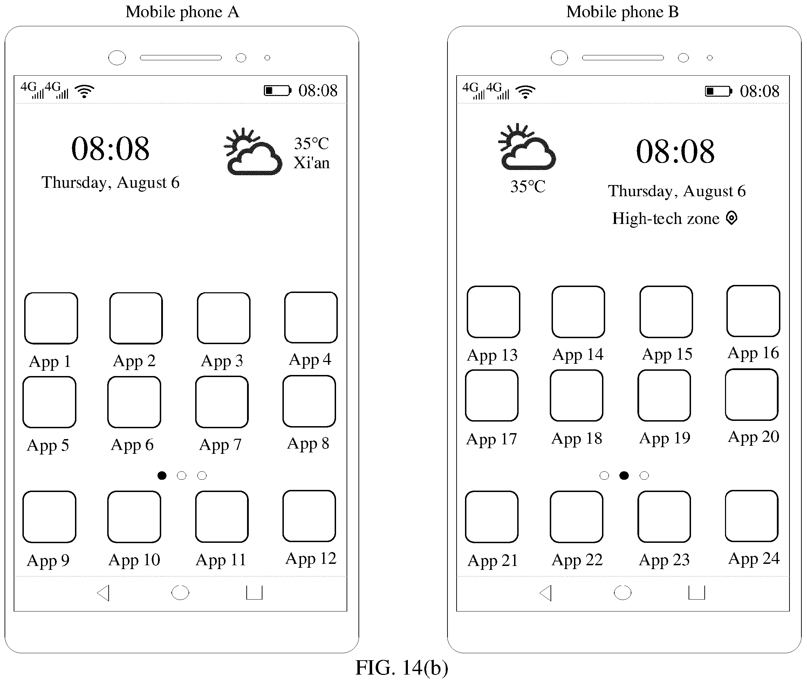

FIG. 13(a) and FIG. 13(b) and FIG. 14(a) and FIG. 14(b) show a process in which a mobile phone A and a mobile phone B automatically enter a full-screen mode, and a process in which the mobile phone A and the mobile phone B automatically exit the full-screen mode.

Refer to a GUI shown in FIG. 13(a). When a distance between the mobile phone A and the mobile phone B is greater than a preset distance, the mobile phone A displays a desktop of the mobile phone A, and the mobile phone B displays a desktop of the mobile phone B. After the mobile phone A and the mobile phone B approach each other, a GUI shown in FIG. 13(b) is displayed.

Refer to the GUI shown in FIG. 13(b). When the distance between the mobile phone A and the mobile phone B is less than or equal to the preset distance, the mobile phone B sends indication information to the mobile phone A, where the indication information indicates that the mobile phone B expects to enter the full-screen mode. After receiving the indication information, the mobile phone A may double a canvas in a current interface (the desktop of the mobile phone A). The mobile phone A may crop a doubled canvas, so that the mobile phone A and the mobile phone B perform display in full screen. For a process in which the mobile phone A crops the doubled canvas, refer to the descriptions in the foregoing embodiment. For brevity, details are not described herein again.

In this embodiment of this application, the mobile phone A and the mobile phone B may consider, by default, a device on a left side as a source device and a device on a right side as a sink device.

Refer to a GUI shown in FIG. 14(a). After the mobile phone A and the mobile phone B enter the full-screen mode, a user moves the mobile phone B away from the mobile phone A.

Refer to a GUI shown in FIG. 14(b). When the mobile phone A detects that the distance between the mobile phone A and the mobile phone B is greater than the preset distance, the mobile phone A and the mobile phone B may automatically exit the full-screen mode, or the mobile phone A may stop sending a cropped canvas to the mobile phone B. The mobile phone A may display the desktop of the mobile phone A, and the mobile phone B displays the desktop of the mobile phone B.

In an embodiment, when the mobile phone A detects that the distance between the mobile phone A and the mobile phone B is greater than the preset distance, the mobile phone A may further disconnect a wireless connection to the mobile phone B when the mobile phone A and the mobile phone B automatically exit the full-screen mode.

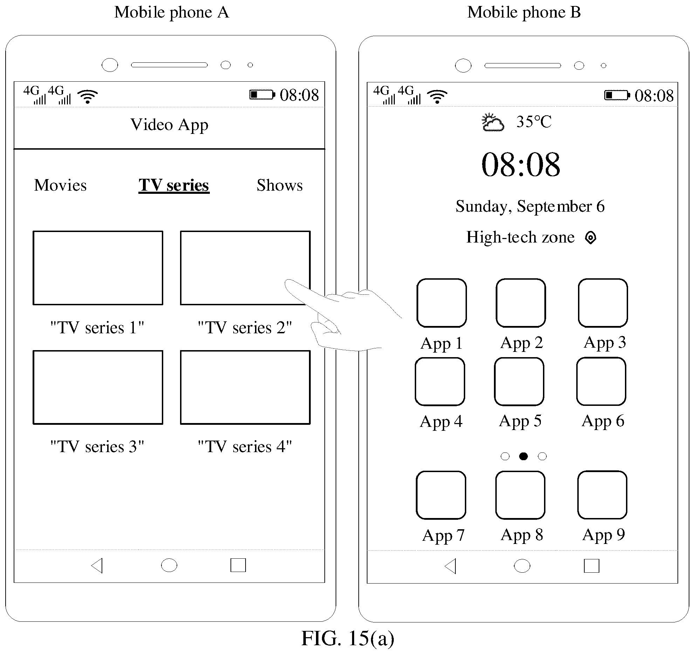

FIG. 15(a) to FIG. 15(c) show another group of GUIs according to an embodiment of this application.

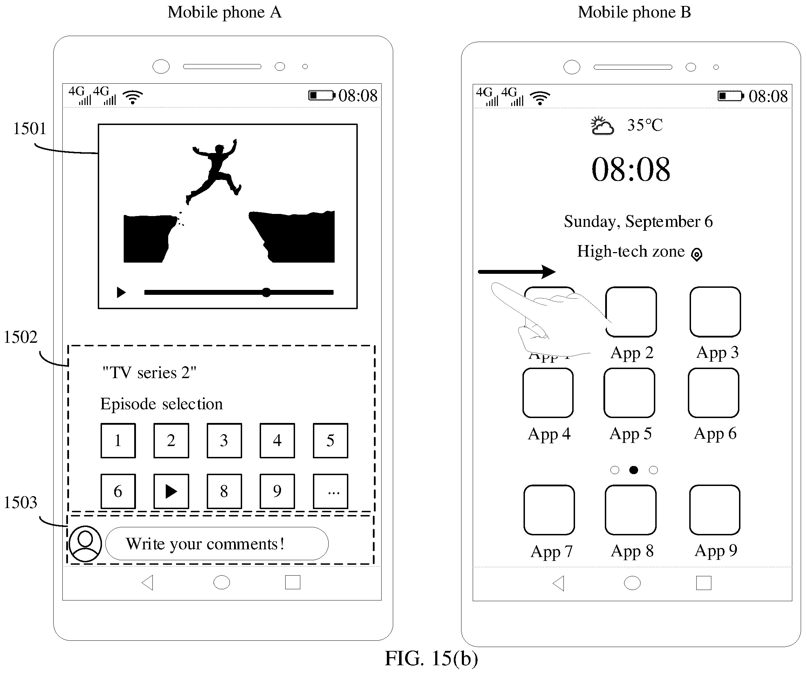

As shown in FIG. 15(a), a mobile phone A displays a display interface of a video App, and a mobile phone B displays a desktop of the mobile phone B. When the mobile phone A detects an operation of tapping a "TV series 2" by a user, the mobile phone A may display a GUI shown in FIG. 15(b).

As shown in FIG. 15(b), in response to the operation of tapping the "TV series 2" by the user, the mobile phone A may display a display interface of the "TV series 2", where the display interface includes a video playback window 1501, a title and episode selection area 1502, and a comment area 1503. When the mobile phone B detects an operation of sliding from left to right on a screen by the user, the mobile phone B may send indication information to the mobile phone A, where the indication information indicates the mobile phone A to perform splicing display with the mobile phone B.

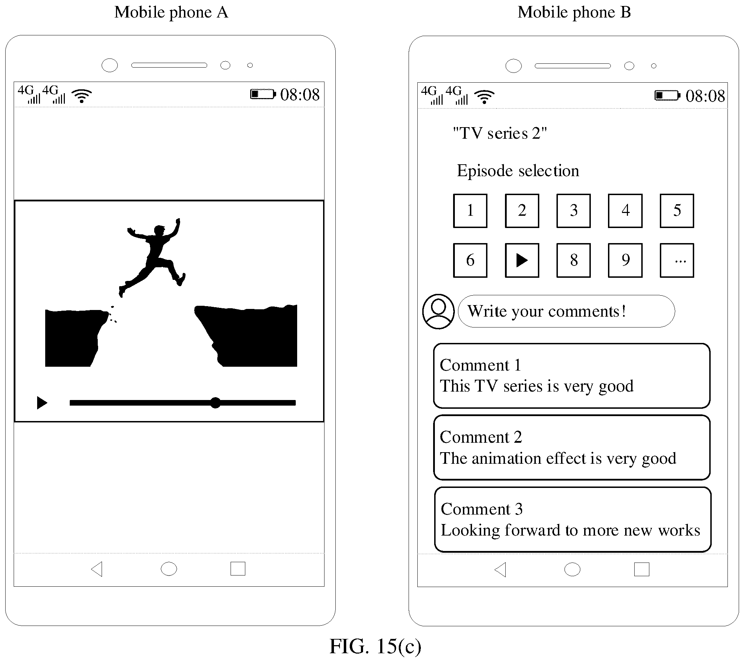

As shown in FIG. 15(c), in response to receiving the indication information sent by the mobile phone B, the mobile phone A may determine, based on a type of a currently displayed interface (for example, the interface currently displayed on the mobile phone A includes three parts: an upper part, a middle part, and a lower part, where the upper part is the video playback window 1501, the middle part is the title and episode selection area 1502, and the lower part is the comment area 1503), that the mobile phone A and the mobile phone B are to perform splicing display in a companion mode. As shown in FIG. 15(c), the mobile phone A may display image information in the video playback window 1501 in full screen, and may send image information of the title and episode selection area 1502 and the comment area 1503 to the mobile phone B. In response to receiving the image information, the mobile phone B may display the image information of the title and episode selection area 1502 and the comment area 1503.

It should be understood that the title and episode selection area 1502 and the comment area 1503 may also be referred to as a details page of a video.

In an embodiment, as shown in FIG. 15(a), when the mobile phone A detects the operation of tapping the "TV series 2" by the user, the mobile phone A and the mobile phone B may display a GUI shown in FIG. 15(c).

In this embodiment of this application, when the mobile phone A receives the indication information of the mobile phone B or the mobile phone A determines that the currently displayed interface is suitable for the mobile phone A and the mobile phone B to perform splicing display in a specific mode, the mobile phone A and the mobile phone B may directly perform splicing display in the mode. The user does not need to manually perform mode selection, and the mobile phone A may adaptively select an appropriate mode. This omits an operation process of selecting the mode by the user, improves an intelligence degree of an electronic device, and helps improve user experience.

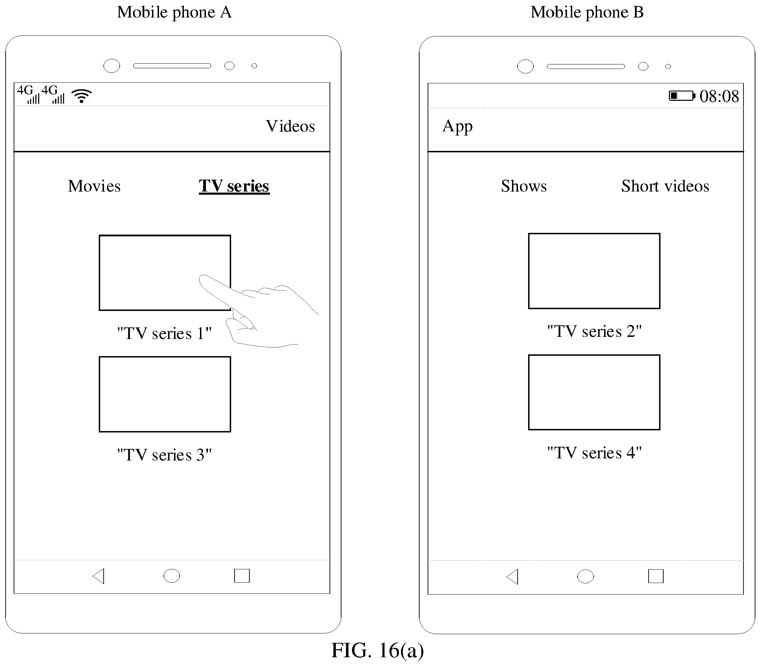

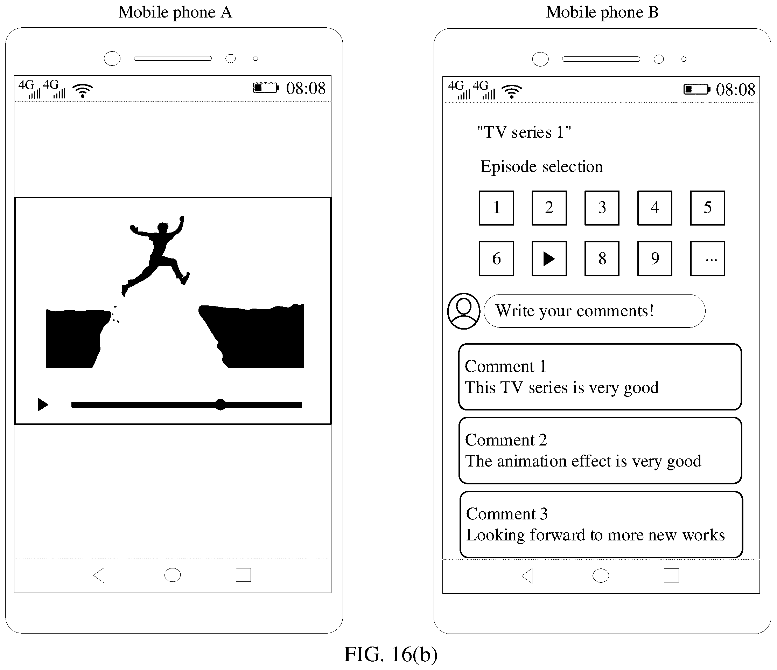

FIG. 16(a) and FIG. 16(b) show another group of GUIs according to an embodiment of this application.

As shown in FIG. 16(a), a mobile phone A and a mobile phone B are performing splicing display in a full-screen mode, and the mobile phone A and the mobile phone B are currently displaying a display interface of a video App. When the mobile phone A detects an operation of tapping a "TV series 1" by a user, the mobile phone A and the mobile phone B may display a GUI shown in FIG. 16(b).

As shown in FIG. 16(b), in response to detecting the operation of tapping the "TV series 1" by the user, the mobile phone A determines that the mobile phone A and the mobile phone B need to display a display interface of the "TV series 1". Because the display interface of the "TV series 1" includes a video playback window, a title and episode selection area, and a comment area, the mobile phone A may determine that the display interface of the "TV series 1" is more suitable to be displayed in a companion mode. The mobile phone A may display image information in the video playback window in full screen, and may send image information of the title and episode selection area and the comment area to the mobile phone B. In response to receiving the image information, the mobile phone B may display the image information of the title and episode selection area and the comment area.

In this embodiment of this application, if the mobile phone A and the mobile phone B are performing display in the full-screen mode, and an interface to be displayed on the mobile phone A and the mobile phone B is more suitable to be displayed in another mode (for example, the companion mode), the mobile phone A may switch a splicing display manner of the mobile phone A and the mobile phone B from the full-screen mode to the another mode. In this way, the user does not need to manually perform mode selection, and the mobile phone A may adaptively select an appropriate mode. This omits an operation process of selecting the mode by the user, improves an intelligence degree of an electronic device, and helps improve user experience.

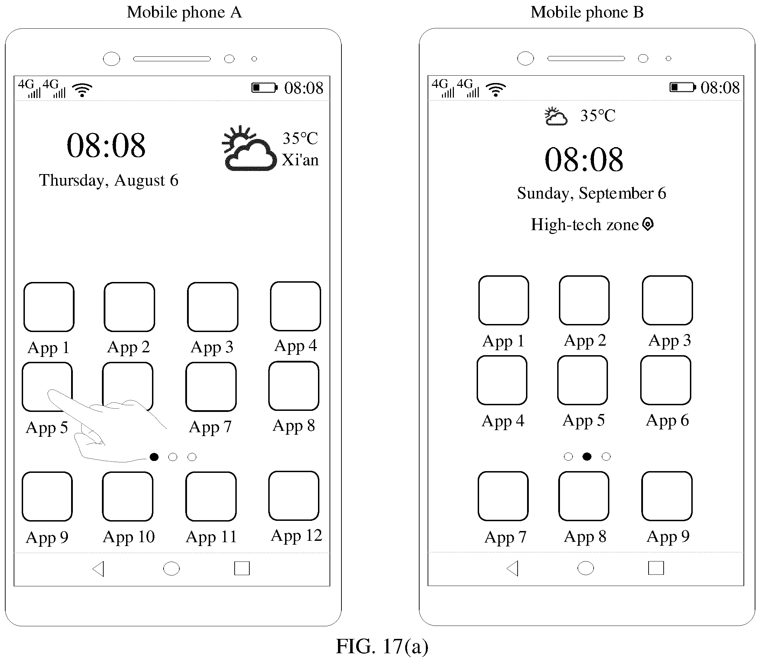

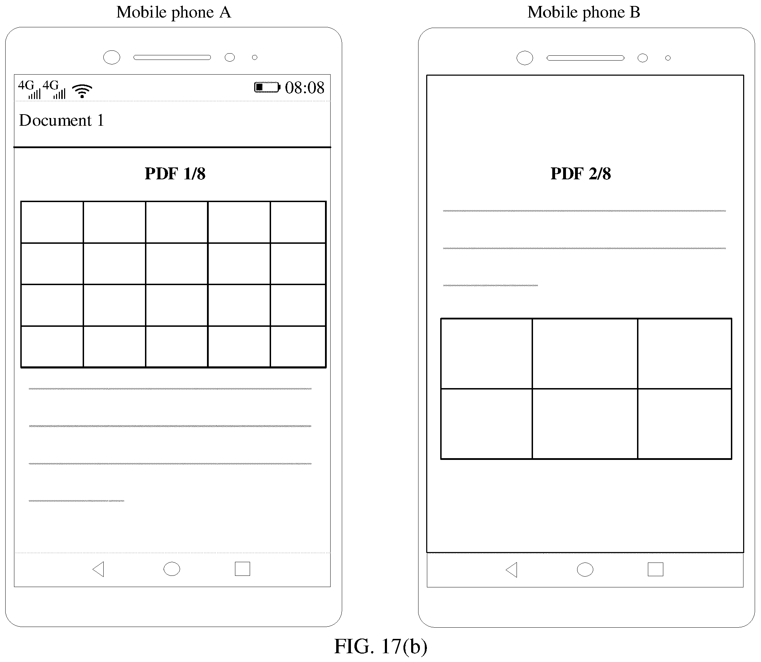

FIG. 17(a) and FIG. 17(b) show another group of GUIs according to an embodiment of this application.

As shown in FIG. 17(a), a mobile phone A displays a desktop of the mobile phone A, and a mobile phone B displays a desktop of the mobile phone B. When the mobile phone A detects an operation of tapping an icon of App 5 by a user, the mobile phone A and the mobile phone B may display a GUI shown in FIG. 17(b).

In an embodiment, App 5 may be a document application program.

As shown in FIG. 17(b), in response to detecting the operation of tapping the icon of App 5 by the user, the mobile phone A may determine that a display interface of a document 1 needs to be displayed, where the document 1 includes eight pages. If a distance between the mobile phone A and the mobile phone B is less than or equal to a preset distance and the mobile phone A and the mobile phone B have been networked, the mobile phone A may determine that the mobile phone A and the mobile phone B are to display content of the document 1 in a paging mode. As shown in FIG. 17(b), the mobile phone A may display first-page content of the document 1, and the mobile phone A may send second-page content of the document 1 to the mobile phone B. In response to receiving the second-page content sent by the mobile phone A, the mobile phone B may display the second-page content of the document 1.

In an embodiment, in response to detecting the operation of tapping the icon of App 5 by the user, the mobile phone A may display the display interface of the document 1 (for example, the mobile phone A displays the first-page content of the document 1), and the mobile phone B may continue to display the desktop of the mobile phone B. When the mobile phone B detects an operation of sliding from left to right on a screen by the user, the mobile phone B may send indication information to the mobile phone A, where the indication information indicates the mobile phone A to perform splicing display with the mobile phone B. In response to receiving the indication information, the mobile phone A may determine to perform splicing display with the mobile phone B in the paging mode, so that the mobile phone A may display the first-page content of the document 1, and may send the second-page content of the document 1 to the mobile phone B. In response to receiving the second-page content sent by the mobile phone A, the mobile phone B may display the second-page content of the document 1.

In this embodiment of this application, if the mobile phone A detects an input of the user and determines that a display interface of a document (where the document may include a plurality of pages of content) needs to be displayed, the mobile phone A and the mobile phone B within the preset distance may perform splicing display in the paging mode. The user does not need to manually perform mode selection, and the mobile phone A may adaptively select an appropriate mode. This omits an operation process of selecting the mode by the user, improves an intelligence degree of an electronic device, and helps improve user experience.

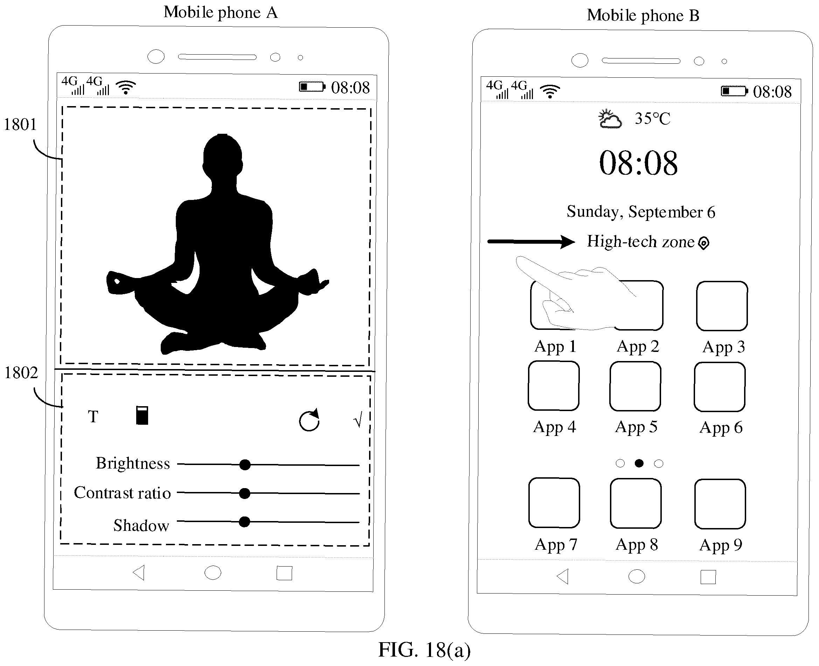

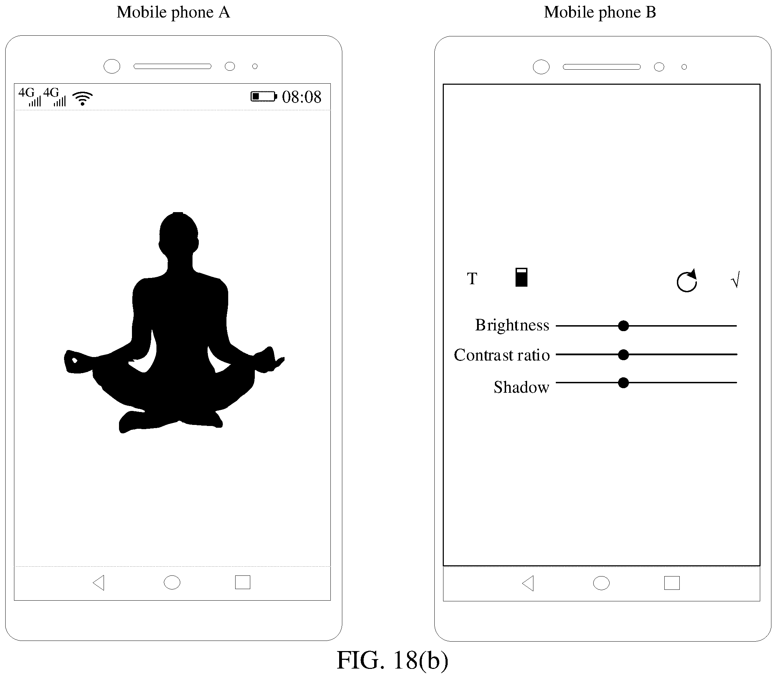

FIG. 18(a) and FIG. 18(b) show another group of GUIs according to an embodiment of this application.

As shown in FIG. 18(a), a mobile phone A displays a display interface of a drawing App, where the display interface of the drawing App includes a photo display area 1801 and a function area 1802. A mobile phone B displays a desktop of the mobile phone B. When the mobile phone B detects an operation of sliding from left to right on a screen by a user, the mobile phone B may send indication information to the mobile phone A, where the indication information indicates the mobile phone A to perform splicing display with the mobile phone B. In response to receiving the indication information, the mobile phone A may determine, based on a type of the current display interface, to perform splicing display with the mobile phone B in a companion mode.

As shown in FIG. 18(b), the mobile phone A may display the photo display area 1801, and send image information corresponding to the function area 1802 to the mobile phone B. In response to receiving the image information, the mobile phone B may display the image information corresponding to the function area 1802.

In an embodiment, when the mobile phone A displays the display interface of the drawing App, if a distance between the mobile phone B and the mobile phone A is less than or equal to a preset distance and the mobile phone A and the mobile phone B have been networked, the mobile phone A and the mobile phone B may also directly switch to the companion mode for splicing display.

In an embodiment, when the mobile phone A determines to perform splicing display with the mobile phone B in the companion mode, the mobile phone A may display the function area 1802, and send image information corresponding to the photo display area 1801 to the mobile phone B. In response to receiving the image information, the mobile phone B may display the image information corresponding to the photo display area 1801.

In this embodiment of this application, if the mobile phone A is displaying the display interface of the drawing application program when receiving the indication information sent by the mobile phone B, the mobile phone A and the mobile phone B within the preset distance may perform splicing display in the companion mode. The user does not need to manually perform mode selection, and the mobile phone A may adaptively select an appropriate mode. This omits an operation process of selecting the mode by the user, improves an intelligence degree of an electronic device, and helps improve user experience.

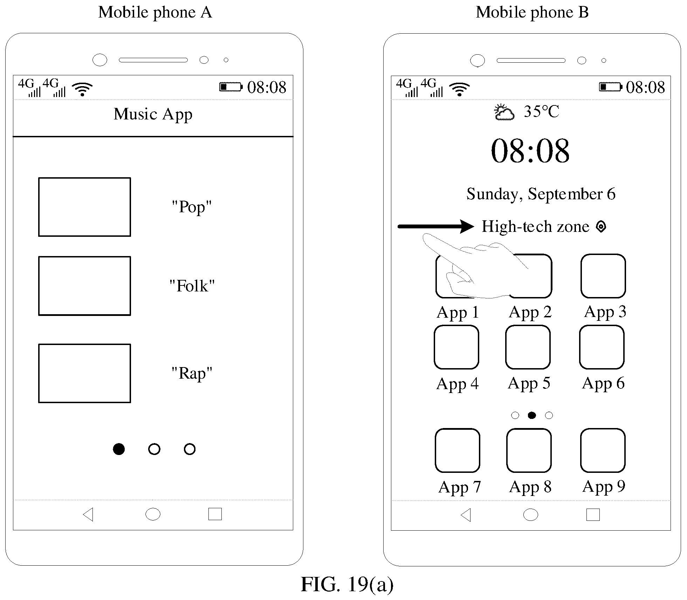

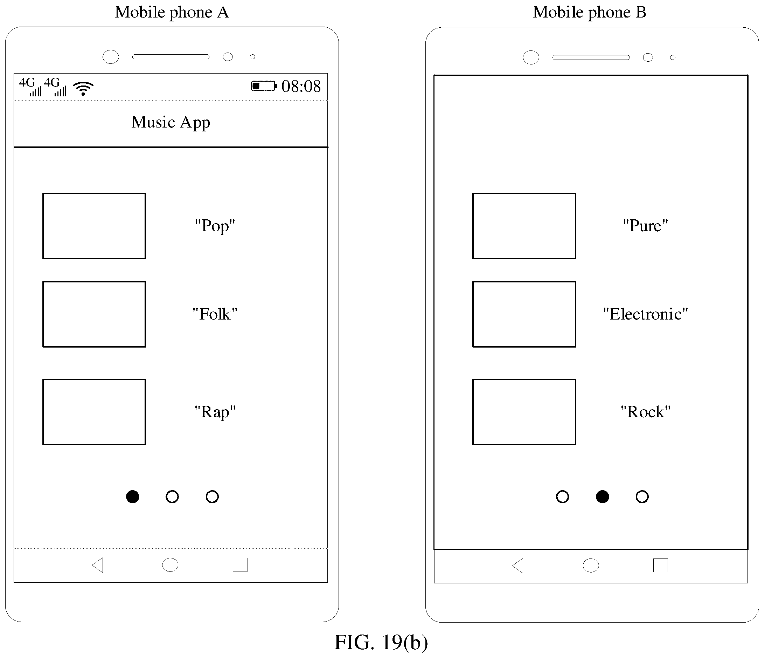

FIG. 19(a) and FIG. 19(b) show another group of GUIs according to an embodiment of this application.

As shown in FIG. 19(a), a mobile phone A displays a display interface of a music App, where the display interface of the music App includes three tabs (Tab), and the mobile phone A currently displays a first tab. A mobile phone B displays a desktop of the mobile phone B. When the mobile phone B detects an operation of sliding from left to right on a screen by a user, the mobile phone B may send indication information to the mobile phone A, where the indication information indicates the mobile phone A to perform splicing display with the mobile phone B. In response to receiving the indication information, the mobile phone A may determine, based on a type of the current display interface, to perform splicing display with the mobile phone B in a tabs mode.

As shown in FIG. 19(b), the mobile phone A may display the first tab, and send image information of a second tab to the mobile phone B. In response to receiving the image information of the second tab, the mobile phone B may display the second tab of the music App.

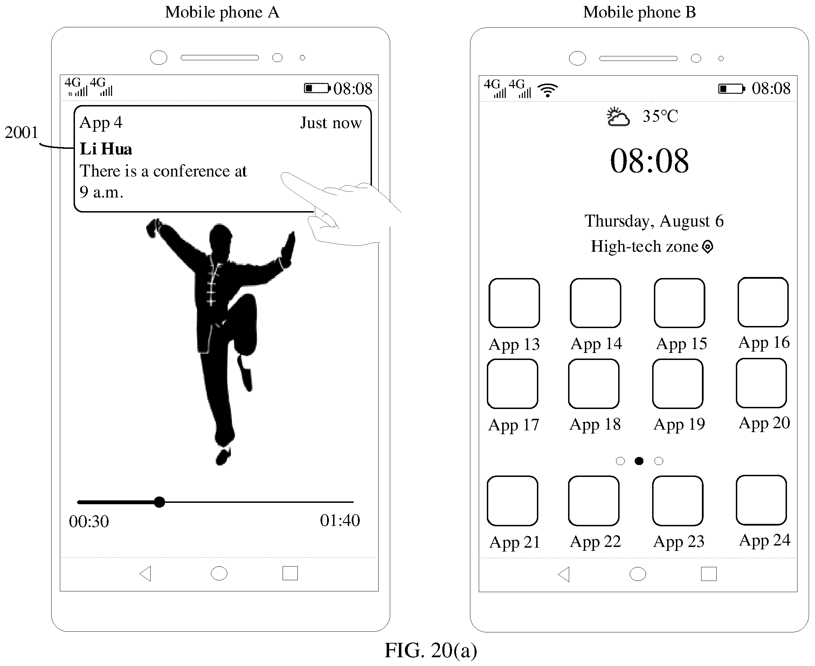

FIG. 20(a) to FIG. 20(e) show another group of GUIs according to an embodiment of this application.

As shown in FIG. 20(a), when displaying a playback interface of a video App, a mobile phone A receives a notification message from App 4, where a contact that sends the notification message is Li Hua, and content of the message is "There is a conference at 9 a.m.". A mobile phone B displays a desktop of the mobile phone B. In response to an operation of tapping a message prompt box 2001 by a user, the mobile phone A and the mobile phone B may perform splicing display in a dual-application mode.

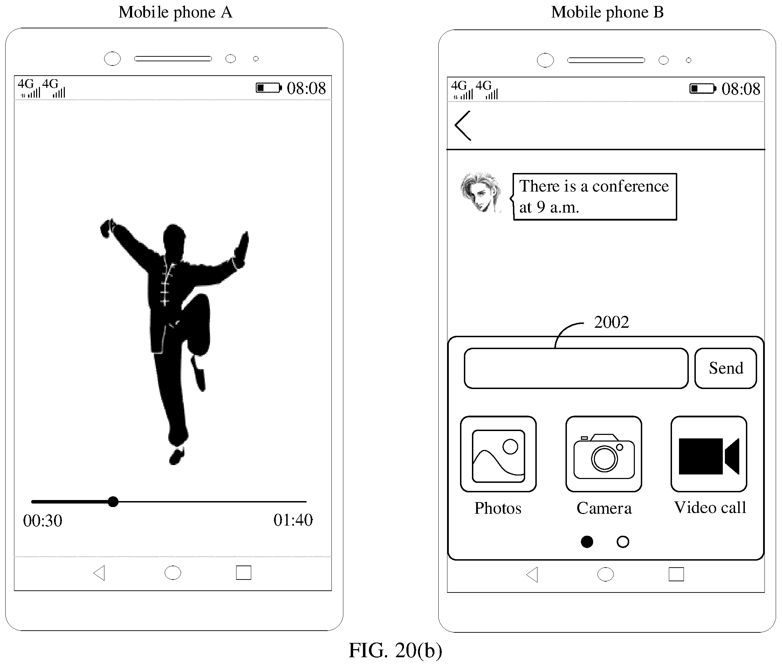

As shown in FIG. 20(b), the mobile phone A may display the playback interface of the video App, and send, to the mobile phone B, image information corresponding to a chat interface between the user and the contact Li Hua in App 4. In response to receiving the image information, the mobile phone B may display the chat interface between the user and the contact Li Hua.

In an embodiment, as shown in FIG. 20(b), when the mobile phone B detects an operation of tapping a text input box 2002 by the user, the mobile phone B may send a tapping event and corresponding coordinate information to the mobile phone A. In response to receiving the tapping event and the corresponding coordinate information, the mobile phone A may determine that the mobile phone B detects that the user taps the text input box. Therefore, the mobile phone A may start an input method in the chat interface, and send, to the mobile phone B, a canvas corresponding to the chat interface after the input method is started. In response to receiving the canvas sent by the mobile phone A, the mobile phone B may display the chat interface after the input method is started.

In an embodiment, when the mobile phone B detects a tapping operation of the user on a screen, the mobile phone B may send a tapping event and corresponding coordinate information to the mobile phone A, so that the mobile phone A may determine that the mobile phone B detects that the user taps a key by using the input method (for example, the mobile phone A may determine that the mobile phone B detects that the user taps a key "o"). In this case, the mobile phone A may display text content "o" in the text input box 2002, and send, to the mobile phone B, a canvas corresponding to the chat interface in which the text content "o" is displayed in the text input box 2002. After receiving the canvas, the mobile phone B may display the chat interface, where the text input box in the chat interface includes the text content "o".

In an embodiment, the user taps a send control on the mobile phone B. In response to detecting a tapping operation of the user on a screen, the mobile phone B may send a tapping event and corresponding coordinate information to the mobile phone A, so that the mobile phone A may determine that the mobile phone B detects that the user taps a key by using the input method (for example, the mobile phone A may determine that the mobile phone B detects that the user taps the send control). In this case, the mobile phone A may reply text content (for example, "ok") in the text input box to the user Li Hua. In this way, the mobile phone A completes a real reply to the message. After completing the real reply to the message, the mobile phone A may further send, to the mobile phone B, a canvas corresponding to the chat interface after the message is replied to, so that the mobile phone B may display the chat interface after the message is replied to, where the chat interface includes the message content "There is a conference at 9 a.m." sent by Li Hua and the content "ok" replied by the user to the message content.

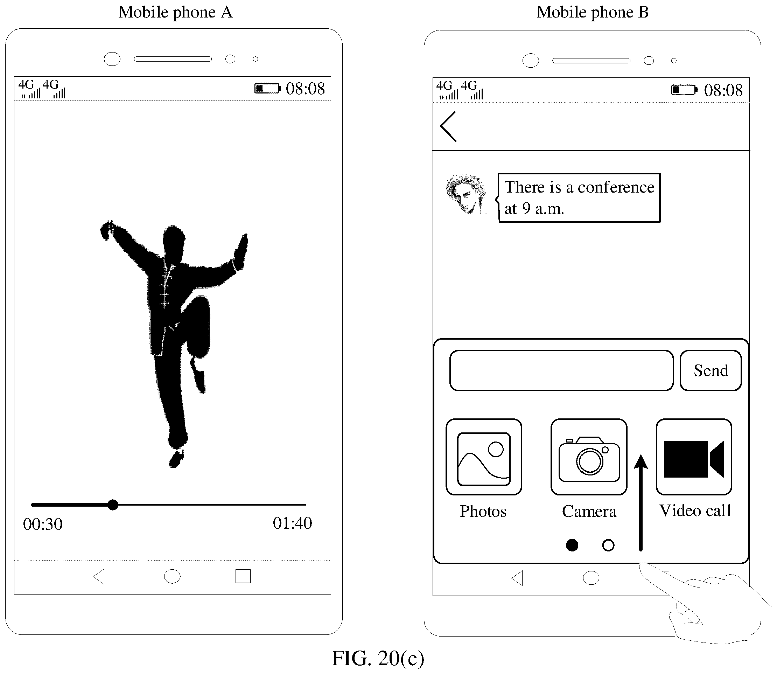

As shown in FIG. 20(c), when the mobile phone B detects an operation of sliding upwards from the bottom of the screen by the user, the mobile phone B may send a touch event to the mobile phone A. In response to receiving the touch event sent by the mobile phone A, the mobile phone A may determine that the operation of sliding upwards from the bottom of the screen by the user is detected by the user on the desktop of the mobile phone B, and the mobile phone A may determine that the user expects to exit a display interface of App 4 on the mobile phone B. In this case, the mobile phone A may stop sending, to the mobile phone B, the image information corresponding to the chat interface between the user and the contact Li Hua in App 4.

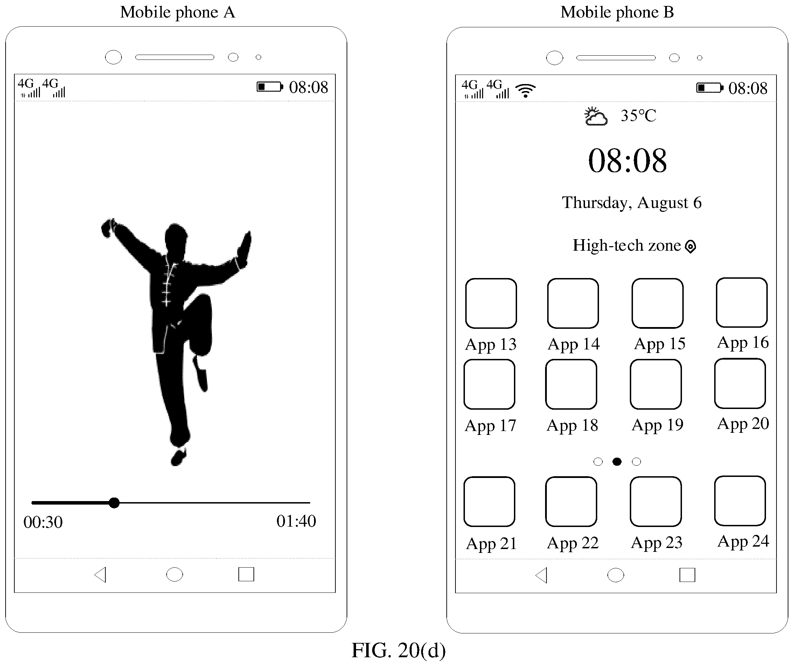

As shown in FIG. 20(d), the mobile phone A may continue to display the display interface of the video App, and the mobile phone B may continue to display the desktop of the mobile phone B.

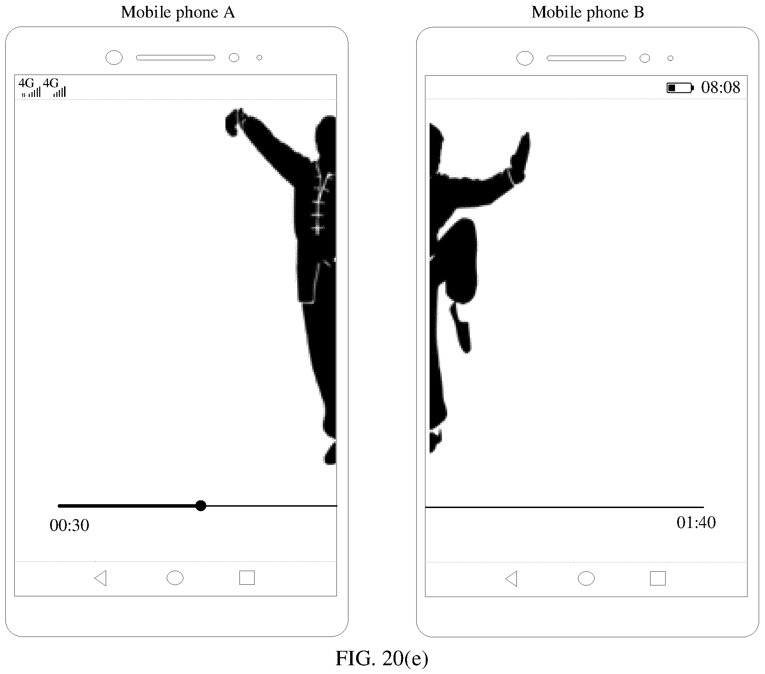

In an embodiment, as shown in FIG. 20(e), when the mobile phone A stops sending, to the mobile phone B, the image information corresponding to the chat interface between the user and the contact Li Hua in App 4, the mobile phone A may further determine that the currently displayed display interface of the video App is suitable for splicing display in a full-screen mode. In this case, the mobile phone A may double the display interface of the video App and perform segmentation, to display a part of segmented image information and send the other part of segmented image information to the mobile phone B. In response to receiving the other part of segmented image information, the mobile phone B may display the other part of image information. In this way, the mobile phone A and the mobile phone B may perform splicing display in the full-screen mode.

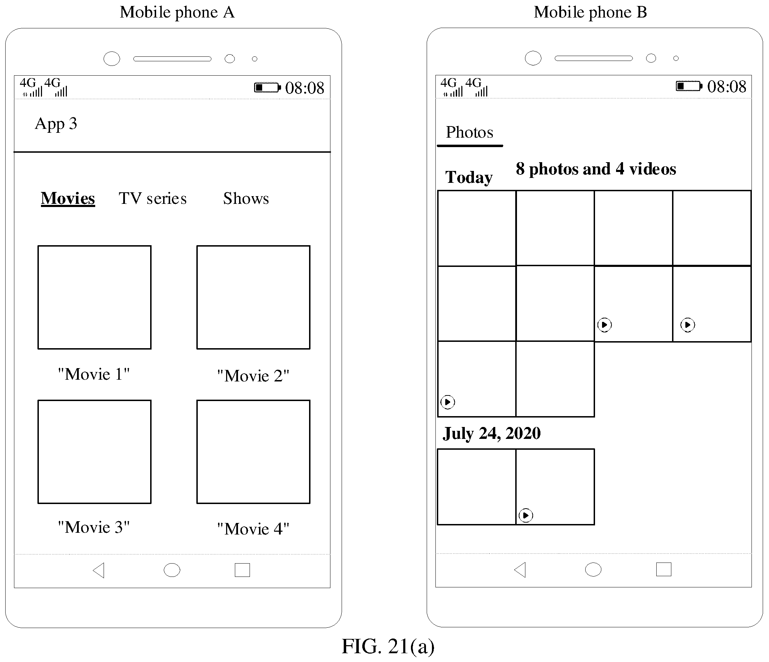

FIG. 21(a) to FIG. 21(c) show another group of GUIs according to an embodiment of this application.

As shown in FIG. 21(a), a mobile phone A and a mobile phone B are currently in a dual-application mode. The mobile phone A displays a display interface of App 3 on the mobile phone A, and may further send a canvas corresponding to a display interface of a photo application on the mobile phone A to the mobile phone B, so that the mobile phone B displays the display interface of the photo application.

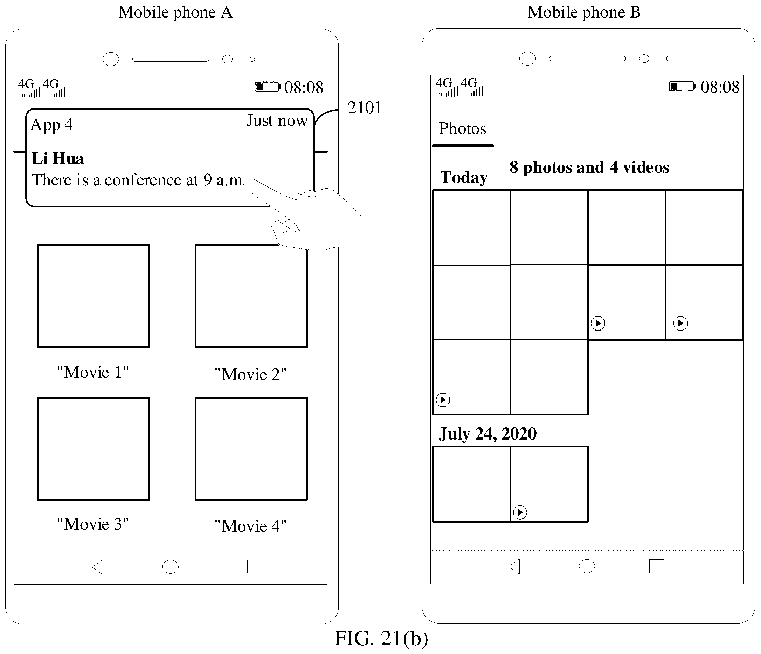

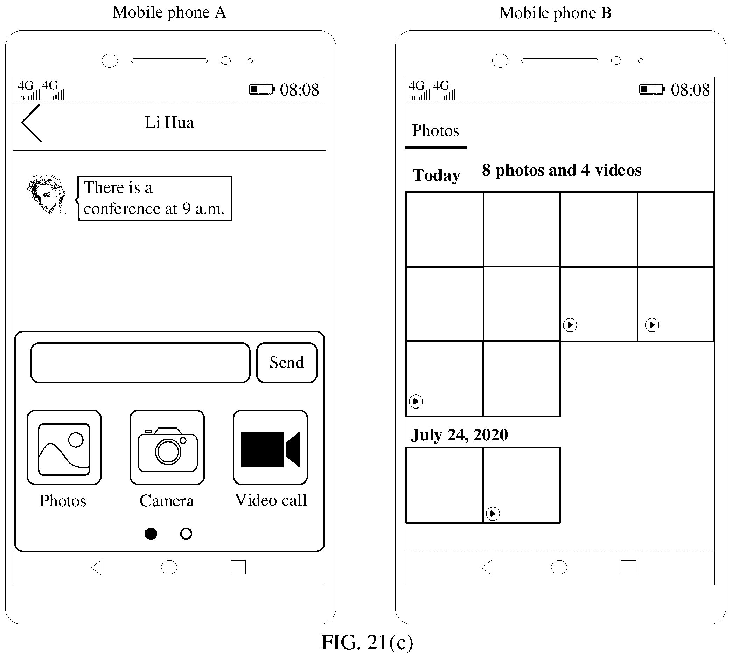

As shown in FIG. 21(b), after receiving a notification message from App 4, the mobile phone A displays a message prompt box 2101, where the message prompt box 2101 includes information about a contact (for example, Li Hua) that sends the notification message, and message content (for example, "There is a conference at 9:00 a.m. "). When the mobile phone A detects an operation of tapping the notification message prompt box 2101 by a user, a GUI shown in FIG. 21(c) may be displayed.

As shown in FIG. 21(c), in response to detecting the operation of tapping the notification message prompt box 2101 by the user, the mobile phone A may display a chat interface between the user and the contact Li Hua, and may continue to send image information corresponding to the display interface of the photo application to the mobile phone B, so that the mobile phone B displays the display interface of the photo application.

In an embodiment, in response to detecting the operation of tapping the notification message prompt box 2101 by the user, the mobile phone A may display the display interface of App 3, and may send, to the mobile phone B, image information corresponding to the chat interface between the user and the contact Li Hua, so that the mobile phone B displays the chat interface between the user and the contact Li Hua.

In an embodiment, the mobile phone A may choose, based on a time sequence of opening App 3 and the photo application, to replace an application program that is opened earlier. For example, if the mobile phone A determines that App 3 is opened earlier than the photo application, when the mobile phone A detects the operation of tapping the message prompt box 2101 by the user, the mobile phone A may replace the previously displayed display interface of App 3 with the chat interface between the user and the contact Li Hua in App 4, and continue to send the display interface of the photo application to the mobile phone B, so that the mobile phone B continues to display the display interface of the photo application. For example, if the mobile phone A determines that the photo application is opened earlier than App 3, when the mobile phone A detects the operation of tapping the message prompt box 2101 by the user, the mobile phone A may continue to display the display interface of App 3, and the mobile phone A may send, to the mobile phone B, image information corresponding to the chat interface between the user and the contact Li Hua in App 4. In response to receiving the image information, the mobile phone B may display the chat interface between the user and the contact Li Hua in App 4.

In an embodiment, the mobile phone A may determine, based on a status in which the user focuses on an application program, an application program to be replaced. For example, if the mobile phone A detects that a touch event sent by the mobile phone B is received within preset duration before the user taps the message prompt box 2101, and detects no touch operation of the user on the mobile phone A, the mobile phone A may determine that an application program that the user focuses on is the photo application displayed on the mobile phone B. In this way, the mobile phone A may replace the previously displayed display interface of App 3 with the chat interface between the user and the contact Li Hua in App 4, and continue to send the display interface of the photo application to the mobile phone B, so that the mobile phone B continues to display the display interface of the photo application. For example, if the mobile phone A detects that no touch event sent by the mobile phone B is received within preset duration before the user taps the message prompt box 1601, and detects a touch operation of the user on the mobile phone A, the mobile phone A may determine that an application program that the user focuses on is App 3 displayed on the mobile phone A. In this way, the mobile phone A may continue to display the display interface of App 3, and send, to the mobile phone B, the image information corresponding to the chat interface between the user and the contact Li Hua in App 4. In response to receiving the image information, the mobile phone B may display the chat interface between the user and the contact Li Hua in App 4. In an embodiment, the mobile phone A may determine the application program that the user focuses on based on whether a touch operation of the user in the display interface of App 3 is detected or whether indication information of the mobile phone B is received within the preset duration, where the indication information indicates that the mobile phone B detects a user input in the display interface of the photo application. The mobile phone A may replace, with the chat interface between the user and the contact Li Hua, a display interface of an application program that the user does not focus on.

In this embodiment of this application, the mobile phone A may further enable a camera and collect iris information of the user when detecting an input of the user in the message prompt box 1601, to determine that an electronic device that the user focuses on is the mobile phone A or the mobile phone B. For example, if the mobile phone A determines that the electronic device that the user focuses on is the mobile phone A, the mobile phone A may continue to display the display interface of App 3, and send, to the mobile phone B, the image information corresponding to the chat interface between the user and the contact Li Hua. In response to receiving the image information, the mobile phone B may display the chat interface between the user and the contact Li Hua in App 4. For example, if the mobile phone A determines, based on the collected iris information of the user, that the electronic device that the user focuses on is the mobile phone B, the mobile phone A may replace the previously displayed display interface of App 3 with the chat interface between the user and the contact Li Hua in App 4, and continue to send the display interface of the photo application to the mobile phone B, so that the mobile phone B continues to display the display interface of the photo application.

It should be understood that, for a process in which the user replies to the message on the mobile phone B, refer to the descriptions in the foregoing embodiment. Details are not described herein again.

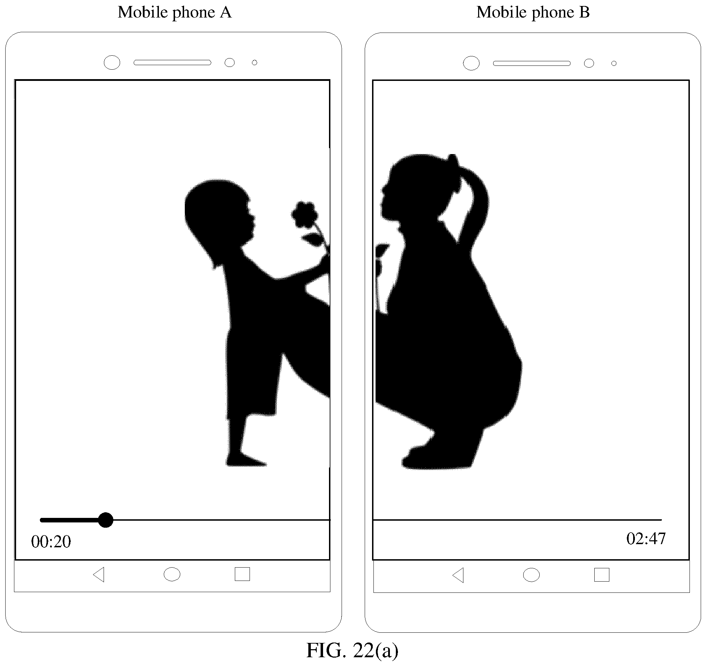

FIG. 22(a) to FIG. 22(c) show another group of GUIs according to an embodiment of this application.

As shown in FIG. 22(a), a mobile phone A and a mobile phone B are currently in a full-screen mode, and the mobile phone A and the mobile phone B are displaying a video playback interface.

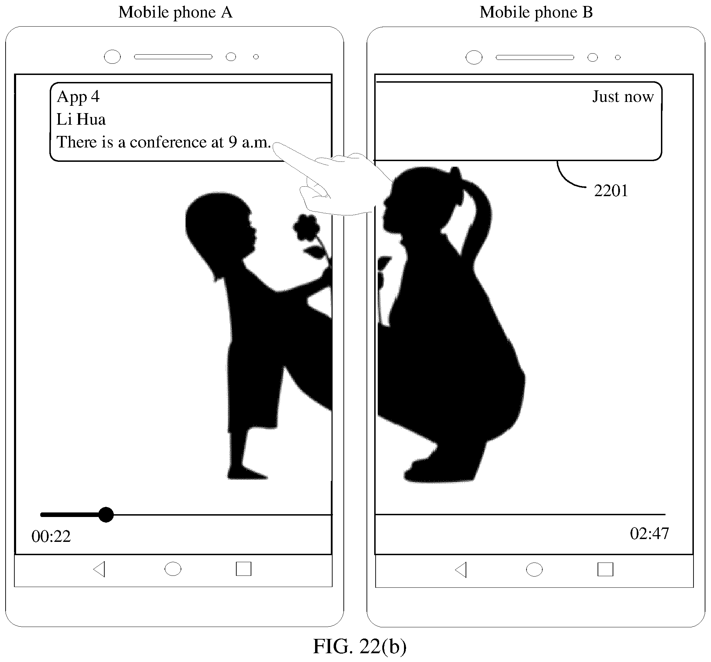

As shown in FIG. 22(b), after receiving a notification message from App 4, the mobile phone A may display a message prompt box 2201 in the video playback interface through the mobile phone A and the mobile phone B, where the message prompt box 2201 includes information about a contact (for example, "Li Hua") that sends the notification message, and message content (for example, "There is a conference at 9:00 a.m. "). When the mobile phone A detects an operation of tapping the message prompt box 2201 by a user, the mobile phone A may determine that the mobile phone A and the mobile phone B are to switch from the full-screen mode to a dual-application mode to perform splicing display.

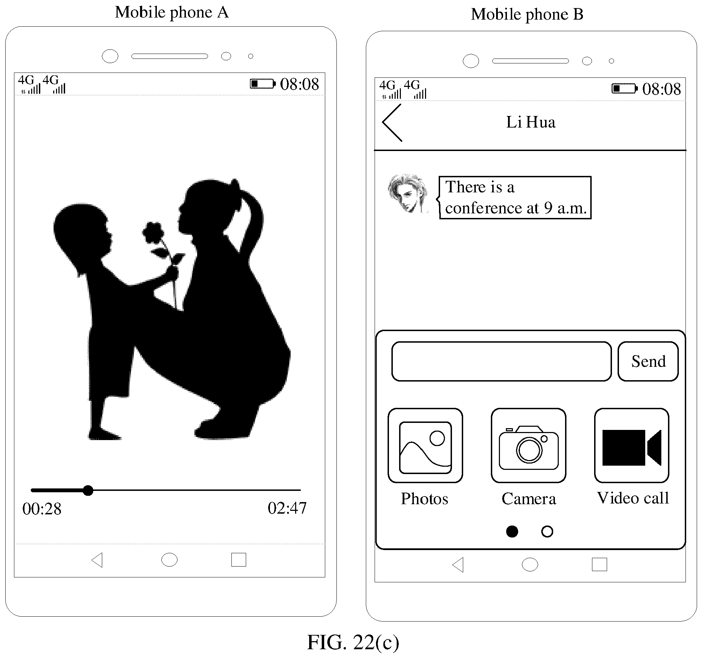

As shown in FIG. 22(c), the mobile phone A may display the video playback interface, and send, to the mobile phone B, a canvas corresponding to a chat interface between the user and the contact Li Hua in App 4 on the mobile phone A, so that the mobile phone B displays the chat interface with the contact Li Hua.

In an embodiment, when the mobile phone B detects the operation of tapping the message prompt box 2201 by the user, the mobile phone B may send a tapping event and corresponding coordinate information to the mobile phone A. After the mobile phone A determines, based on the tapping event and the corresponding coordinate information, that the user taps the message prompt box 2201 on the mobile phone B, the mobile phone A may determine to switch the mobile phone A and the mobile phone B from the full-screen mode to the dual-application mode to perform splicing display.

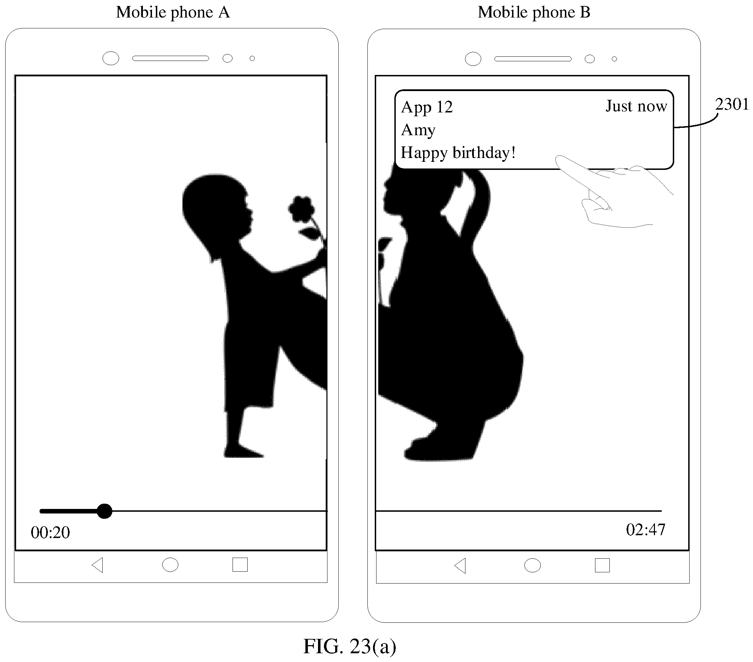

FIG. 23(a) to FIG. 23(c) show another group of GUIs according to an embodiment of this application.

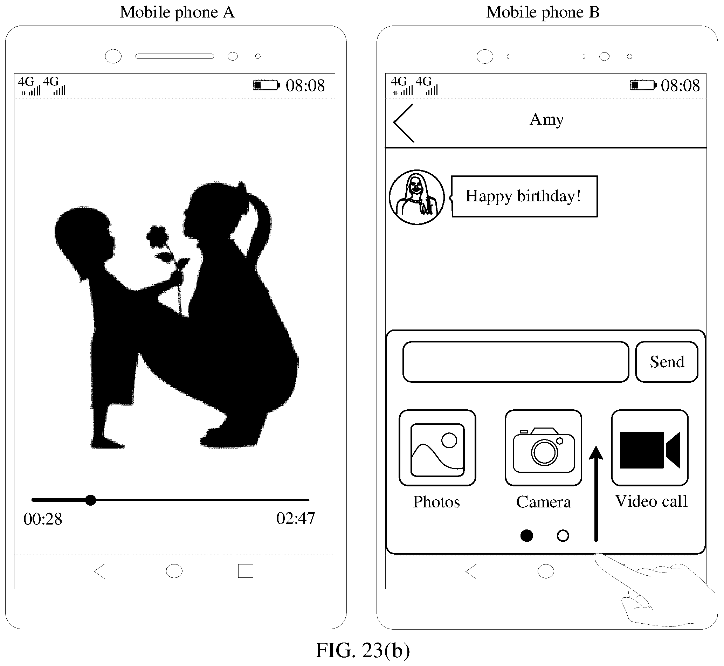

As shown in FIG. 23(a), a mobile phone A and a mobile phone B are currently in a full-screen mode, and the mobile phone A and the mobile phone B are displaying a video playback interface. In this case, the mobile phone B receives a notification message from App 12, and the mobile phone B may display a message prompt box 2301, where the message prompt box 231 includes information about a contact (for example, "Amy") that sends the notification message, and message content (for example, "Happy birthday! "). When the mobile phone B detects an operation of tapping the message prompt box 2301 by a user, the mobile phone A and the mobile phone B may display a GUI shown in FIG. 23(b).

As shown in FIG. 23(b), in response to detecting the operation of tapping the message prompt box 2301 by the user, the mobile phone B may display a chat interface between the user and the contact Amy in App 12, and send indication information to the mobile phone A, where the indication information indicates the mobile phone A and the mobile phone B to exit splicing display. In response to receiving the indication information, the mobile phone A may determine to exit splicing display with the mobile phone B. The mobile phone A may display the video playback interface, and stop sending image information to the mobile phone B.

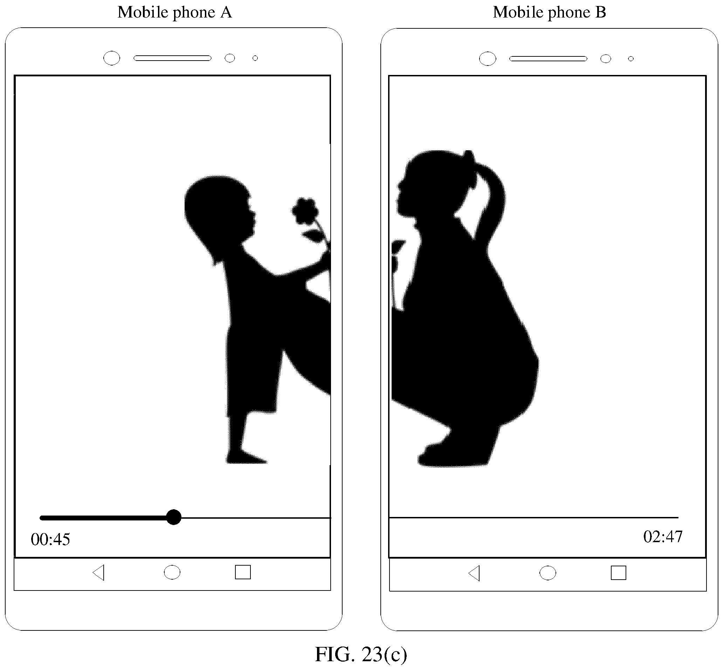

As shown in FIG. 23(c), when the mobile phone B detects an operation of sliding upwards from the lower part of a screen by the user, the mobile phone B may determine that the user expects to exit App 12 (or start App 12 in the background). In this case, the mobile phone B may send indication information to the mobile phone A, where the indication information indicates that no application program is currently running in the foreground of the mobile phone B. In response to receiving the indication information, the mobile phone A may determine to continue to display the video playback interface with the mobile phone B in the full-screen mode.

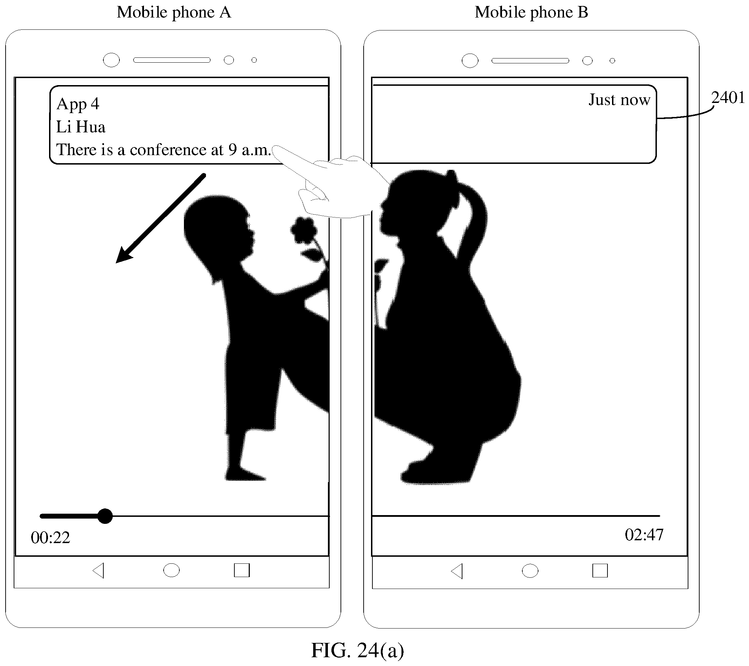

FIG. 24(a) to FIG. 24(c) show another group of GUIs according to an embodiment of this application.

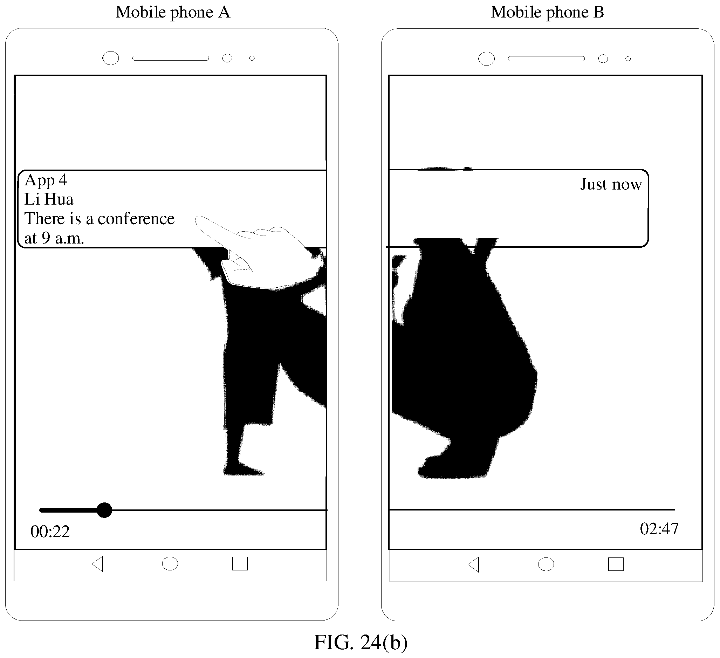

As shown in FIG. 24(a), a mobile phone A and a mobile phone B are currently in a full-screen mode, and the mobile phone A and the mobile phone B are displaying a video playback interface. In this case, after receiving a notification message from App 4, the mobile phone A may display a message prompt box 2401 in the video playback interface through the mobile phone A and the mobile phone B, where the message prompt box 2401 includes information about a contact (for example, "Li Hua") that sends the notification message, and message content (for example, "There is a conference at 9:00 a.m."). When the mobile phone A detects an operation of dragging the message prompt box 2401 to the lower left corner by a user, the mobile phone A and the mobile phone B may display a GUI shown in FIG. 24(b).

As shown in FIG. 24(b), in response to the operation of dragging the message prompt box 2401 to the lower left corner by the user, the message prompt box 2401 displayed on the mobile phone A and the mobile phone B is dragged to a position shown in FIG. 24(b). When the mobile phone A detects that a finger of the user moves up from a display of the mobile phone A or the mobile phone A detects that the user hovers over the message prompt box 2401, the mobile phone A may determine to switch, with the mobile phone B, from the full-screen mode to a dual-application mode to perform splicing display.

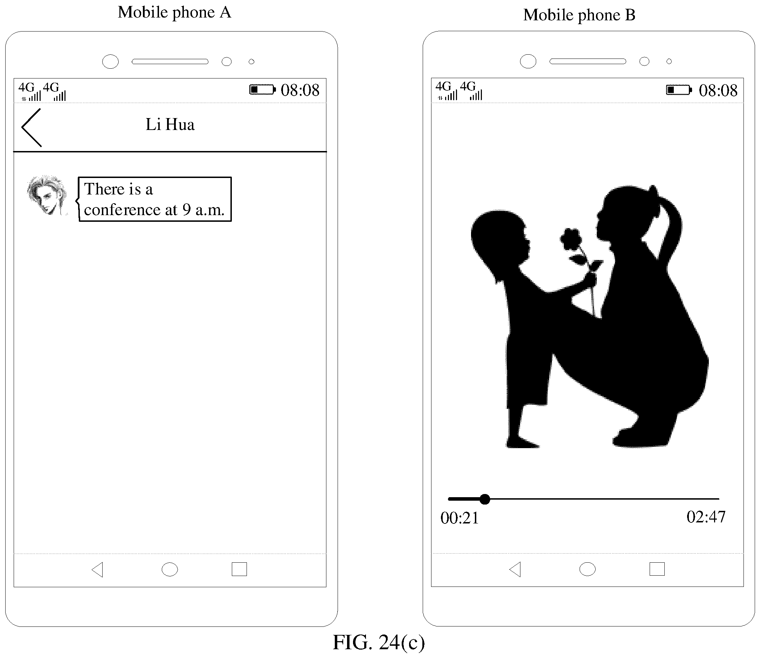

As shown in FIG. 24(c), the mobile phone A may display a chat interface between the user and the contact Li Hua in App 4, and may send image information corresponding to the video playback interface to the mobile phone B. In response to receiving the image information, the mobile phone B may display the video playback interface.

In an embodiment, if the mobile phone A detects an operation of dragging the message prompt box 2401 to the lower right corner by the user, and detects that a finger of the user moves up from the display of the mobile phone A or detects that the user hovers over the message prompt box 2401, the mobile phone A may display the video playback interface, and send, to the mobile phone B, image information corresponding to the chat interface between the user and the contact Li Hua in App 4. In response to receiving the image information, the mobile phone B may display the chat interface between the user and the contact Li Hua in App 4.

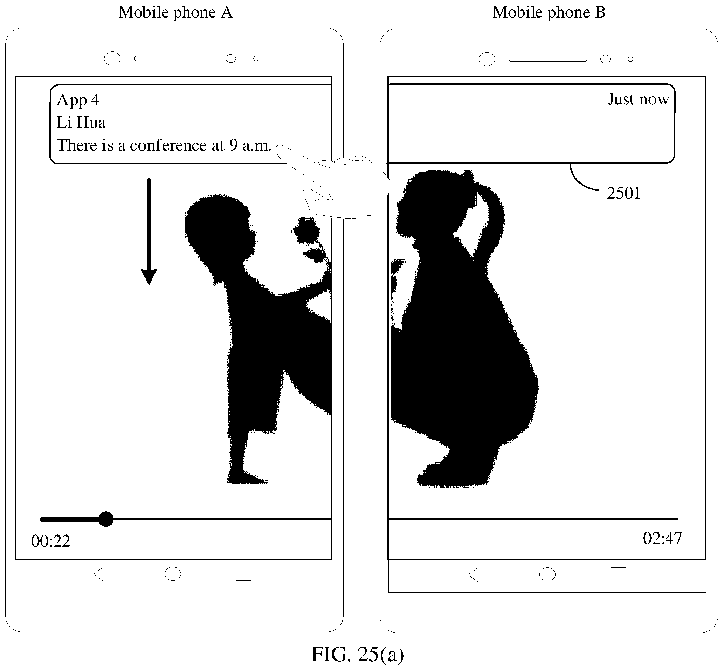

FIG. 25(a) to FIG. 25(c) show another group of GUIs according to an embodiment of this application.

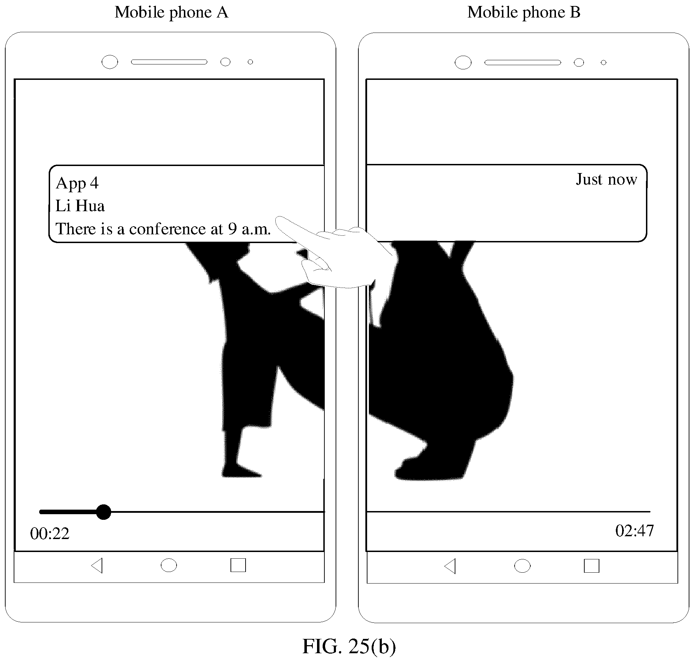

As shown in FIG. 25(a), a mobile phone A and a mobile phone B are currently in a full-screen mode, and the mobile phone A and the mobile phone B are displaying a video playback interface. In this case, after receiving a notification message from App 4, the mobile phone A may display a message prompt box 2501 in the video playback interface through the mobile phone A and the mobile phone B, where the message prompt box 2501 includes information about a contact (for example, "Li Hua") that sends the notification message, and message content (for example, "There is a conference at 9:00 a.m. "). When the mobile phone A detects an operation of dragging the message prompt box 2501 straight down by a user, the mobile phone A and the mobile phone B may display a GUI shown in FIG. 25(b).

As shown in FIG. 25(b), in response to the operation of dragging the message prompt box 2501 straight down by the user, the message prompt box 2501 displayed on the mobile phone A and the mobile phone B is dragged to a position shown in FIG. 25(b). When the mobile phone A detects that a finger of the user moves up from a display of the mobile phone A or the mobile phone A detects that the user hovers over the message prompt box 2501, the mobile phone A may determine to display a chat interface between the user and the contact Li Hua in App 4 with the mobile phone B in the full-screen mode.

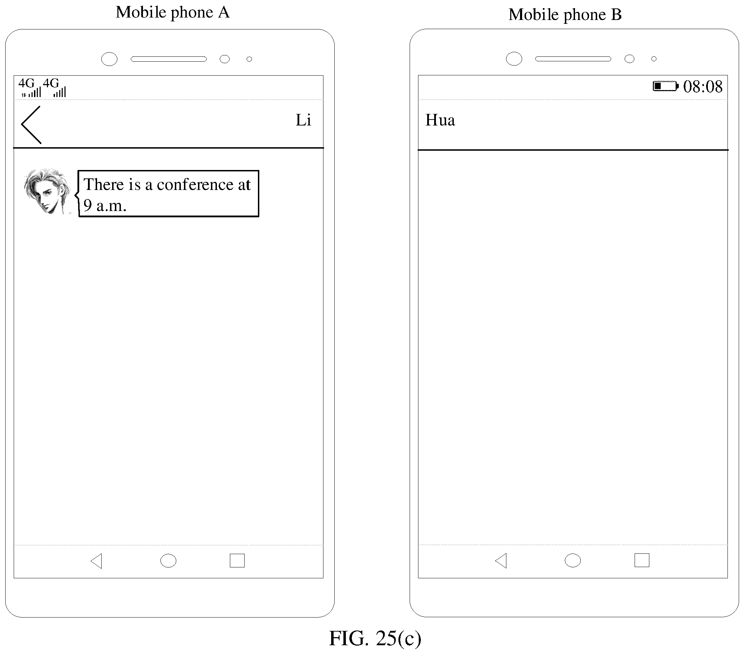

As shown in FIG. 25(c), the mobile phone A and the mobile phone B may display the chat interface between the user and the contact Li Hua in App 4 in the full-screen mode.

In this embodiment of this application, if the mobile phone A receives a notification message of a second application program when the mobile phone A and the mobile phone B display a first application program in the full-screen mode, the mobile phone A may determine, based on a direction in which the user drags a message prompt box, whether to switch to a dual-application mode. If the mobile phone A determines to switch to the dual-application mode, the mobile phone A may further determine, based on the direction of dragging the message prompt box, how to display the first application program and the second application program on the mobile phone A and the mobile phone B.

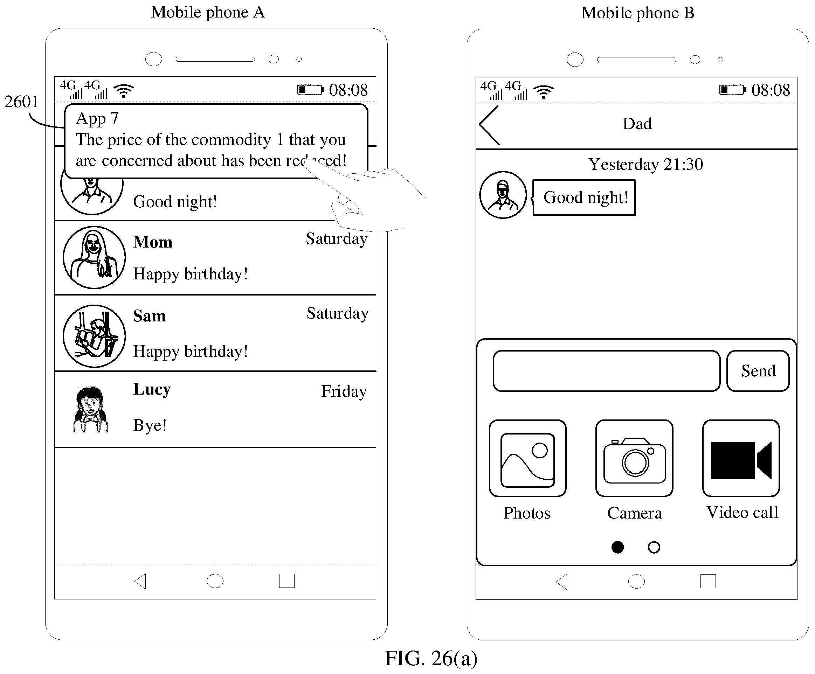

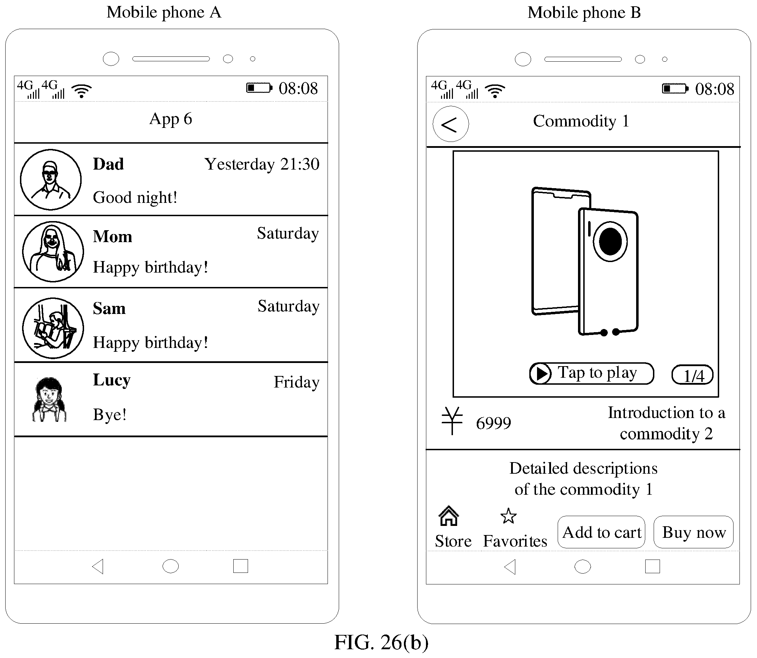

FIG. 26(a) and FIG. 26(b) show another group of GUIs according to an embodiment of this application.

As shown in FIG. 26(a), a mobile phone A and a mobile phone B respectively display, in a parallel mode, a home page of App 6 and a chat interface between a user and a contact Dad in App 6. In this case, the mobile phone A receives a message from App 7. The mobile phone A may display, by using a message prompt box 2601, prompt information "The price of the commodity 1 that you are concerned about has been reduced!". When the mobile phone A detects an operation of tapping the message prompt box 2601 by the user, the mobile phone A and the mobile phone B may display a GUI shown in FIG. 26(b).

As shown in FIG. 26(b), in response to detecting the operation of tapping the message prompt box 2601 by the user, the mobile phone A may determine to switch, with the mobile phone B, from the parallel mode to a dual-application mode to perform splicing display. As shown in FIG. 26(b), the mobile phone A may display the home page of App 6, and send, to the mobile phone B, image information corresponding to a display interface of the commodity 1 in App 7. In response to receiving the image information, the mobile phone B may display the display interface of the commodity 1 in App 7.

In an embodiment, if the mobile phone B detects an operation of sliding from the lower part to the upper part of a screen by the user, the mobile phone B may send a touch event to the mobile phone A. In response to receiving the touch event, the mobile phone A may determine that the mobile phone B detects the operation of sliding from the lower part to the upper part of the screen by the user. In this case, the mobile phone A may determine that the user expects to exit the display interface of App 7 displayed on the mobile phone B to the background. In this case, the mobile phone A may stop sending, to the mobile phone B, the image information corresponding to the display interface of the commodity 1 in App 7. The mobile phone B may display a desktop of the mobile phone B, or the mobile phone A may continue to send, to the mobile phone B, image information corresponding to the chat interface between the user and the contact Dad in App 6, so that the mobile phone A and the mobile phone B continue to perform splicing display in the parallel mode.

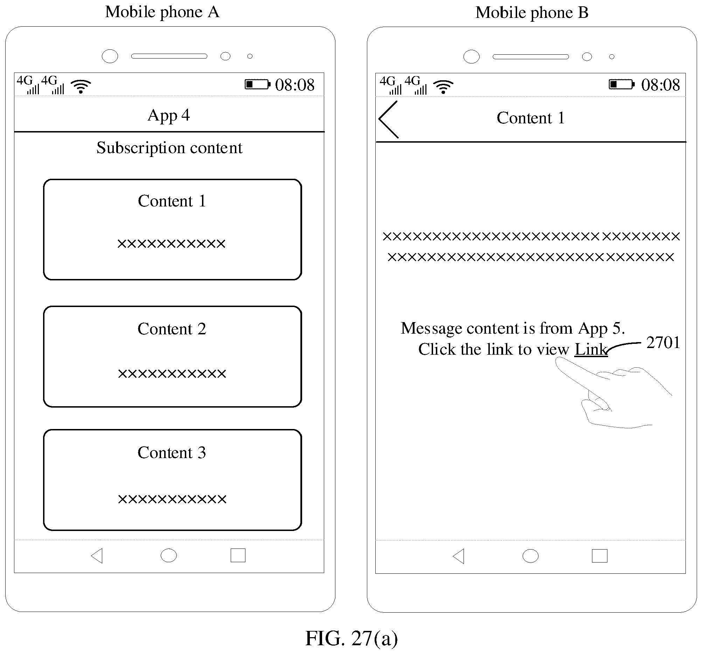

FIG. 27(a) to FIG. 27(c) show another group of GUIs according to an embodiment of this application.

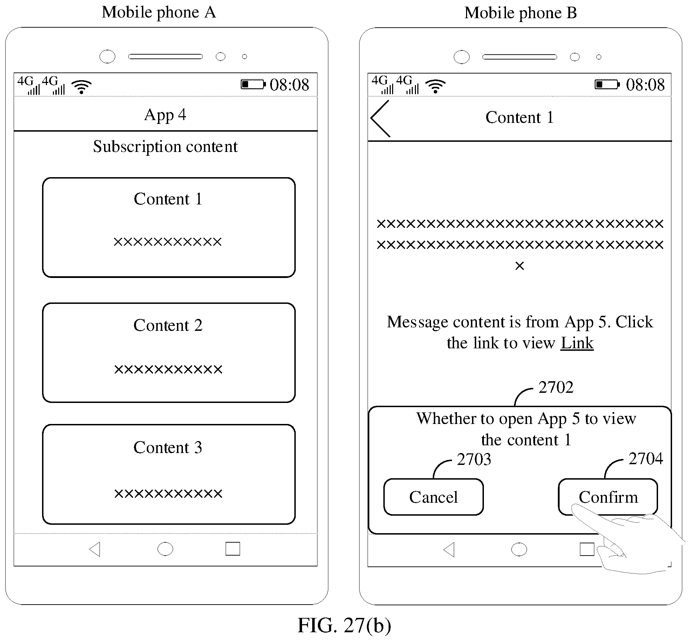

As shown in FIG. 27(a), a mobile phone A and a mobile phone B respectively display, in a parallel mode, a display interface of subscription content in App 4 and a display interface of content 1. The display interface of the content 1 displayed on the mobile phone B includes a link 2701 for viewing the content 1 in App 5. When the mobile phone B detects an operation of tapping the link 2701 by a user, the mobile phone B may display a GUI shown in FIG. 27(b).

As shown in FIG. 27(b), in response to detecting a touch event of the user on a screen of the mobile phone B, the mobile phone B may send the touch event to the mobile phone A. In response to receiving the touch event, the mobile phone A may determine that the user taps the link 2701 on the mobile phone B. In this case, the mobile phone A may send another display interface of the content 1 to the mobile phone B. The another display interface includes a prompt box 2702, and the prompt box 2702 includes prompt information "Whether to open App 5 to view the content 1", a cancel control 2703, and a confirm control 2704. In response to receiving image information corresponding to the another display interface, the mobile phone B may display the image information corresponding to the another display interface of the content 1. As shown in FIG. 27(b), the mobile phone B may display the prompt box 2702. When the mobile phone B detects a tapping operation (where the tapping operation is a tapping operation for the control 2704) of the user on the mobile phone B, the mobile phone B may send another touch event to the mobile phone A. In response to receiving the another touch event, the mobile phone A may determine that the user taps the control 2704, so that the mobile phone A may determine that the user expects to view the content 1 by using App 5. The mobile phone A may determine to switch, with the mobile phone B, from the parallel mode to a dual-application mode to perform splicing display.

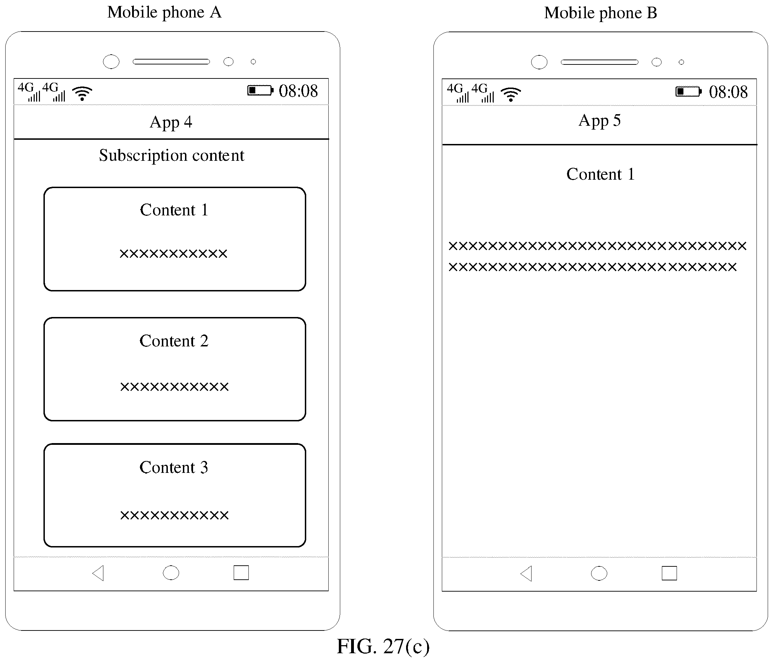

As shown in FIG. 27(c), the mobile phone A may continue to display the display interface of the subscription content in App 4, and send, to the mobile phone B, image information corresponding to the display interface of the content 1 in App 5. In response to receiving the image information, the mobile phone B may display the display interface of the content 1 in App 5.

The foregoing describes several groups of GUIs provided in embodiments of this application with reference to the GUIs shown in FIG. 3(a) to FIG. 27(c). The following describes an interaction process between a source device and a sink device in embodiments of this application with reference to the accompanying drawings.

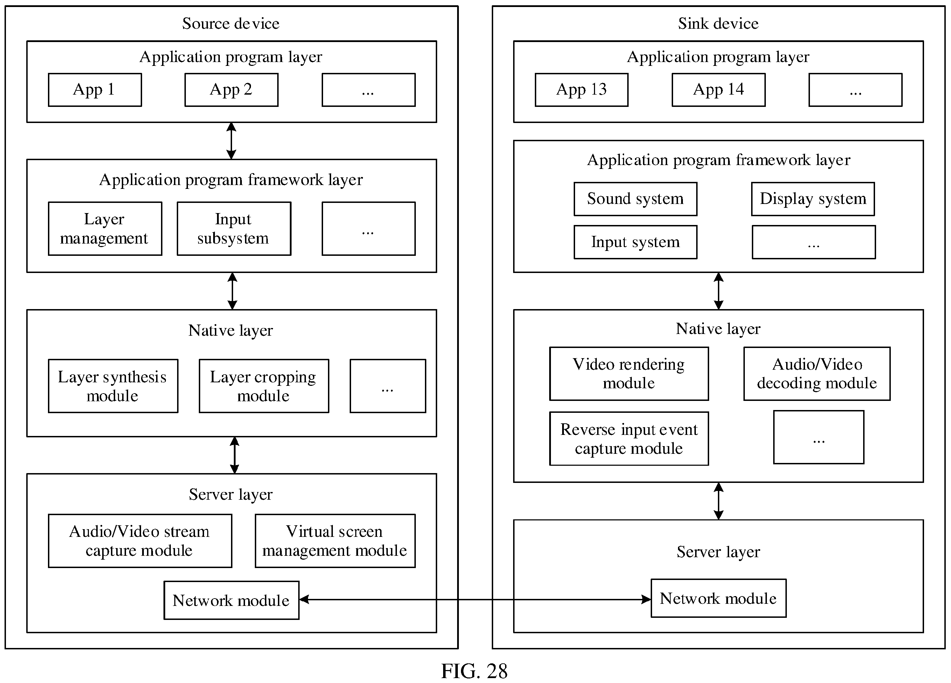

FIG. 28 is a schematic diagram of structures of a source device and a sink device according to an embodiment of this application. The source device may be the mobile phone A shown in FIG. 3(a) to FIG. 3(d), and the sink device may be the mobile phone B shown in FIG. 3(a) to FIG. 3(d). Alternatively, the source device may be the mobile phone B shown in FIG. 10(a) and FIG. 10(b), and the sink device may be the mobile phone A shown in FIG. 10(a) and FIG. 10(b).

The source device includes an application program (App) layer, an application program framework (Framework) layer, a native (Native) layer, and a server (Server) layer. The App layer may include a plurality of application programs. The framework layer includes a layer (layer) management and an input (input) subsystem. The layer management is configured to manage layer information corresponding to an application program interface. The input subsystem is configured to process a user input event or a reverse input event. The native layer includes a layer synthesis module and a layer cropping module. The layer synthesis module is configured to synthesize an image based on the layer information, and the layer cropping module is configured to crop a canvas based on the layer information. The server layer includes an audio/video stream capture module, a virtual screen management module, and a network module. The audio/video stream capture module is configured to capture an audio stream or a video stream. The virtual screen management module is configured to manage creation and release of a virtual screen (a display). The network module is configured to transmit the audio stream or the video stream to the sink device and receive the reverse input event sent by the sink device.

It should be understood that functions implemented by modules at the native layer and the server layer of the source device in FIG. 28 may depend on modules or driver hardware at the system library and the kernel layer in FIG. 2. For example, the layer synthesis module and the layer cropping module at the native layer may depend on the media library, the three-dimensional graphics processing library, an image processing library, and the like in the system library in FIG. 2, and the audio/video stream capture module and the virtual screen management module at the server layer may depend on the display driver and the audio driver at the kernel layer, and the three-dimensional graphics processing library, the image processing library, and the like in the system library in FIG. 2.

The sink device includes an application program (App) layer, an application program framework (Framework) layer, a native (Native) layer, and a server (Server) layer. The framework layer includes a sound system, an input system, and a display system. The sound system is configured to play a sound after audio decoding, the display system is configured to display an interface after video decoding, and the input system is configured to receive a touch operation of a user. The native layer includes a video rendering module, an audio/video decoding module, and a reverse input event capture module. The audio/video decoding module is configured to decode the audio stream or the video stream received from a source end. The video rendering module is configured to render and display a decoded video stream. The reverse input event capture module is configured to capture the reverse input event of the user. The server layer includes a network module. The network module is configured to receive the audio stream or the video stream sent by the source device and send the reverse input event to the source device.

It should be understood that functions implemented by modules at the native layer of the sink device in FIG. 28 may depend on modules or driver hardware at the system library and the kernel layer in FIG. 2. For example, the video rendering module may depend on the three-dimensional graphics processing library and the image processing library in the system library, and the display driver at the kernel layer in FIG. 2. The audio/video decoding module may depend on the three-dimensional graphics processing library, the image processing library, and the like in the system library in FIG. 2. The reverse input event capture module may depend on a touch panel (touch panel, TP) driver and the like at the hardware layer in FIG. 2.

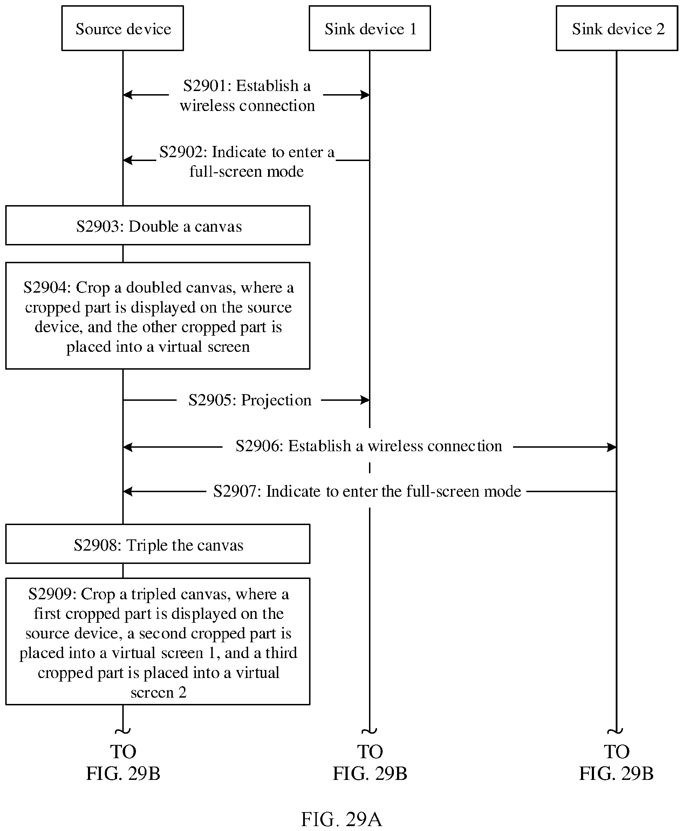

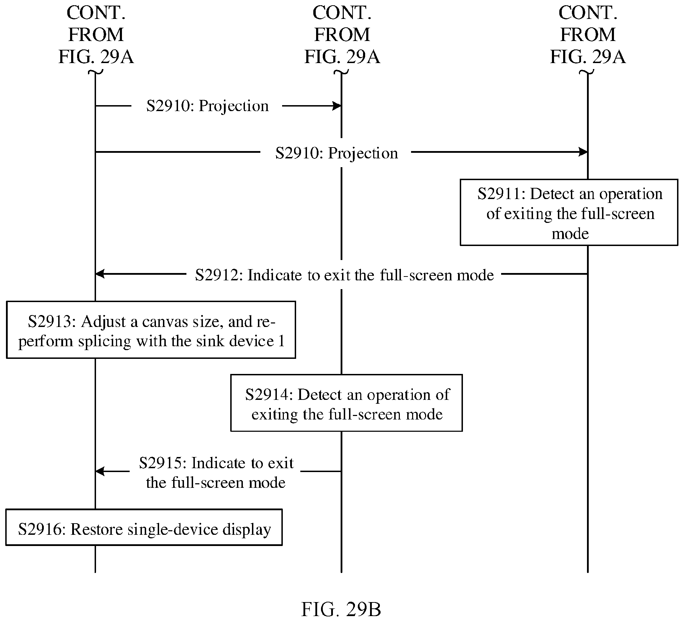

FIG. 29A and FIG. 29B are a schematic flowchart of a method 2900 in which a source device and a sink device perform display in a full-screen mode. The method 2900 includes the following steps.

S2901: The source device and a sink device 1 establish a wireless connection.

For example, as shown in FIG. 3(a), when a mobile phone A detects that a distance between the mobile phone A and a mobile phone B is less than or equal to a preset distance, the mobile phone A and the mobile phone B may perform networking in a near field wireless connection manner, so that the mobile phone A and the mobile phone B establish a wireless connection. For example, the mobile phone A and the mobile phone B may perform AP networking, or the mobile phone A and the mobile phone B may perform P2P networking.

S2902: After the sink device 1 detects a first operation of a user, the sink device 1 indicates the source device to enter the full-screen mode.

For example, as shown in FIG. 3(a), the mobile phone A is the source device, and the mobile phone B is the sink device 1. When the mobile phone B detects an operation of sliding to the right by the user, the mobile phone B may send indication information to the mobile phone A, where the indication information indicates that the mobile phone B expects to enter the full-screen mode.

For example, as shown in FIG. 11(b), a mobile phone A is the source device, and a mobile phone B is the sink device 1. After the mobile phone B detects that the user drags a control 1102 to partially or completely overlap an icon of the full-screen mode, the mobile phone B may send indication information to the mobile phone A, where the indication information indicates that the mobile phone B expects to enter the full-screen mode.

For example, as shown in FIG. 10(a), a mobile phone B is the source device, and a mobile phone A is the sink device 1. When the mobile phone A detects an operation of sliding to the left by the user, the mobile phone A may send indication information to the mobile phone B, where the indication information indicates that the mobile phone A expects to enter the full-screen mode.

For example, as shown in FIG. 12(b), a mobile phone B is the source device, and a mobile phone A is the sink device 1. After the mobile phone A detects that the user drags a control 1201 to partially or completely overlap an icon of the full-screen mode, the mobile phone A may send indication information to the mobile phone B, where the indication information indicates that the mobile phone A expects to enter the full-screen mode.

In this embodiment of this application, when the sink device 1 detects an operation of sliding to the right by the user or the sink device 1 detects that a control is dragged to the right and partially or completely overlaps an icon of a mode, the sink device may determine that a device on a left side of the sink device is the source device. When the sink device 1 detects an operation of sliding to the left by the user or the sink device 1 detects that a control is dragged to the left and partially or completely overlaps an icon of a mode, the sink device may determine that a device on a right side of the sink device is the source device.

It should be understood that, in this embodiment of this application, the source device may determine a distance between the source device and the sink device 1 and position information between the source device and the sink device 1 by using positioning technologies such as Bluetooth, ultra-wideband (ultra-wideband, UWB), or ultrasonic wave. For a specific implementation process, refer to the current technology. For brevity, details are not described herein again.

For example, the source device has a Bluetooth/Wi-Fi antenna array (or the source device has an angle of arrival (angle of arrival, AOA) computing capability), and the sink device 1 has a Bluetooth/Wi-Fi antenna array (or the sink device 1 has an AOA computing capability). The source device may calculate a position of the sink device 1. The Bluetooth/Wi-Fi antenna array of the source device may receive a wireless signal of the sink device 1, and calculate the position of the sink device 1 according to formulas (1) and (2):

$$\varphi = \left(2\pi d \cos(\theta)\right) / \lambda \quad (1)$$

$$\theta = \cos^{-1}\left(\left(\varphi \lambda\right) / \left(2\pi d\right)\right) \quad (2)$$

d is a distance between the Bluetooth/Wi-Fi antenna array of the source device and the Bluetooth/Wi-Fi antenna of the sink device 1, $\varphi$ is a phase difference between the Bluetooth/Wi-Fi antenna array of the source device and the Bluetooth/Wi-Fi antenna of the sink device 1, $\lambda$ is a wavelength of a Bluetooth signal sent by the sink device 1, and $\theta$ is an angle of arrival. It should be understood that, in this embodiment of this application, that the source device calculates the position of the sink device 1 may be further understood as that the source device may calculate a connection position between the Bluetooth/Wi-Fi antenna array of the source device and the Bluetooth/Wi-Fi antenna of the sink device 1.

It should be understood that the sink device 1 may also calculate a position of the source device according to the foregoing formulas (1) and (2).

In an embodiment, when the sink device 1 detects the first operation of the user, the sink device 1 may send a user datagram protocol (user datagram protocol, UDP) data packet to the source device. The UDP data packet may carry indication information, and the indication information indicates that the sink device 1 expects to enter the full-screen mode. The UDP data packet includes a data part of an IP datagram. The data part of the IP datagram may include an extensible bit. The sink device 1 and the source device may agree on content of a specific extensible bit. When the specific extensible bit is 1, the source device may learn that the sink device 1 expects to enter the full-screen mode.

In an embodiment, when the sink device 1 detects the first operation of the user, the sink device 1 may send a transmission control protocol (transmission control protocol, TCP) packet to the source device. The TCP packet may carry indication information, and the indication information indicates that the sink device 1 expects to enter the full-screen mode. The TCP packet includes a TCP header and a TCP data part, where the TCP header includes a reserved field. The sink device 1 and the source device may agree on content of a specific reserved field. When a bit of the specific reserved field is 1, the source device may learn that the sink device 1 expects to enter the full-screen mode.

S2903: In response to receiving an indication from the sink device 1, the source device doubles a canvas in a current interface.

For example, a size of the canvas originally displayed on the source device is 1080x2340. After the source device receives the indication information of the sink device 1, the source device may determine that the sink device 1 expects to form dual-screen splicing with the source device. In this case, the source device expands the size of the display canvas of the primary device to (1080×2)×2340, that is, 2160×2340.

It should be understood that, in this embodiment of this application, after the source device receives the indication information of the sink device 1, if the source device and the sink device 1 are horizontally distributed (or left-right distributed), the source device may expand the size of the display canvas of the primary device to 2160×2340. If the source device determines that the source device and the sink device 1 are vertically distributed (or up-down distributed), the source device may also expand the size of the display canvas of the primary device to 1080×(2340×2), that is, 1080×4680. The following provides descriptions by using an example in which the source device and the sink device 1 (and a sink device 2) are horizontally distributed.

S2904: The source device crops a doubled canvas, where a cropped part is displayed on the source device, and the other cropped part is placed into a virtual screen (a display 1) created by the source device.

In this embodiment of this application, manners in which the source device crops the expanded canvas may include but are not limited to a segmentation manner and a mask manner.

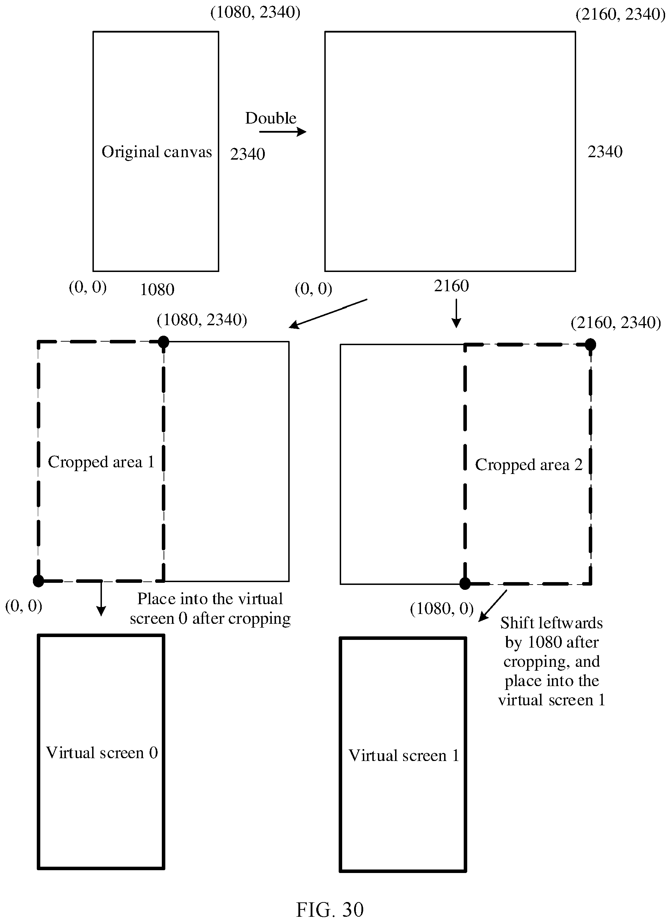

FIG. 30 shows a process in which the source device performs cropping in the segmentation manner and displays a cropped canvas on a virtual screen. Layer information corresponding to each display (display image) is managed by an Android component SurfaceFlinger. Because no application is started in the display, the display does not have the layer information. The SurfaceFlinger synthesizes displays in sequence each time when performing image synthesis. For example, when the SurfaceFlinger synthesizes a display 0, a layer is cropped, where a cropped area 1 is [0, 0, 1080, 2340]. The source device may place a canvas shown in the cropped area 1 in the display 0, so that the source device may display the display 0. When the SurfaceFlinger synthesizes the display 1, all layer information is copied from display 0 and then cropped, where a cropped area 2 is [1080, 0, 2160, 2340]. The cropped area 2 is shifted leftwards by 1080 and then placed into the display 1. The source device may project the display 1 to the sink device 1.

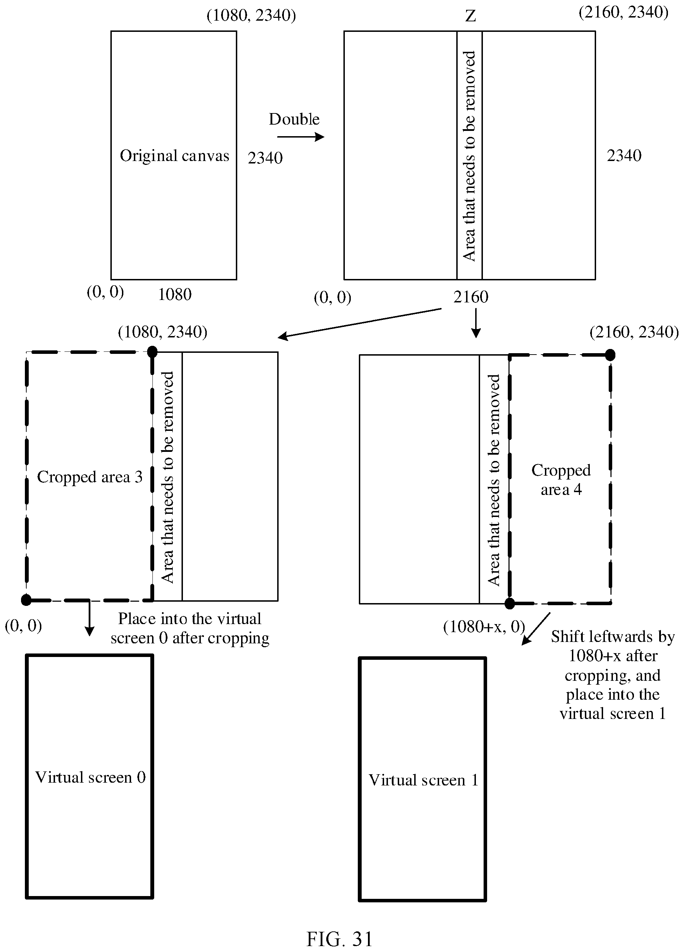

FIG. 31 shows a process in which the source device performs cropping in the mask manner and displays a cropped canvas on a virtual screen. The source device first determines, based on the distance between the source device and the sink device 1, an area (for example, an area 402 shown in FIG. 4(b)) that needs to be removed. It should be understood that, for a process in which the source device determines a pixel value of the area that needs to be removed, refer to the descriptions in the foregoing embodiment. For brevity, details are not described herein again. It is assumed that the pixel value that is for cropping and that is determined by a source end is x.

For example, when a SurfaceFlinger synthesizes a display 0, a layer is cropped, where a cropped area 3 is [0, 0, 1080, 2340]. The source device may place a canvas shown in the cropped area 3 in the display 0, so that the source device may display the display 0. When the SurfaceFlinger synthesizes the display 1, all layer information is copied from the display 0 and then cropped, where a cropped area 4 is [1080+x, 0, 2160, 2340]. The cropped area is shifted leftwards by 1080+x and then placed into the display 1. The source device may project the display 1 to the sink device 1.

S2905: The source device projects the display 1 to the sink device 1.

In an embodiment, if a screen resolution of the sink device 1 is 1080×2340, after receiving canvas information that corresponds to the cropped area 4 and that is sent by the source device, the sink device 1 may display a canvas in the middle and leave black edges with a size of x/2 on both sides of a screen.

In an embodiment, after receiving canvas information that corresponds to the cropped area 4 and that is sent by the source device, the sink device 1 may also display a canvas on a left side of a screen and leave a black edge with a size of x on a right side of the screen.

In an embodiment, after receiving canvas information that corresponds to the cropped area 4 and that is sent by the source device, the sink device 1 may also display a canvas on a right side of a screen and leave a black edge with a size of x on a left side of the screen.

In an embodiment, when indicating, to the source device, that the sink device 1 expects to join the full-screen mode, the sink device 1 may further send information about the screen resolution of the sink device 1 to the source device. After learning of the screen resolution of the sink device 1 and the distance between the source device and the sink device 1, the source device may first expand the size of the canvas to 2160×2340. The source device may horizontally stretch the expanded canvas to (2160+x)×2340 based on the pixel value (for example, x) that is for cropping. In this way, the cropped area 3 may be [0, 0, 1080, 2340], and a size of the cropped area 4 is [1080+x, 0, 2160+x, 2340]. The source device may shift the cropped area 4 leftwards by 1080+x, and then place the cropped area 4 into the display 1. The source device may project the display 1 to the sink device 1. The sink device 1 does not need to leave a black edge on the screen when displaying the display 1.

It should be understood that, for a process in which the source device projects the display 1 to the sink device 1, refer to an existing projection technology. For brevity, details are not described herein again.

In an embodiment, in S2902, the sink device 1 may trigger the source device and the sink device to enter the full-screen mode. In this embodiment of this application, the source device may also trigger the source device and the sink device 1 to enter the full-screen mode. For example, when the source device detects an operation of sliding from left to right on a screen by the user, the source device may send a part of segmented image information and indication information to the sink device 1, where the indication information indicates the source device and the sink device 1 to enter the full-screen mode. In response to receiving the part of segmented image information and the indication information, the sink device 1 displays the image information.

S2906: The source device and the sink device 2 establish a wireless connection.

For example, as shown in FIG. 3(a), when a mobile phone C approaches the mobile phone B, if the mobile phone B determines, in an RSSI ranging manner, that a distance between the mobile phone C and the mobile phone B is less than or equal to the preset distance, and the mobile phone A, the mobile phone B, and the mobile phone C may perform networking in the near field wireless connection manner, so that the mobile phone A, the mobile phone B, and the mobile phone B establish wireless connections. For example, the mobile phone A, the mobile phone B, and the mobile phone C may perform AP networking, or the mobile phone A, the mobile phone B, and the mobile phone C may perform P2P networking.

S2907: After the sink device 2 detects a second operation of the user, the sink device 2 indicates the source device to enter the full-screen mode.

For example, as shown in FIG. 3(d), the mobile phone A is the source device, the mobile phone B is the sink device 1, and the mobile phone C is the sink device 2. When the mobile phone C detects an operation of sliding to the right by the user, the mobile phone C may send indication information to the mobile phone A, where the indication information indicates that the mobile phone C expects to enter the full-screen mode.

It should be understood that, for a process in which the sink device 2 sends indication information (where the indication information indicates that the sink device 2 expects to enter the full-screen mode) to the source device, refer to the descriptions in S2902. Details are not described herein again.

In this embodiment of this application, when the sink device 2 detects an operation of sliding to the right by the user or the sink device 2 detects that a control is dragged to the right and partially or completely overlaps an icon of a mode, the sink device may determine that a device on a left side of the sink device is the source device. If the sink device 2 detects that there are a plurality of devices on the left side of the sink device 2, the sink device 2 may use a leftmost device as the source device.

When the sink device 2 detects an operation of sliding to the left by the user or the sink device 2 detects that a control is dragged by the user to the left and partially or completely overlaps an icon of a mode, the sink device 2 may determine that a device on a right side of the sink device 2 is the source device. If the sink device 2 detects that there are a plurality of devices on the right side of the sink device 2, the sink device 2 may use a rightmost device as the source device.

In an embodiment, the sink device 2 may further send information about a distance between the sink device 1 and the sink device 2 to the source device.

For example, the sink device 2 may send a UDP data packet to the source device, where the UDP data packet may carry the information about the distance between the sink device 1 and the sink device 2. The UDP data packet includes a data part of an IP datagram. The data part of the IP datagram may include an extensible bit. The sink device 2 and the source device may agree on content of a specific extensible bit. For example, when the specific extensible bit is 000, the source device may learn that the distance between the sink device 1 and the sink device 2 is 1 centimeter; when the specific extensible bit is 001, the source device may learn that the distance between the sink device 1 and the sink device 2 is 2 centimeters; when the specific extensible bit is 011, the source device may learn that the distance between the sink device 1 and the sink device 2 is 3 centimeters.

S2908: In response to receiving an indication from the sink device 2, the source device triples the canvas in the current interface.

For example, a size of the canvas originally displayed on the source device is $1080 \times 2340$. After the source device receives the indication information of the sink device 2, the source device may determine that the sink device 1 and the sink device 2 expect to form triple-screen splicing with the source device. In this case, the source device expands the size of the display canvas of the primary device to $(1080 \times 3) \times 2340$, that is, $3240 \times 2340$.

S2909: The source device crops a tripled canvas, where a first cropped part is displayed on the source device, a second cropped part is placed into a virtual screen (a display 1) created by the source device, and a third cropped part is placed into another virtual screen (a display 2) created by the source device.

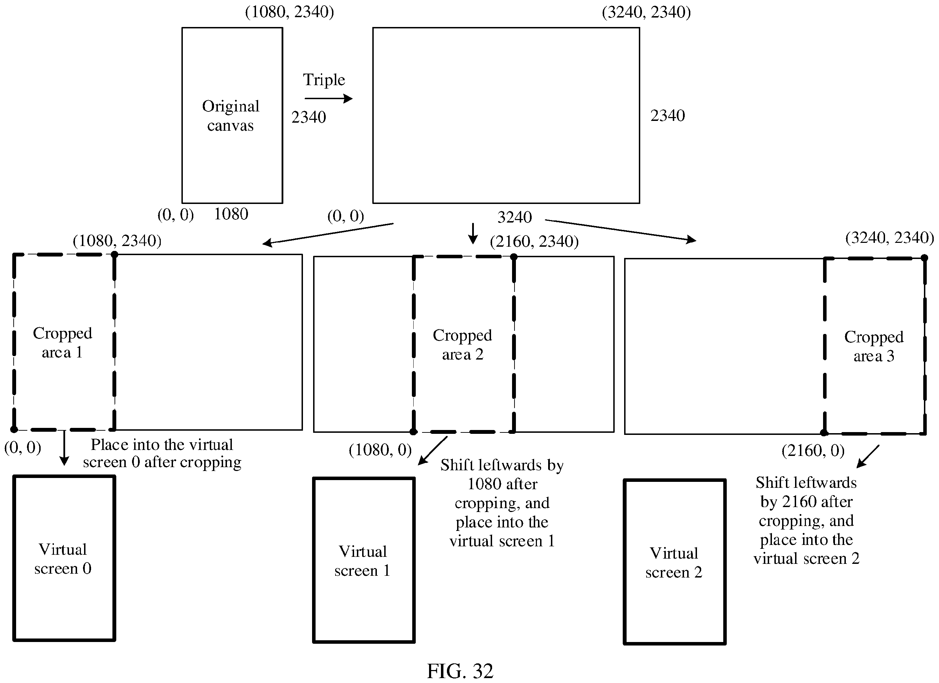

For a segmentation manner, as shown in FIG. 32, when a SurfaceFlinger synthesizes a display 0, a layer is cropped, where a cropped area 1 is [0, 0, 1080, 2340]. The source device may place a canvas shown in the cropped area 1 into the display 0, so that the source device can display the canvas in the display 0. When the SurfaceFlinger synthesizes the display 1, all layer information is copied from the display 0 and then cropped, where a cropped area 2 is [1080, 0, 2160, 2340]. The source device may shift the cropped area 2 leftwards by 1080, and then place the cropped area 2 into the display 1. The source device may project a canvas in the display 1 to the sink device 1.

When the SurfaceFlinger synthesizes the display 2, all layer information is copied from the display 0 and then cropped, where a cropped area 3 is [2160, 0, 3240, 2340]. The source device may shift the cropped area 3 leftwards by 2160, and then place the cropped area 3 into the display 2. The source device may project a canvas in the display 2 to the sink device 2.

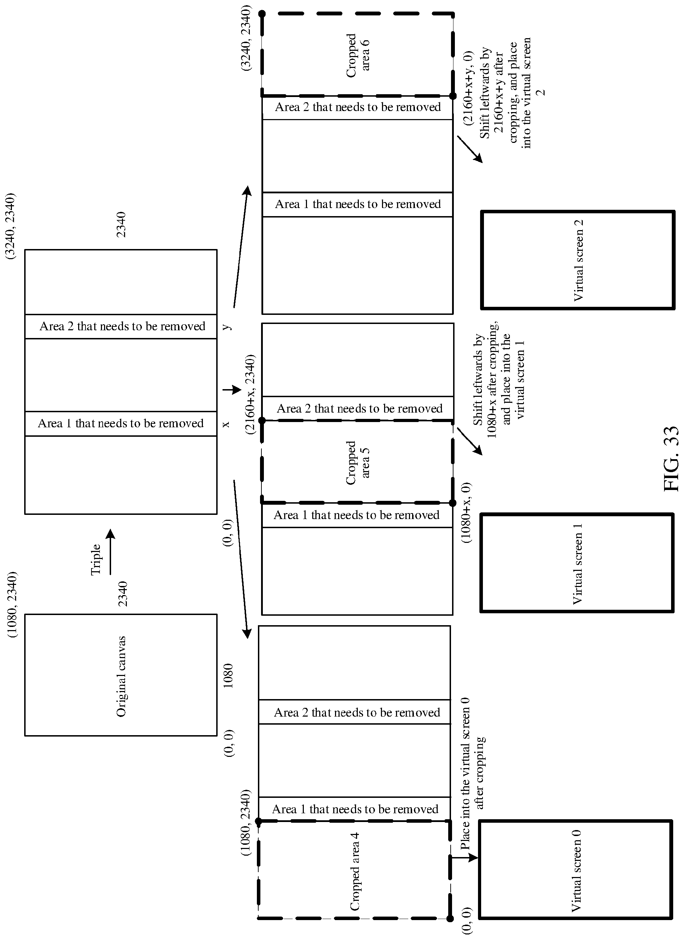

For a mask manner, as shown in FIG. 33, the source device first determines, based on the distance between the source device and the sink device 1 and the distance between the sink device 1 and the sink device 2, two areas (for example, an area 405 and an area 407 shown in FIG. 4(d)) that need to be removed. It should be understood that, for a process in which the source device determines pixel values of the areas that need to be removed, refer to the descriptions in the foregoing embodiment. For brevity, details are not described herein again. It is assumed that the pixel values that are for cropping and that are determined by a source end are x and y.

When a SurfaceFlinger synthesizes a display 0, a layer is cropped, where a cropped area 4 is [0, 0, 1080, 2340]. The source device may place a canvas shown in the cropped area 4 into the display 0, so that the source device can display the canvas in the display 0.

When the SurfaceFlinger synthesizes the display 1, all layer information is copied from the display 0 and then cropped, where a cropped area 5 is [1080+x, 0, 2160+x, 2340]. The source device may shift the cropped area 5 leftwards by 1080+x, and then place the cropped area 5 into the display 1. The source device may project a canvas in the display 1 to the sink device 1.

When the SurfaceFlinger synthesizes the display 2, all layer information is copied from the display 0 and then cropped, where a cropped area 6 is [2160+x+y, 0, 3240, 2340]. The source device may shift the cropped area 6 leftwards by 2160+x+y, and then place the cropped area 6 into the display 2. The source device may project a canvas in the display 2 to the sink device 2.

It should be understood that FIG. 33 is merely a manner of cropping the expanded canvas in the mask manner. This embodiment of this application is not limited thereto. For example, the cropped area 5 may alternatively be [1080+x, 0, 2160, 2340]. The source device may shift the cropped area 5 leftwards by 1080+x, and then place the cropped area 5 into the display 1. The source device may project a canvas in the display 1 to the sink device 1.

The cropped area 6 may alternatively be [2160+y, 0, 3240, 2340]. The source device may shift the cropped area 6 leftwards by 2160+y, and place the cropped area 6 into the display 2. The source device may project a canvas in the display 2 to the sink device 2.

S2910: The source device projects the display 1 to the sink device 1, and projects the display 2 to the sink device 2.

It should be understood that, for a process in which the source device projects the display 1 to the sink device 1 and projects the display 2 to the sink device 2, refer to the process in S2905. Details are not described herein again.

It should be understood that, for a process in which the source device projects the display 1 to the sink device 1 and projects the display 2 to the sink device 2, refer to an existing projection technology. For brevity, details are not described herein again.

S2911: The sink device 2 detects an operation of the user for enabling the sink device 2 to exit the full-screen mode.

For example, as shown in FIG. 5(a), the operation may be an operation, detected by a mobile phone C, of tapping an exit control by the user.

S2912: In response to detecting the operation, the sink device 2 sends indication information to the source device, where the indication information indicates that the sink device 2 exits the full-screen mode.

In an embodiment, as shown in FIG. 5(a), the exit control may be drawn by the source device and added to the expanded canvas. When detecting the operation, the sink device 2 may obtain a touch event of the user and corresponding coordinates. The sink device 2 may send the touch event and converted coordinates to the source device.

For example, if the source device, the sink device 1, and the sink device 2 perform full-screen display in the segmentation manner, when the sink device 2 detects that the user performs a tapping operation at a position (100, 100) on a screen, the sink device determines an event as a touch event, and the coordinates are converted into (100+2160, 100), that is, (2260, 100). In this way, the sink device 2 may send the touch event and the converted coordinates to the source device. After receiving the touch event and the converted coordinates, the source device may determine that the user taps the exit control on the sink device 2, and then perform S2913.

In an embodiment, if the source device, the sink device 1, and the sink device 2 perform full-screen display in the mask manner, and the cropped area 6 determined by the source device is [2160+x+y, 0, 3240, 2340], when the sink device 2 detects that the user performs a tapping operation at a position (100, 100) on a screen, the sink device determines an event as a touch event, and the coordinates are converted into (100+2160+x+y, 100), that is, (2260+x+y, 100).

For example, when detecting the operation, the sink device 2 may send a UDP data packet to the source device. The UDP data packet may carry information about the converted coordinates, and the indication information indicates that the sink device 2 exits the full-screen mode. The UDP data packet includes a data part of an IP datagram. The data part of the IP datagram may include an extensible bit. The sink device 2 and the source device may agree on content of a specific extensible bit. For example, when the specific extensible bit is 1, it indicates that the touch event is a tapping event. For another example, the sink device 2 may encode information about the converted coordinates by using an encoding manner such as GBK, ISO8859-1, or Unicode (for example, UTF-8 or UTF-16). The source device may learn of, based on information in the extensible bit, the touch event detected by the sink device 2 and the information about the converted coordinates. In this way, the source device may determine that the sink device 2 detects the operation of the user for enabling the sink device 2 to exit the full-screen mode.

In an embodiment, as shown in FIG. 5(a), the exit control may alternatively be drawn by the sink device 2. When the sink device 2 detects that the user taps the exit control, the sink device 2 may send indication information to the source device, where the indication information indicates that the sink device 2 exits the full-screen mode.

For example, when detecting the operation, the sink device 2 may send a UDP data packet to the source device, where the UDP data packet may carry the indication information, and the indication information indicates that the sink device 2 exits the full-screen mode. The UDP data packet includes a data part of an IP datagram. The data part of the IP datagram may include an extensible bit. The sink device 2 and the source device may agree on content of a specific extensible bit. When the specific extensible bit is 1, the source device may learn that the sink device 2 exits the full-screen mode.

S2913: In response to receiving the indication information, the source device adjusts a canvas size, and re-performs splicing with the sink device 1.

It should be understood that after receiving the indication information, the source device may perform the foregoing operations S2903 to S2905. For brevity, details are not described herein again.

S2914: The sink device 1 detects an operation of the user for enabling the sink device 1 to exit the full-screen mode.

For example, as shown in FIG. 5(b), the operation may be an operation, detected by a mobile phone B, of tapping an exit control by the user.

S2915: In response to detecting the operation, the sink device 1 sends indication information to the source device, where the indication information indicates that the sink device 1 exits the full-screen mode.

In an embodiment, as shown in FIG. 5(a), the exit control may be drawn by the source device and added to the expanded canvas. When detecting the operation, the sink device 1 may obtain a touch event of the user and corresponding coordinates. The sink device 1 may send the touch event and converted coordinates to the source end. The source device may determine, based on the touch event and the converted coordinates, that the sink device 1 detects that the user taps the exit control.

For example, if the source device, the sink device 1, and the sink device 2 perform full-screen display in the segmentation manner, when the sink device 1 detects that the user performs a tapping operation at a position (100, 100) on the screen, the sink device determines the touch event as a tapping event of the user, and the coordinates are converted into (100+1080, 100), that is, (1180, 100). In this way, the sink device 1 may send the touch event and the converted coordinates to the source device. After receiving the touch event and the converted coordinates, the source device may determine that the user taps the exit control on the sink device 1, and then perform S2916.

In an embodiment, if the source device, the sink device 1, and the sink device 2 perform full-screen display in the mask manner, and the cropped area 5 determined by the source device is [1080+x, 0, 2160+x, 2340], when the sink device 2 detects that the user performs a tapping operation at a position (100, 100) on the screen, the sink device determines an event as a touch event, and the coordinates are converted into (100+1080+x, 100), that is, (1180+x, 100).

It should be understood that, for a process in which the sink device 1 sends the indication information to the source device, refer to the descriptions in S2912. Details are not described herein again.

S2916: In response to receiving the indication information, the source device does not expand the canvas, and restores single-device display.

In this embodiment of this application, a plurality of devices may be wirelessly networked, and a preset gesture is used to trigger splicing of screens of the plurality of devices, to implement the full-screen mode on the plurality of devices, and help improve user experience.

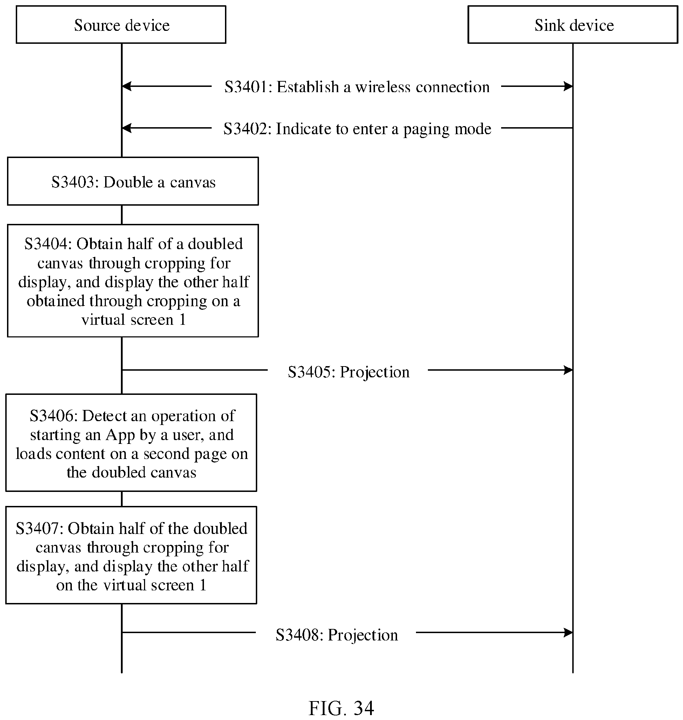

FIG. 34 is a schematic flowchart of a method 3400 in which a source device and a sink device perform display in a paging mode. The method 3400 includes the following steps.

S3401: The source device and the sink device establish a wireless connection.

It should be understood that, for S3401, refer to the process of S2901. For brevity, details are not described herein again.

S3402: After the sink device detects a third operation of a user, the sink device indicates the source device to perform splicing display.

For example, as shown in FIG. 8(a), an icon of the paging mode displayed on a mobile phone B may be drawn by a mobile phone A. After placing a cropped canvas into a display 1, the mobile phone A may add an icon of a parallel mode, an icon of a dual-application mode, the icon of the paging mode, and an exit control to the cropped canvas.

In an embodiment, when detecting an operation of tapping the paging mode, the mobile phone B may obtain a touch event of the user and corresponding coordinates. The mobile phone B may send the touch event and converted coordinates to the mobile phone A. The mobile phone A may switch from a full-screen mode to the paging mode based on the touch event and the converted coordinates.

For example, if the mobile phone B detects that the user performs a tapping operation at a position (100, 100) on a screen, the mobile phone B determines an event as a touch event, and the coordinates are converted into (100+1080, 100), that is, (1180, 100). In this way, the mobile phone B may send the touch event and the converted coordinates to the mobile phone A. After receiving the touch event and the converted coordinates, the mobile phone A may determine that the user taps the paging mode on the mobile phone B, and then perform S3403.

In an embodiment, the mobile phone B may alternatively send, to the mobile phone A, information about coordinates (for example, (100, 100)) of a tapping operation of the user detected on a screen of the mobile phone B. After the mobile phone A receives the coordinate information sent by the mobile phone B, the mobile phone A may convert the coordinates into coordinates (for example, (1180, 100)) on a doubled canvas. In this way, the mobile phone A may determine that the user taps the icon of the paging mode on the mobile phone B.

It should be understood that, for a process in which the sink device sends the touch event and the converted coordinates to the source device, refer to the descriptions in the foregoing embodiment. For brevity, details are not described herein again.

In an embodiment, the icon of the paging mode displayed on the mobile phone B may be drawn by the mobile phone B. After receiving the canvas that is of the display 1 and that is sent by the mobile phone A, the mobile phone B may add the icon of the parallel mode, the icon of the dual-application mode, the icon of the paging mode, and the exit control to the canvas. When the mobile phone B detects an operation of tapping the icon of the paging mode by the user, the mobile phone B sends indication information to the mobile phone A, where the indication information indicates that the mobile phone B expects to enter the paging mode.

For example, when the mobile phone B detects the operation of tapping the icon of the paging mode by the user, the mobile phone B may send a UDP data packet to the mobile phone A. The UDP data packet may carry the indication information, and the indication information indicates that the mobile phone B expects to enter the paging mode. The UDP data packet includes a data part of an IP datagram. The data part of the IP datagram may include an extensible bit. The mobile phone B and the mobile phone A may agree on content of a specific extensible bit. When the specific extensible bit is 1, the mobile phone A may learn that the mobile phone B expects to enter the paging mode.

In an embodiment, as shown in FIG. 11(b), after a mobile phone B detects that the user drags a control 1102 to partially or completely overlap a control corresponding to the paging mode, the mobile phone B sends indication information to a mobile phone A. The indication information indicates the mobile phone B and the mobile phone A to perform splicing display (for example, the mobile phone A and the mobile phone B perform display in the paging mode).

In an embodiment, after the mobile phone B detects that the user drags the control 1102 to partially or completely overlap the control corresponding to the paging mode, the mobile phone B may send a UDP data packet to the mobile phone A. The UDP data packet may carry the indication information, and the indication information indicates that the mobile phone B expects to enter the paging mode. The UDP data packet includes a data part of an IP datagram. The data part of the IP datagram may include an extensible bit. The mobile phone A and the mobile phone B may agree on content of a specific extensible bit. When the specific extensible bit is 1, the mobile phone A may learn that the mobile phone B expects to enter the paging mode.

S3403: In response to receiving an indication from the sink device, the source device and the sink device perform splicing display in the paging mode.

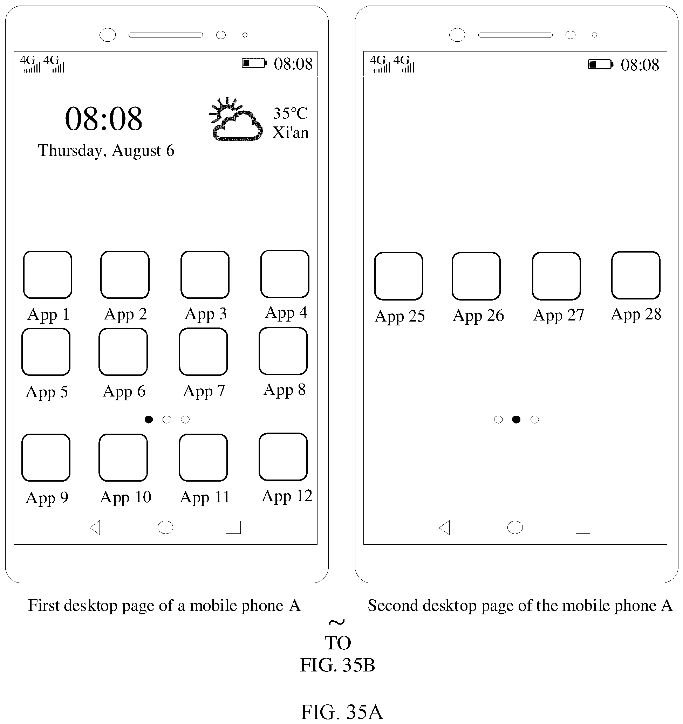

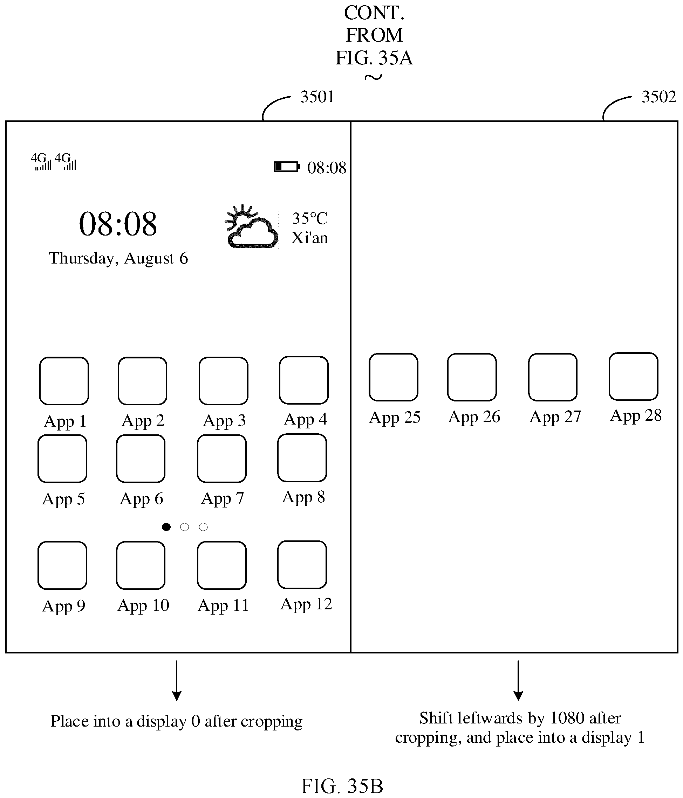

FIG. 35A and FIG. 35B are a schematic diagram of displaying a desktop of a source end in the paging mode. After the source device receives the indication from the sink device, the source device doubles a size of a display canvas, and adjusts a desktop layout. For example, a system of the source device is an Android system. An App of the source device displays icons (icon) on a first page in an area 3501 and displays icons on a second page in an area 3502 by overwriting protected void onSizeChanged (int w, int h, int oldw, int oldh).

In this embodiment of this application, the paging mode is different from mirroring a desktop, and is also different from two independent desktops. In the paging mode, the first page displays a first desktop page, the second page is a natural extension of the first desktop page, and the second page may not include a function bar at the bottom. In the paging mode, each page supports tapping, sliding, and gesture operations. For example, each page can be slid, and two linked pages can be slid together.

For example, a system of the source device is an Android system. After detecting a change of the canvas size, the App of the source device invokes a getSplicingModeType() interface shown in Table 1 to determine a current mode. For example, when a return value is 2, it may be determined that the current mode is the paging mode, and the source device switches to the paging mode.

For example, Table 1 shows a correspondence between a package name, an interface prototype, and a return value.

**Table 1**

| Package name | Interface | Return value | Descriptions of the interface |
|---|---|---|---|
| WindowM anagerEx | getSplicing ModeType () | SPLICING_ MODE_NONE=0 SPLICING_ MODE_ FULLSCREEN=1 SPLICING_ MODE BOOKMODE=2 SPLICING_ MODE_ SUBPAGE=3 SPLICING_ MODE_ MULTIAPP=4 | is for obtaining the current mode, where 0 indicates that the current mode is not a splicing mode; 1 indicates that |
| | | | the current mode is a full-screen mode; 2 indicates that the current mode is the paging mode; 3 indicates that the current mode is the parallel mode; 4 indicates that the current mode is the dual-application mode |

When the App determines that the current mode is the paging mode, the App displays the icons (icon) on the first page in the area 3501 and displays the icons on the second page in the area 3502 by overwriting protected void onSizeChanged (int w, int h, int oldw, int oldh). The source device may shift a cropped canvas in the area 3502 leftwards by 1080, and then place the canvas in a display 1, to project the display 1 to the sink device.

S3404: The source device obtains half of a doubled canvas through cropping for display, creates a virtual screen (a display 1), and places the other half obtained through cropping in the display 1.

S3405: The source device projects the display 1 to the sink device.

As shown in FIG. 8(b), the source device (the mobile phone A) may display icons of a first desktop page, and the sink device (the mobile phone B) may display icons of a second desktop page.

S3406: The source device detects an operation of starting an App by the user, and loads content on a second page on the doubled canvas.

S3407: The source device obtains half of the doubled canvas through cropping for display, and displays the other half on the display 1.

For example, as shown in FIG. 8(c), the mobile phone A may display, on a doubled canvas, canvases of a first page and a second page (PDF 1/8 and PDF 2/8) of App 5. The mobile phone A may obtain content of the first page (PDF 1/8) through cropping and display the content on a display, and shift a cropped canvas of the second page (PDF 2/8) leftwards by 1080 and then place the canvas into the display 1. The mobile phone A may project the display 1 to the mobile phone B.

It should be understood that, for a specific implementation process of S3406 and S3407, refer to the foregoing process of S3403 and S3404. For brevity, details are not described herein again.

S3408: The source device projects the display 1 to the sink device.

For example, the sink device (the mobile phone B) may display content of the second page (PDF 2/8).

This embodiment of this application provides a manner of entering the paging mode. An application program may adjust a layout in this mode, to help improve user experience during multi-device splicing.

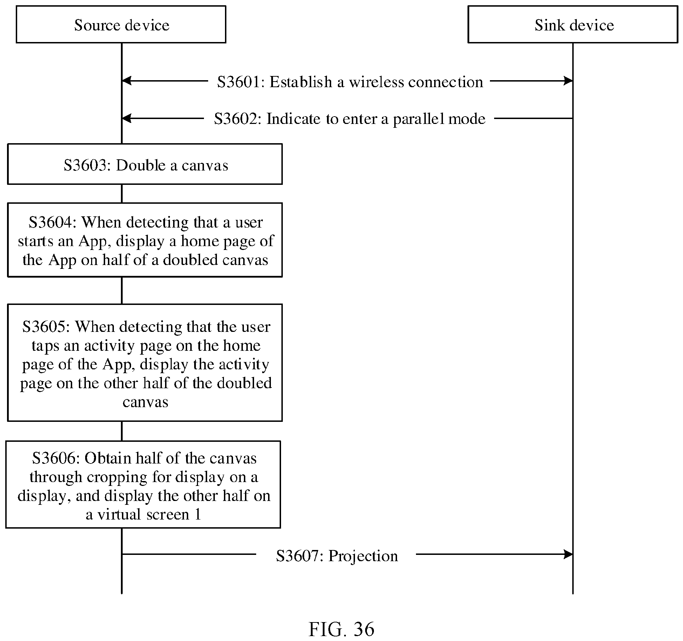

FIG. 36 is a schematic flowchart of a method 3600 in which a source device and a sink device perform display in a parallel mode. The method 3600 includes the following steps.

S3601: The source device and the sink device establish a wireless connection.

It should be understood that, for S3601, refer to the process of S2901. For brevity, details are not described herein again.

S3602: After the sink device detects a fourth operation of a user, the sink device indicates the source device to enter the parallel mode.

For example, as shown in FIG. 9(a), an icon of the parallel mode displayed on a mobile phone B may be drawn by a mobile phone A. After placing a cropped canvas into a display 1, the mobile phone A may add the icon of the parallel mode, an icon of a dual-application mode, an icon of a paging mode, and an exit control to the cropped canvas.

In an embodiment, when detecting an operation of tapping the paging mode, the mobile phone B may obtain a touch event of the user and corresponding coordinate information. The mobile phone B may send the touch event and the coordinate information to the mobile phone A. The mobile phone A may switch from a full-screen mode to the parallel mode based on the touch event and the coordinate information.

For example, if the mobile phone B detects that the user performs a tapping operation at a position (100, 100) on a screen, the mobile phone B may determine an event as a touch event, and the coordinates are converted into (100+1080, 100), that is, (1180, 100). In this way, the mobile phone B may send the touch event and the converted coordinates to the mobile phone A. After receiving the touch event and the converted coordinates, the mobile phone A may determine that the user taps the paging mode on the mobile phone B, and then perform S2303.

In an embodiment, the mobile phone B may alternatively send, to the mobile phone A, information about coordinates (for example, (100, 100)) of a tapping operation of the user detected on a screen of the mobile phone B. After the mobile phone A receives the coordinate information sent by the mobile phone B, the mobile phone A may convert the coordinates into coordinates (for example, (1180, 100)) on a doubled canvas. In this way, the mobile phone A may determine that the user taps the icon of the paging mode on the mobile phone B.

It should be understood that, for a process in which the mobile phone B sends the touch event and information about the converted coordinates to the mobile phone A, refer to the descriptions in the foregoing embodiment. For brevity, details are not described herein again.

In an embodiment, the icon of the paging mode displayed on the mobile phone B may be drawn by the mobile phone B. After receiving the canvas that is of the display 1 and that is sent by the mobile phone A, the mobile phone B may add the icon of the parallel mode, the icon of the dual-application mode, the icon of the paging mode, and the exit control to the canvas. When the mobile phone B detects an operation of tapping the icon of the parallel mode by the user, the mobile phone B sends indication information to the mobile phone A, where the indication information indicates that the mobile phone B expects to enter the parallel mode.

For example, when the mobile phone B detects the operation of tapping the icon of the parallel mode by the user, the mobile phone B may send a UDP data packet to the mobile phone A. The UDP data packet may carry the indication information, and the indication information indicates that the mobile phone B expects to enter the parallel mode. The UDP data packet includes a data part of an IP datagram. The data part of the IP datagram may include an extensible bit. The mobile phone B and the mobile phone A may agree on content of a specific extensible bit. When the specific extensible bit is 1, the mobile phone A may learn that the mobile phone B expects to enter the parallel mode.

For example, as shown in FIG. 11(b), after a mobile phone B detects that the user drags a control 1102 to partially or completely overlap a control corresponding to the parallel mode, the mobile phone B may send indication information to a mobile phone A, where the indication information indicates that the mobile phone B expects to enter the parallel mode.

S3603: In response to receiving an indication from the sink device, the source device doubles a size of a display canvas.

S3604: When detecting that the user starts an App, a source end displays a home page of the App on half of a doubled canvas.

For example, as shown in FIG. 9(c), the mobile phone A may display a home page of App 6 on the left half of the doubled canvas, and the mobile phone A may obtain the left half through cropping and place the left half into a display 0, so that the mobile phone A displays a canvas shown in the display 0. In this case, because the mobile phone A has not detected an operation of tapping an activity page by the user, content displayed on the right half is not limited. The mobile phone A may display a desktop of the mobile phone A on the right half of the doubled canvas. The mobile phone A may obtain the right half through cropping and place the right half into the display 1, so that the mobile phone A projects the display 1 to the mobile phone B. Alternatively, the mobile phone A may not perform projection to the mobile phone B, and the mobile phone B displays a desktop of the mobile phone B.

S3605: When detecting that the user taps an activity (activity) page on the home page of the App, the source device displays the activity page on the other half of the doubled canvas.

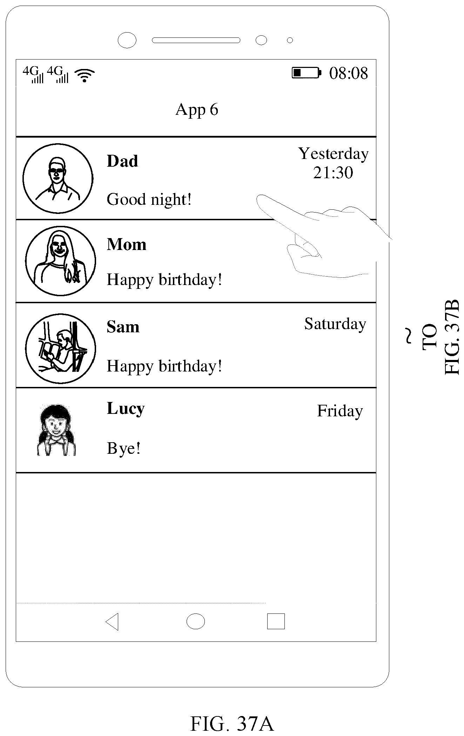

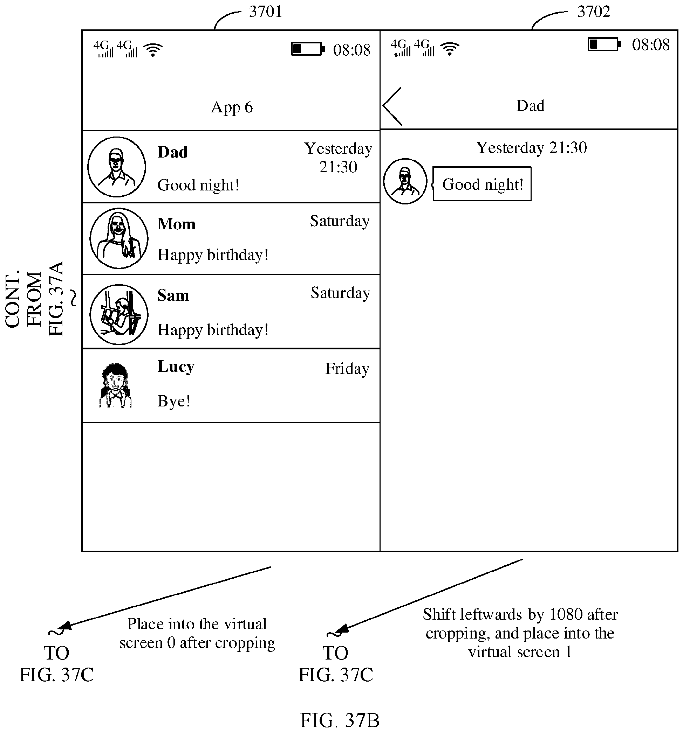

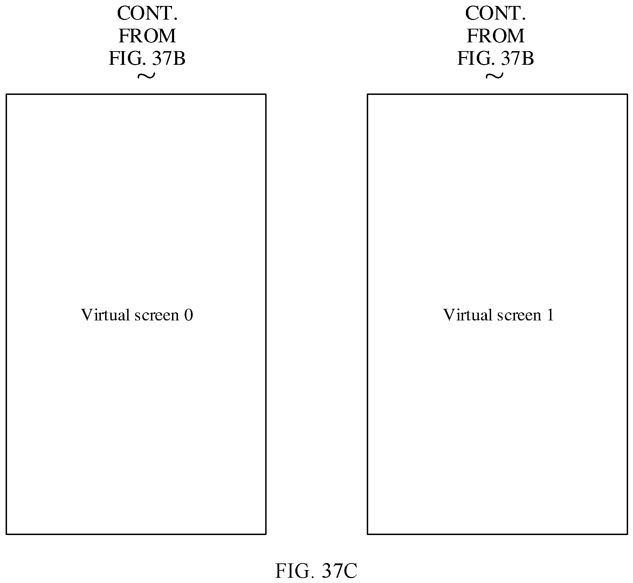

FIG. 37A to FIG. 37C show a process of opening an activity page in the application program in the parallel mode. GUIs shown in FIG. 9(a) to FIG. 9(f) are used as an example. When detecting an operation of tapping an activity page on the home page of the App by the user, the source device may display content of the home page of the App in an area 3701 of the doubled canvas, and display content of the activity page in an area 3702 of the doubled canvas. The source device may crop the doubled canvas, place a canvas in the area 3701 into a display 0, and display the canvas in the display 0 on a display. The source device may shift a canvas in the area 3702 leftwards by 1080, place the canvas into a display 1, and project the display 1 to the sink device, so that the sink device displays the activity page.

In this embodiment of this application, when detecting that the user starts an App, the source device may display, by default, a home page of the App on the left half of the doubled canvas. When detecting that the user taps an activity page, the source device may invoke an API to display the activity page on the right half.

For example, Table 2 shows a correspondence between a package name, an interface prototype, and a return value.

**Table 2**

| Package name | Interface prototype | Return value | Descriptions of the interface |
|---|---|---|---|
| Activity | public void startActivity (Intent) | void | An extended field "position" is added to Intent, and an activity page is started to a specified position by writing intent.putExtra ("position", value). The value is an enumerated type: LEFT (0) and RIGHT (1) |

The source device invokes the getSplicingModeType() interface shown in Table 1 to determine a current mode. For example, when the return value is 3, it may be determined that the current mode is the parallel mode. When the source device detects that the user taps an activity page in the App, the App may invoke the startActivity () interface shown in Table 2, to set, in the extension field "position" of Intent, the activity page to be started to a specified position. For example, if a current device detects that the user taps an activity page 1 in the App, and expects to start the activity page 1 on a screen of another device (where the another device is located on a right side of the current device), the current device writes intent.putExtra ("position", RIGHT) into Intent, and invokes startActivity (Intent), to display the activity page 1 on the another device.

For example, as shown in FIG. 9(c), when the mobile phone A starts App 6, App 6 may invoke a getSplicingModeType() interface to determine that the mobile phone A is currently in the parallel mode. When the mobile phone A detects that the user taps a chat record between the user and a contact Dad, App 6 determines that an activity page corresponding to a chat interface between the user and the contact Dad needs to be started. The mobile phone A determines that the mobile phone B is located on a right side of the mobile phone A. In this case, the mobile phone A may write intent.putExtra ("position", RIGHT) into Intent, and invoke startActivity (Intent), to display the activity page corresponding to the chat interface between the user and the contact Dad on the device B. The mobile phone A may crop the doubled canvas, and display a canvas corresponding to a chat list between the user and a plurality of contacts on a display. The mobile phone A may place the activity page that is obtained through cropping and that corresponds to the chat interface between the user and the contact Dad into the display 1, and project the display 1 to the mobile phone B. In this way, the mobile phone B displays the activity page.

S3 606: The source device crops the doubled canvas, obtains half of the canvas through cropping for display on the display, and displays the other half on the display 1.

S3607: The source device projects content of the display 1 to the sink device.

This embodiment of this application provides a manner of displaying upper-level and lower-level activity pages of an App in the parallel mode. In the parallel mode, a plurality of activity pages are displayed on a plurality of devices, to bring better user experience during multi-device splicing.

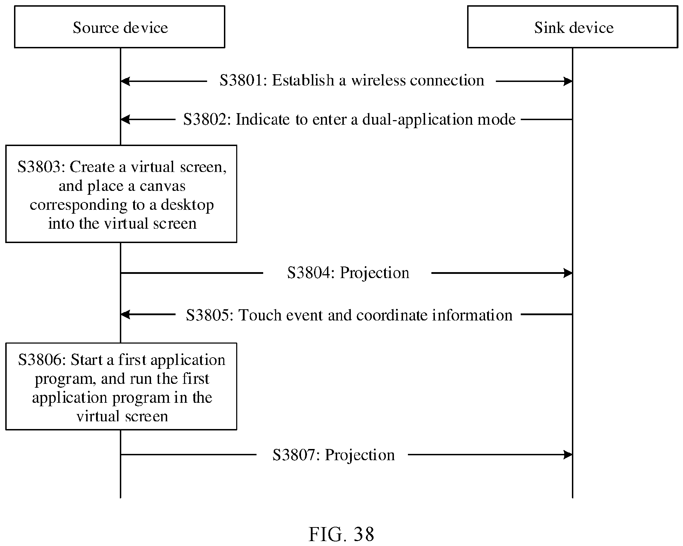

FIG. 38 is a schematic flowchart of a method 3800 in which a source device and a sink device perform display in a dual-application mode. The method 3800 includes the following steps.

S3801: The source device and the sink device establish a wireless connection.

It should be understood that, for S3801, refer to the process of S2901. For brevity, details are not described herein again.

S3802: After the sink device detects a fifth operation of a user, the sink device indicates the source device to enter the dual-application mode.

For example, as shown in FIG. 7(a), an icon of the dual-application mode displayed on a mobile phone B may be drawn by a mobile phone A. After placing a cropped canvas into a display 1, the mobile phone A may add an icon of a parallel mode, the icon of the dual-application mode, an icon of a paging mode, and an exit control to the cropped canvas.

In an embodiment, when detecting an operation of tapping the dual-application mode, the mobile phone B may obtain a touch event of the user and corresponding coordinates. The mobile phone B may send the touch event and converted coordinates to the mobile phone A. The mobile phone A may switch from a full-screen mode to the dual-application mode based on the touch event and coordinate information.

For example, if the mobile phone B detects that the user performs a tapping operation at a position (100, 100) on a screen, the mobile phone B may determine the touch event as a tapping event, and convert the coordinates into (100+1080, 100), that is, (1180, 100). In this way, the mobile phone B may send the touch event and the converted coordinates to the mobile phone A. After receiving the touch event and the converted coordinates, the mobile phone A may determine that the user taps the icon of the dual-application mode on the mobile phone B, and then perform S2503.

In an embodiment, the mobile phone B may alternatively send, to the mobile phone A, information about coordinates (for example, (100, 100)) of a tapping operation of the user detected on a screen of the mobile phone B. After the mobile phone A receives the coordinate information sent by the mobile phone B, the mobile phone A may convert the coordinates into coordinates (for example, (1180, 100)) on a doubled canvas. In this way, the mobile phone A may determine that the user taps the icon of the dual-application mode on the mobile phone B.

It should be understood that, for a process in which the mobile phone B sends the touch event and the coordinate information to the mobile phone A, refer to the descriptions in the foregoing embodiment. For brevity, details are not described herein again.

In an embodiment, the icon of the dual-application mode displayed on the mobile phone B may be drawn by the mobile phone B. After receiving the canvas that is of the display 1 and that is sent by the mobile phone A, the mobile phone B may add the icon of the parallel mode, the icon of the dual-application mode, the icon of the paging mode, and the exit control to the canvas. When the mobile phone B detects an operation of tapping the icon of the dual-application mode by the user, the mobile phone B sends indication information to the mobile phone A, where the indication information indicates that the mobile phone B expects to enter the dual-application mode.

For example, when the mobile phone B detects the operation of tapping the icon of the dual-application mode by the user, the mobile phone B may send a UDP data packet to the mobile phone A. The UDP data packet may carry the indication information, and the indication information indicates that the mobile phone B expects to enter the dual-application mode. The UDP data packet includes a data part of an IP datagram. The data part of the IP datagram may include an extensible bit. The mobile phone B and the mobile phone A may agree on content of a specific extensible bit. When the specific extensible bit is 1, the mobile phone A may learn that the mobile phone B expects to enter the dual-application mode.

S3803: In response to receiving an indication from the sink device, the source device creates a virtual screen (a display), and places a canvas corresponding to a desktop of the source device into the display.

S3804: The source device projects the display to the sink device.

In an embodiment, for example, the source device uses an Android system. After receiving the indication indicating that the sink device expects to enter the dual-application mode, the source device may create the display. The source device may use a second desktop (secondLauncher) mechanism of Android to start the secondLauncher on the display and then project the display to the sink device. In this way, the sink device can display the desktop of the source device.

For example, as shown in FIG. 7(b), after receiving an indication indicating that the mobile phone B expects to enter the dual-application mode, the mobile phone A may start a desktop (including a network standard, a Wi-Fi connection status, and a battery level in a status bar, weather information, date information, and icons of App 1 to App 12) of the mobile phone A on a display, and then project the display to the mobile phone B, so that the mobile phone B can also display the desktop of the mobile phone A.

S3805: The sink device detects that the user taps an icon of a first application program, and sends a touch event and coordinate information to the source device.

It should be understood that for a process in which the sink device sends the touch event and the coordinate information to the source device, refer to the descriptions in the foregoing embodiment. For brevity, details are not described herein again.

S3806: In response to receiving the touch event and the coordinate information, the source device may start the first application program, and run the first application program in the display.

For example, as shown in FIG. 7(c), when the mobile phone B detects that the user taps an icon of App 4, the mobile phone B may send, to the mobile phone A, a touch event and coordinate information that is collected by the mobile phone B when the user taps the icon. After receiving the touch event and the coordinate information, the mobile phone A may determine that the mobile phone B detects that the user taps the screen and obtain the corresponding coordinate information. In this way, the mobile phone A may determine that the user taps the icon of App 4 on the mobile phone B. The mobile phone A may start App 4, run App 4 in a display, and then project the display to the mobile phone B.

S3807: The source device projects the display to the sink device.

As shown in FIG. 7(d), the mobile phone B may display an interface of App 4.

It should be understood that, for a process of performing display when the source device detects an operation of the user, refer to the descriptions in the current technology. For brevity, details are not described herein again.

This embodiment of this application provides a method for separately displaying different application programs of the source device on the source device and the sink device in the dual-application mode, to avoid a process in which the user switches between the different applications on the source device, and bring better user experience during multi-device splicing.

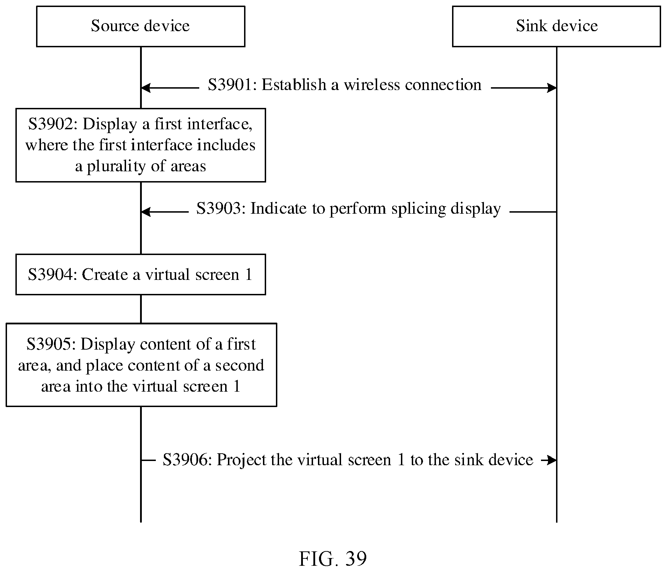

FIG. 39 is a schematic flowchart of a method 3900 in which a source device and a sink device perform display in a companion mode. The method 3900 includes the following steps.

S3901: The source device and the sink device establish a wireless connection.

It should be understood that, for S3901, refer to the process of S2901. For brevity, details are not described herein again.

S3902: The source device displays a first interface, where the first interface includes a plurality of areas, the plurality of areas include a first area and a second area, and content displayed in the first area is different from content displayed in the second area.

For example, as shown in FIG. 15(b), a mobile phone A displays a display interface of a "TV series 2". The display interface includes an area 1501, an area 1502, and an area 1503.

S3 903: After the sink device detects a third operation of a user, the sink device indicates the source device to perform splicing display.

In an embodiment, when the sink device detects a first operation (for example, an operation of sliding from right to left on a screen) of the user, the sink device may send indication information to the source device, where the indication information indicates the source device to perform splicing display with the sink device.

For a process in which the sink device indicates the source device to perform splicing display, refer to the descriptions in the foregoing embodiment. Details are not described herein again.

S3904: In response to receiving an indication, the source device creates a virtual screen 1 (a display 1).

S3905: The source device displays the content of the first area, and places the content of the second area into the display 1.

In this embodiment of this application, content of an area displayed by the source device on a main screen and content placed into the display 1 may comply with a rule preset by an application program. For example, for a video application program shown in FIG. 15(b), when the mobile phone A determines to perform splicing display with the mobile phone B in the companion mode, the video application in the mobile phone A defines that the area 1501 is to be displayed on the mobile phone A, and content of the area 1502 and the area 1503 is to be displayed on the mobile phone B. In this way, the mobile phone A may display content of the area 1501 in full screen, and send the content of the area 1502 and the area 1503 to the mobile phone B, so that the mobile phone B displays the content of the area 1502 and the area 1503.

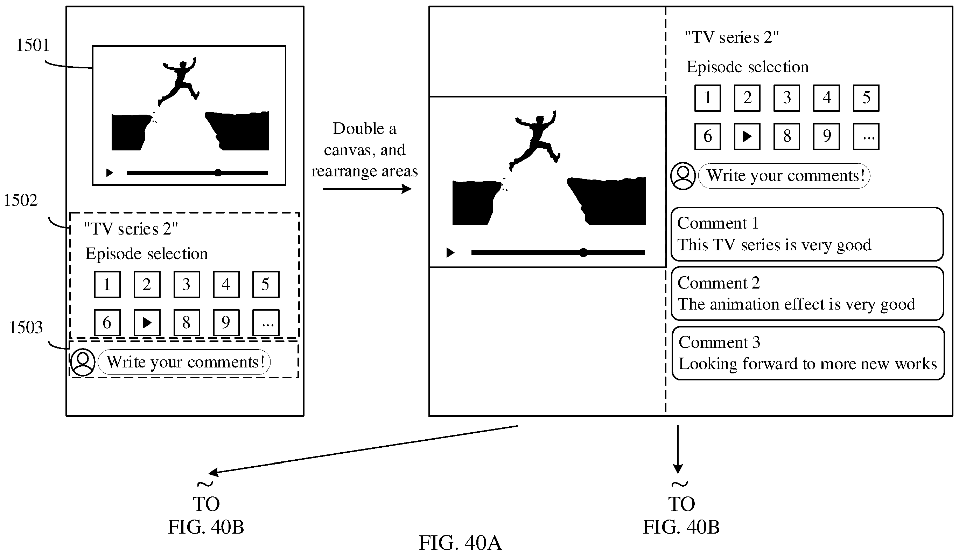

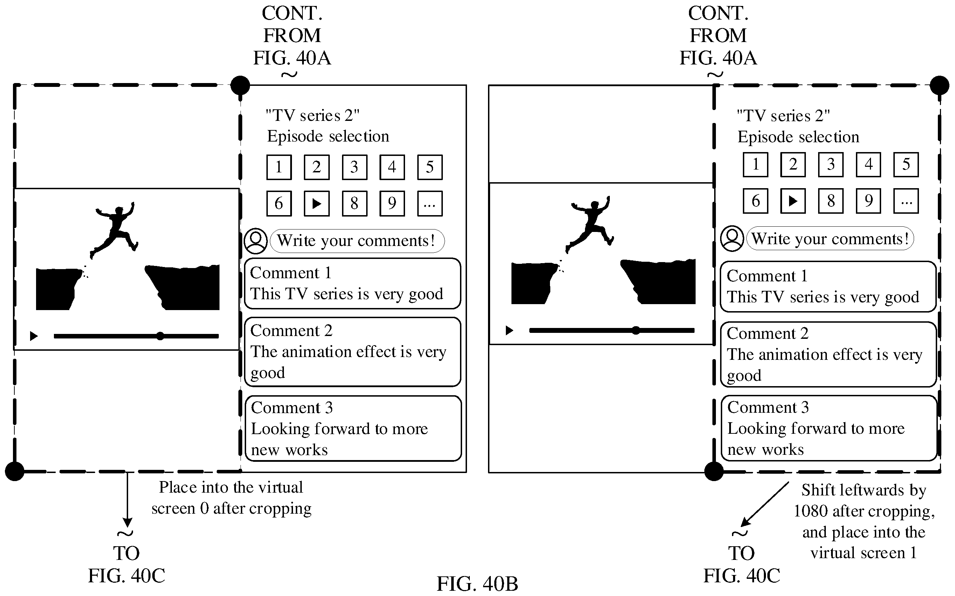

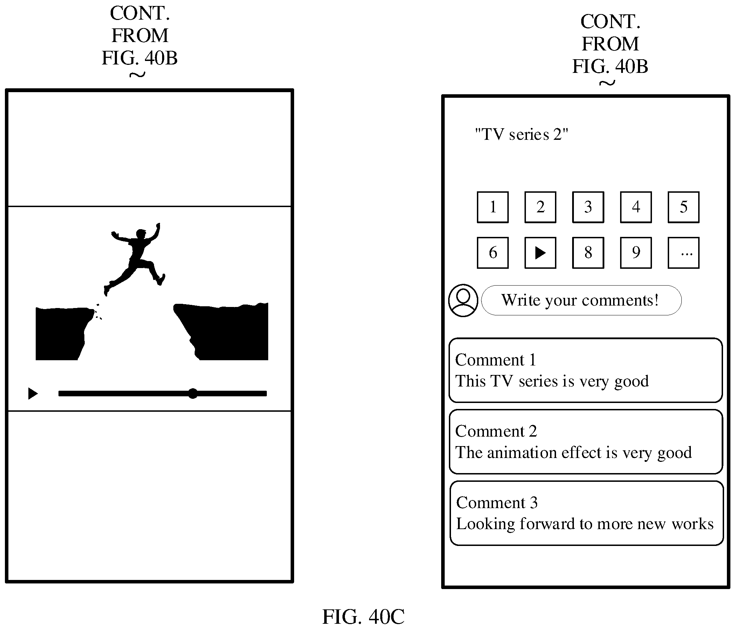

FIG. 40A to FIG. 40C show a process of cropping a display interface of a video application program in the companion mode according to this embodiment of this application. The interface displayed on the mobile phone A in FIG. 15(b) is used as an example. After the mobile phone A receives indication information (indicating the mobile phone A to perform splicing display with the mobile phone B) sent by the mobile phone B, the mobile phone A may double a canvas, and display the area 1501, the area 1502, and the area 1502 on a doubled canvas according to a rule customized by the video application. The mobile phone A may obtain the left half area through cropping and place the left half area into a display 0, to display a canvas in the display 0 on a main screen of the mobile phone A. The mobile phone A may further create a virtual screen 1, mirror and crop the doubled canvas, shift the cropped right half area by 1080, and then place the right half area into the display 1. The mobile phone A sends a canvas in the display 1 to the mobile phone B, so that the mobile phone B displays image information shown in the area 1502 and the area 1503.

S3906: The source device projects the display 1 to the sink device.

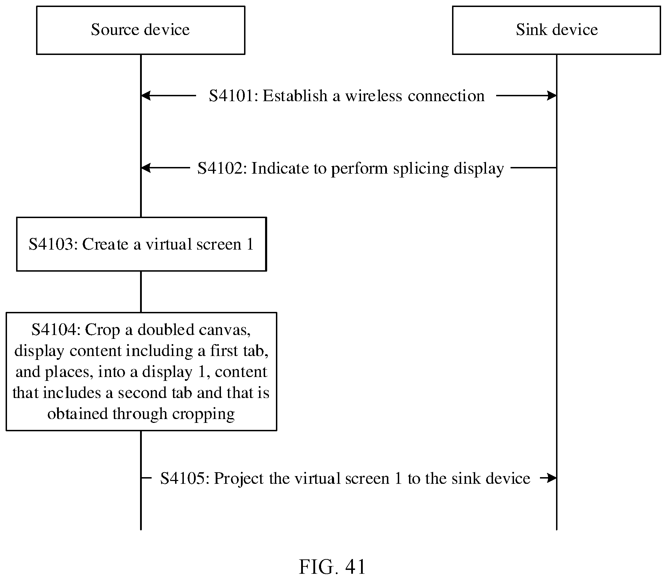

FIG. 41 is a schematic flowchart of a method 4100 in which a source device and a sink device perform display in a tabs mode. The method 4100 includes the following steps.

S4101: The source device and the sink device establish a wireless connection.

It should be understood that, for S4101, refer to the process of S2901. For brevity, details are not described herein again.

S4102: After the sink device detects a third operation of a user, the sink device indicates the source device to perform splicing display.

In an embodiment, when the sink device detects a first operation (for example, an operation of sliding from right to left on a screen) of the user, the sink device may send indication information to the source device, where the indication information indicates the source device to perform splicing display with the sink device.

For a process in which the sink device indicates the source device to perform splicing display, refer to the descriptions in the foregoing embodiment. Details are not described herein again.

S4103: In response to receiving an indication from the sink device, the source device creates a virtual screen 1 (a display 1).

It should be understood that, for an implementation process of S4103, refer to the implementation process of S3403.

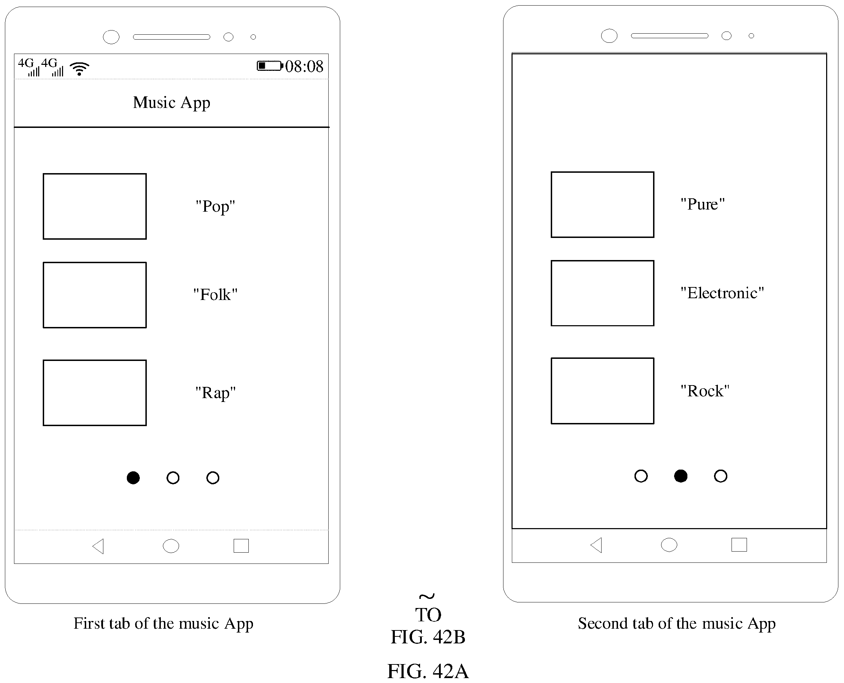

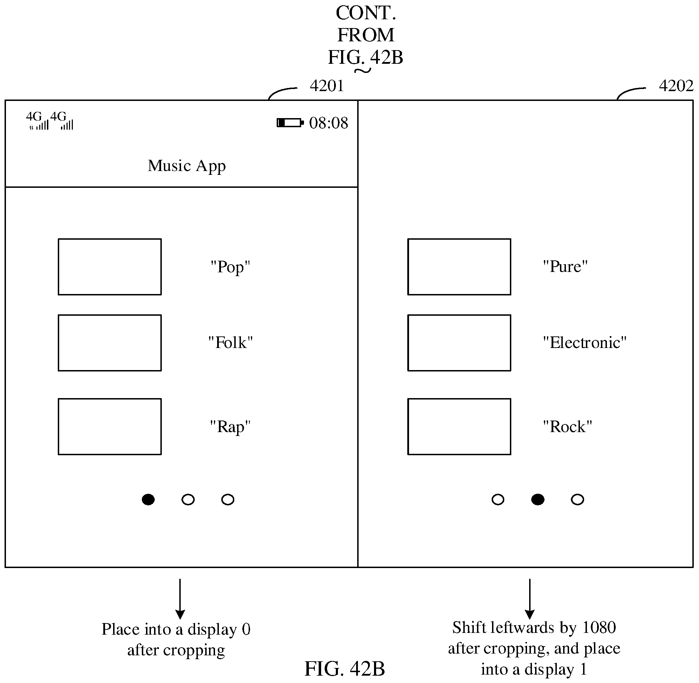

FIG. 42A and FIG. 42B show a process of cropping a display interface of a music application program in the tabs mode according to this embodiment of this application. As shown in FIG. 19(b), the source device may first double a canvas, and display a first tab in the left half area of a doubled canvas and display a second tab in the right half area of the doubled canvas. The source device may obtain the left half area through cropping, and then display the left half area on a main screen (where the main screen displays a canvas in an area 4201). The source device may mirror the doubled canvas, and then crop the mirrored canvas to obtain the right half area. After cropping, the right half area is shifted leftwards by 1080, and then placed into the created virtual screen 1 (a display 1). The source device may project a canvas in the display 1 to the sink device, so that the sink device (a mobile phone B) displays a canvas in an area 4202.

S4104: The source device crops the doubled canvas, displays content including the first tab, and places, into the display 1, content that includes the second tab and that is obtained through cropping.

S4105: The source device projects the display 1 to the sink device.

The foregoing describes, with reference to FIG. 28 to FIG. 42B, implementation processes in which the source device and the sink device perform splicing display in the full-screen mode in embodiments of this application. The following describes, with reference to the accompanying drawings, processes in which a source device adaptively selects a mode and dynamically switches between modes.

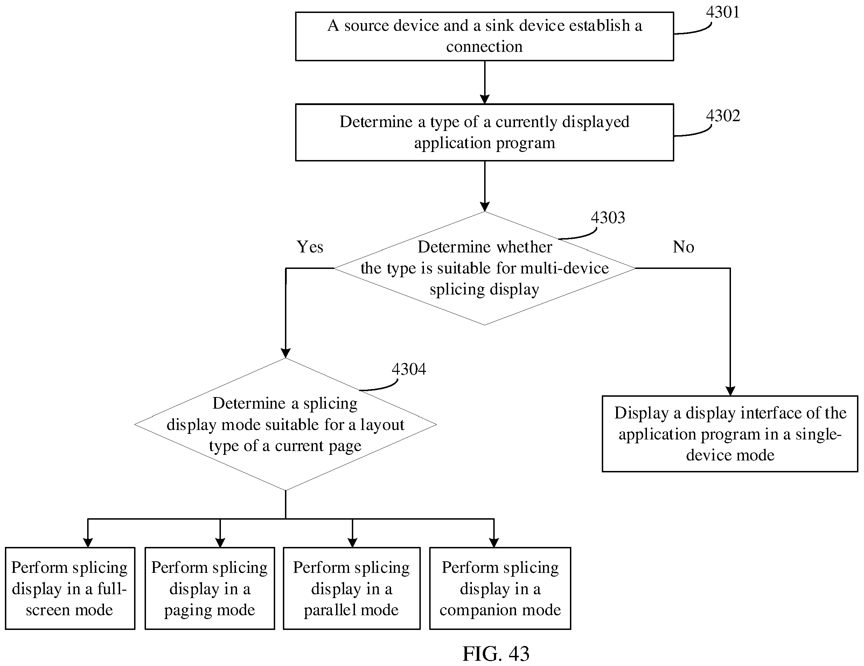

FIG. 43 is a schematic flowchart of an adaptive mode selection method 4300 according to an embodiment of this application. As shown in FIG. 43, the method 4300 includes the following steps.

S4301: A source device and a sink device establish a wireless connection.

It should be understood that, for S4301, refer to the process of S2901. For brevity, details are not described herein again.

S4302: The source device determines a type of a currently displayed application program.

In an embodiment, the source device may store a mapping relationship between package name information of a plurality of application programs and corresponding types. After receiving indication information of the sink device, the source device may first determine content displayed on a current display interface of the source device. If the source device determines that an application program is currently displayed, the source device may query package name information of the application program at an application program layer, and determine a type of the application program based on the package name information of the application program and the mapping relationship between the package name information of the plurality of application programs and the corresponding types. For example, Table 3 shows a mapping relationship between package name information of a plurality of application programs and corresponding types.

**Table 3**

| Package name information | Type of an application program |
|---|---|
| Package name 1, package name 2, package name 3, ... | Video App |
| Package name 4, package name 5, package name 6, ... | Game App |
| Package name 7, package name 8, package name 9, ... | Document App |
| Package name 10, package name 11, package name 12, ... | Shopping App |
| Package name 13, package name 14, package name 15, ... | Social App |
| ... | ... |

It should be understood that the mapping relationship between the package name information of the plurality of application programs and the corresponding types shown in Table 3 is merely an example. This embodiment of this application is not limited thereto.

S4303: The source device determines whether the type of the application program is suitable for multi-device splicing display.

In an embodiment, the source device may store a mapping relationship between a type of an application program and whether the type of the application program is suitable for multi-device splicing display. For example, Table 4 shows a correspondence between a type of an application program and whether the type of the application program is suitable for multi-device splicing display.

**Table 4**

| Type of an application program | Suitable for multi-device splicing display or not |
|---|---|
| Video App, game App, document App, shopping App, social App, ... | Suitable for multi-device splicing display |
| Calendar App, clock App, ... | Not suitable for multi-device splicing display |

It should be understood that the correspondence between a type of an application and whether the type of the application is suitable for multi-device splicing display shown in Table 4 is merely an example. This embodiment of this application is not limited thereto.

S4304: If the source device determines that the type of the application program is suitable for multi-device splicing display, the source device continues to determine a splicing display mode suitable for a layout type of a current page.

In an embodiment, if the source device determines that the type of the application program is not suitable for multi-device splicing display, the source device may continue to display a display interface of the application program without sending image information to the sink device.

In an embodiment, the splicing display mode may include the full-screen mode, the parallel mode, the paging mode, the tabs mode, the companion mode, the dual-application mode, and the like in the foregoing embodiments.

For example, Table 5 shows a mapping relationship between a layout type of a page, a type of an application program, and a splicing display mode.

**Table 5**

| Layout type of a page | Type of an application program | Splicing display mode |
|---|---|---|
| Full-screen layout | Photo App: displays a single photo<br><br>Video App: displays a video playback image | Full-screen mode |
| | Document App | Paging mode |
| | Map navigation App | Full-screen mode |
| | ... | ... |
| Area-based layout | Drawing App (including a picture display area and a function area) | Companion mode |
| | Music App (including a cover, a music name, music content, and a playback control) | Companion mode |
| | Video App: includes a video playback window, a playback control, and a details page (a video name, a comment, and a recommendation)<br>Course learning App: includes a learning details page (a video and a question), an online course video, and a list page | Companion mode |
| | Email App: includes an email name, email content, an email editing area, and a send control<br><br><br>Notes App: includes a note name, note content, and a save control<br>News App: includes a news name, news content, and news comment content<br>Shopping App<br>Social App | Parallel mode Companion mode |

In this embodiment of this application, the layout type of the page may include the full-screen layout and the area-based layout. The full-screen layout means that a content element (for example, a picture, a video, or a text) fills an entire screen. In an embodiment, in addition to displaying the content element on the entire screen, the source device may further display an operation element in the full-screen layout. The operation element includes but is not limited to a play control, a content switching control, a progress bar, and the like. The operation element may be automatically hidden when the source device does not detect a touch operation of a user, and displayed when the source device detects a touch operation of the user on the screen. As shown in FIG. 3(a), a mobile phone A is displaying video content in full screen and a page further includes a progress bar. In this case, a layout manner of the page displayed on the mobile phone A may be the full-screen layout.

For example, for some drawing application programs, content of a picture may be displayed in full screen in a display interface of the application program. When an electronic device detects a touch operation of a user, the electronic device may display a function bar. When the electronic device does not detect a touch operation of the user within preset time, the electronic device may hide the function bar. In this case, a layout type of a page may be the full-screen layout.

The area-based layout may include a top-bottom layout and a top-middle-bottom layout. An interface displayed on a mobile phone A in FIG. 15(b) is used as an example. An area 1501 may be understood as a display area of a content element, and an area 1502 and an area 1503 may be understood as display areas of operation elements. In this case, a layout type of a page of the mobile phone A may be the top-bottom layout. For another example, if the interface displayed on the mobile phone A further includes navigation elements such as a return control, a tab, and a search control, the layout type of the page of the mobile phone A may be the top-middle-bottom layout.

For another example, as shown in FIG. 18(a), a display interface of a mobile phone A includes a content element display area 1801 and an operation element display area 1802. In this case, a layout type of a page of the mobile phone A may be the top-bottom layout.

For another example, if a playback interface of a music App includes a top part, a middle part, and a bottom part, where the top part includes navigation elements (for example, a return control and tabs (for example, three tabs: recommendation, song, and lyrics)), the middle part includes content elements such as a cover of an album to which the song belongs and lyrics of the song, and the bottom part includes operation controls such as a play control and a progress bar, a layout type of a page may be the top-middle-bottom layout.

In an embodiment, the source device may alternatively directly determine, based on the layout type of the current page, a mode in which the source device and the sink device perform splicing display. For example, when the source device determines that the layout type of the currently displayed page is the full-screen layout, the source device may determine to perform splicing display with the sink device in the full-screen mode. For another example, when the source device determines that the layout type of the currently displayed page is the area-based layout, the source device may determine to perform splicing display with the sink device in the companion mode.

It should be further understood that the mapping relationship between a layout type of a page, a type of an application program, and a splicing display mode shown in Table 5 is merely an example. This embodiment of this application is not limited thereto. For example, the source device may determine the splicing display mode based on only the type of the application program. For example, Table 6 shows a correspondence between a type of an application program and a splicing display mode.

**Table 6**

| Type of an application program to which the current display interface of the source device belongs | Splicing display mode |
| --- | --- |
| Video App, game App, and map App | Full-screen mode or companion mode |
| Document App and note App | Paging mode |
| Shopping App, social App, App with a list or gallery, email App, and music App | Parallel mode |
| Drawing application program | Companion mode |
| ... | ... |

It should be further understood that the correspondence between a type of an application program and a splicing display mode shown in Table 6 is merely an example. This embodiment of this application is not limited thereto.

In this embodiment of this application, the source device may determine, based on the type of the current application program and the layout type of the page, the splicing display mode used by the source device and the sink device to perform splicing display. The user does not need to manually select the mode, and the source device may adaptively select an appropriate mode for splicing display. This omits a process of selecting the mode by the user, improves an intelligence degree of an electronic device, and helps improve user experience.

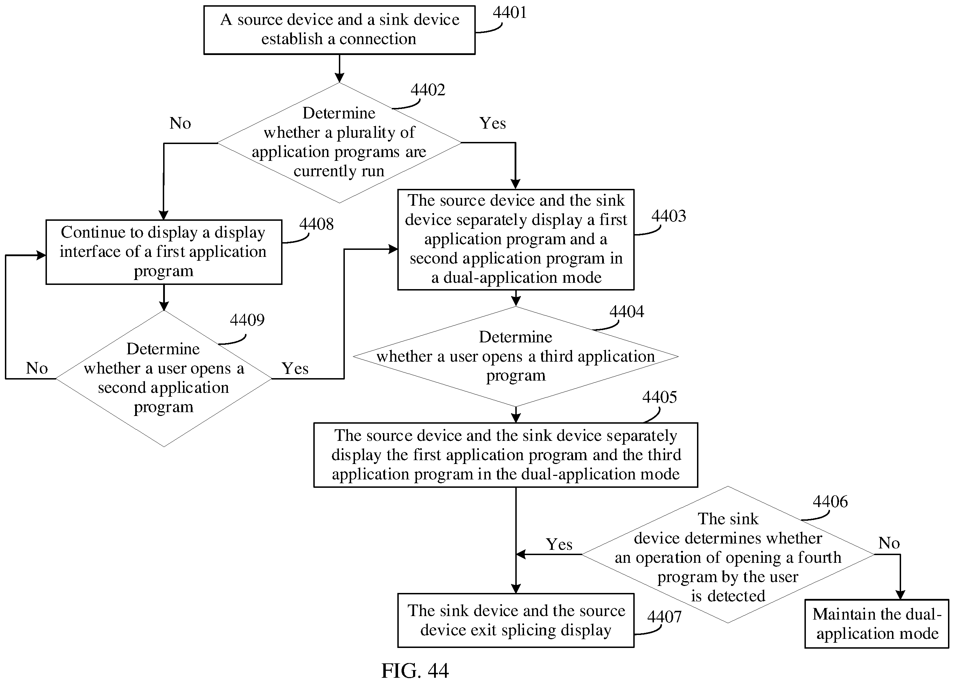

FIG. 44 is a schematic flowchart of a splicing display mode switching method 4400 according to an embodiment of this application. As shown in FIG. 44, the method 4400 includes the following steps.

S4401: A source device and a sink device establish a wireless connection.

It should be understood that, for S4401, refer to the process of S2901. For brevity, details are not described herein again.

S4402: The source device determines whether a plurality of application programs are currently run.

S4403: If the source device currently runs a plurality of application programs, the source device and the sink device may separately display a first application program and a second application program in a dual-application mode.

In an embodiment, the first application program may be an application program running in the foreground of the source device, and the second application program may be an application program running in the background of the source device.

In an embodiment, if a plurality of application programs are run in the background of the source device, the second application program may be the latest application program opened in the plurality of application programs.

For example, if the source device currently runs the first application program in the foreground, and also runs the second application program in the background, the source device may continue to display a display interface of the first application program in the foreground and send image information of a display interface of the second application program to the sink device, so that the sink device displays the display interface of the second application program.

S4404: In a process in which the source device and the sink device perform splicing display in the dual-application mode, the source device determines whether a user starts a third application program.

In an embodiment, the source device may receive, in the process in which the source device and the sink device perform splicing display in the dual-application mode, a message sent by a server of the third application program. When detecting an operation of viewing the message by the user, the source device may determine that the user starts the third application program.

S4405: If the source device determines that an operation of opening the third application program by the user is detected in a process of displaying the display interface of the first application program, the source device and the sink device may separately display the first application program and the third application program in the dual-application mode.

In an embodiment, the source device may continue to display the display interface of the first application program, and send, to the sink device, image information corresponding to a display interface of the third application program. In response to receiving the image information, the sink device may display the display interface of the third application program.

In an embodiment, the source device may display a display interface of the third application program, and send, to the sink device, the image information corresponding to the display interface of the second application program. In response to receiving the image information, the sink device may display the display interface of the second application program.

It should be understood that, for a process in which the source device and the sink device separately display the first application program and the third application program in the dual-application mode, or the source device and the sink device separately display the third application program and the second application program in the dual-application mode, refer to the descriptions in the foregoing embodiment. Details are not described herein again.

For example, as shown in FIG. 20(b), in response to an operation of tapping a message prompt box 2001 by the user, a mobile phone A may continue to display a video playback image of a video App, and send, to a mobile phone B, image information corresponding to a chat interface between the user and a contact Li Hua in App 4, so that the mobile phone B displays the chat interface between the user and the contact Li Hua.

In an embodiment, if the source device does not detect, in the process of displaying the display interface of the first application program, an operation of opening the second application program by the user, the source device may continue to display the display interface of the first application program in a single-device mode and perform determining in S4402.

S4406: The sink device determines whether an operation of opening a fourth application program by the user is detected.

S4407: In response to the operation of opening the fourth application program by the user, the sink device and the source device exit splicing display.

In an embodiment, in the process in which the source device and the sink device perform splicing display in the dual-application mode, the sink device receives a notification message from a server corresponding to the fourth application program. When the sink device detects an operation of viewing the notification message by the user, the sink device may indicate the source device to exit splicing display. The source device may continue to display an interface of a currently displayed application program, and the sink device may display a display interface of the fourth application program.

It should be understood that the first application program, the second application program, and the third application program may be application programs in the source device, and the fourth application program may be an application program in the sink device.

S4408: If the source device currently runs only a first application program, the source device may continue to display a display interface of the first application program.

S4409: In a process of displaying the display interface of the first application program, the source device determines whether a user starts a second application program.

It should be understood that, for a process of S4409, refer to the process of S4404. Details are not described herein again.

In an embodiment, if the source device detects an operation of opening the second application program by the user, the source device and the sink device may perform splicing display in a dual-application mode.

For example, the source device may continue to display the display interface of the first application program, and send, to the sink device, image information corresponding to a display interface of the second application program. In response to receiving the image information, the sink device may display the display interface of the second application program.

It should be understood that, for a process after S4410, refer to the process of S4404 to S4407.

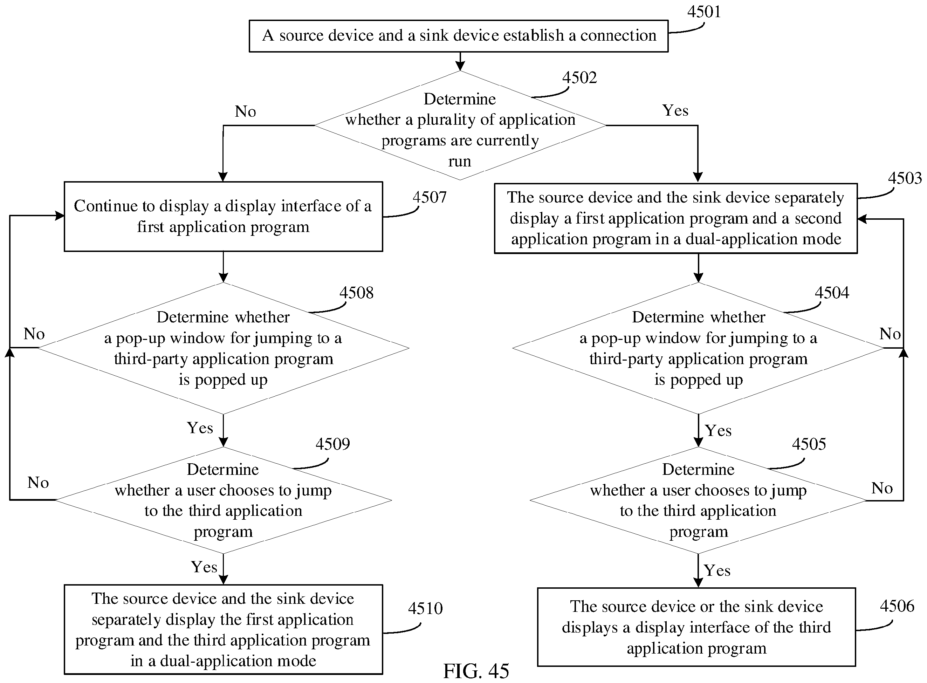

FIG. 45 is a schematic flowchart of a splicing display mode switching method 4500 according to an embodiment of this application. As shown in FIG. 45, the method 4500 includes the following steps.

S4501: A source device and a sink device establish a wireless connection.

It should be understood that, for S4501, refer to the process of S2901. For brevity, details are not described herein again.

S4502: The source device determines whether a plurality of application programs are currently run.

S4503: If the source device currently runs a plurality of application programs, the source device and the sink device may separately display a first application program and a second application program in a dual-application mode.

It should be understood that, for S4502 and S4503, refer to S4502 and S4503. Details are not described herein again.

S4504: In a process in which the source device and the sink device perform splicing display in the dual-application mode, the source device determines whether a pop-up window for jumping to a third application program is popped up.

It should be understood that a difference between S4504 and S4404 lies in: In S4404, the source device determines whether the notification message from the server corresponding to the third application program is received; in S4504, the source device determines whether the pop-up window for jumping to the third application program is received.

In an embodiment, a display interface of the first application program that is displayed on the source device includes a first interface element, and the first interface element is associated with the pop-up window for jumping to the third-party application program. When the source device detects an operation of tapping the first interface element by a user, the source device may display the pop-up window for jumping to the third-party application program.

In an embodiment, a display interface of the second application program that is displayed on the sink device includes a second interface element, and the second interface element is associated with the pop-up window for jumping to the third-party application program. After the sink device detects a touch event of the user, the sink device may send the touch event and corresponding coordinate information to the source device. In response to receiving the touch event and the coordinate information, the source device may determine that the user taps the second interface element on the sink device. The source device may send, to the sink device, image information corresponding to the display interface of the second application program that includes the pop-up window, so that the sink device displays the display interface of the second application program that includes the pop-up window.

S4505: The source device determines whether the user chooses to jump to the third application program.

S4506: If the source device detects an operation of choosing to jump to the third application program by the user, the source device may display a display interface of the third application program on the source device. Alternatively, the source device sends image information corresponding to a display interface of the third application program to the sink device, so that the sink device displays the display interface of the third application program.

In an embodiment, if the pop-up window is displayed on the source device, when the source device detects the operation of choosing to jump to the third application program by the user, the source device may send the image information corresponding to the display interface of the third application program to the sink device, so that the sink device displays the display interface of the third application program.

In an embodiment, if the pop-up window is displayed on the sink device, after the sink device detects a touch event of the user, the sink device may send the touch event and corresponding coordinate information to the source device. In response to receiving the touch event and the coordinate information that are sent by the sink device, the source device may determine that the user chooses to jump to the third application program. The source device may display the display interface of the third application program, and continue to send the image information corresponding to the display interface of the second application program to the sink device, so that the sink device continues to display the display interface of the second application program.

For example, as shown in FIG. 27(b), after a mobile phone B detects a touch event of the user, the mobile phone B may send the touch event and coordinate information to a mobile phone A. In response to receiving the touch event and the coordinate information, the mobile phone A may determine that the user taps a control 2704 on the mobile phone B. In this way, the mobile phone A may continue to display a display interface of subscription content in App 4, and send a display interface of content 1 in App 5 to the mobile phone B, so that the mobile phone B displays the display interface of the content 1 in App 5.

S4507: If the source device currently runs only a first application program, the source device may continue to display a display interface of the first application program.

S4508: In a process of displaying the display interface of the first application program, the source device determines whether a pop-up window for jumping to a third-party application program is popped up.

S4509: In the process of displaying the display interface of the first application program, the source device determines whether a user chooses to jump to the third application program.

S4510: If the source device detects an operation of choosing to jump to the third application program by the user, the source device and the sink device separately display the display interface of the first application program and a display interface of the third application program in a dual-application mode.

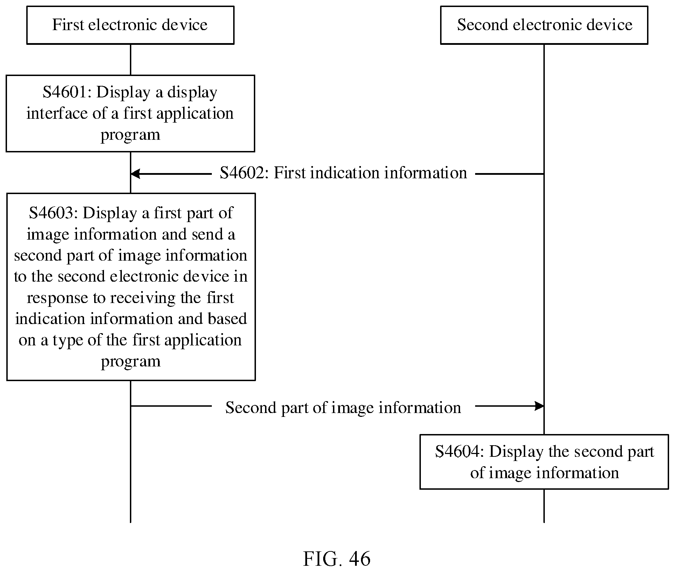

FIG. 46 is a schematic flowchart of a splicing display method 4600 according to an embodiment of this application. A first electronic device may be the foregoing source device, a second electronic device may be the foregoing sink device, the first electronic device includes a first application program, and the first electronic device communicates with the second electronic device through a short-distance wireless connection. The method 4600 includes the following steps.

S4601: The first electronic device displays a display interface of the first application program.

For example, as shown in FIG. 15(b), a mobile phone A may display a display interface of a video application.

For example, as shown in FIG. 18(a), a mobile phone A may display a display interface of a drawing application.

For example, as shown in FIG. 19(a), a mobile phone A may display a display interface of a music App.

S4602: The second electronic device sends first indication information to the first electronic device in response to detecting a first input of a user, where the first indication information indicates the first electronic device to perform splicing display with the second electronic device.

For example, as shown in FIG. 15(b), a mobile phone B may send the first indication information to the first electronic device when detecting an operation of sliding from left to right on a screen by the user.

For example, as shown in FIG. 18(a), a mobile phone B may send the first indication information to the first electronic device when detecting an operation of sliding from left to right on a screen by the user.

For example, as shown in FIG. 19(a), a mobile phone B may send the first indication information to the first electronic device when detecting an operation of sliding from left to right on a screen by the user.

It should be understood that for a process in which the second electronic device sends the first indication information to the first electronic device, refer to the foregoing process in which the sink device sends the indication information to the source device. Details are not described herein again.

S4603: The first electronic device displays a first part of image information and sends a second part of image information to the second electronic device based on a type of the first application program in response to receiving the first indication information, where the first part of image information and the second part of image information are associated with the display interface.

For example, as shown in FIG. 17(c), if a mobile phone A determines that App 5 is a document application program, the mobile phone A may choose to perform splicing display with a mobile phone B in a paging mode. The mobile phone A may display first-page content of a PDF, and send image information corresponding to second-page content of the PDF to the mobile phone B, so that the mobile phone B displays the second-page content.

For example, as shown in FIG. 15(b), if the mobile phone A determines that a current display interface is the display interface of the video application, the mobile phone A may choose to perform splicing display with the mobile phone B in a full-screen mode or a companion mode.

For example, as shown in FIG. 18(a), if the mobile phone A determines that a current display interface is the display interface of the drawing application, the mobile phone A may choose to perform splicing display with the mobile phone B in a full-screen mode or a companion mode.

For example, as shown in FIG. 19(a), if the mobile phone A determines that a current display interface is the display interface of the music application, the mobile phone A may choose to perform splicing display with the mobile phone B in a tabs mode or a companion mode.

For example, if the first electronic device currently displays a display interface of a navigation application program, the mobile phone A may determine to perform splicing display with the mobile phone B in a full-screen mode.

For example, if the first electronic device currently displays an interface of a shopping application program or a social application program, when receiving the first indication information, the first electronic device may choose to perform splicing display with the second electronic device in a parallel mode.

In an embodiment, the first electronic device displays the first part of image information and sends the second part of image information to the second electronic device based on the type of the first application program and a layout type of the display interface.

For example, as shown in FIG. 15(b), the display interface of the mobile phone A includes an area 1501, an area 1502, and an area 1503, where the area 1510 is a display area of a content element, and the area 1502 and the area 1503 are display areas of details pages of a video. In this case, when the mobile phone A determines that a type of the currently displayed application program is a video application program and a layout type of a page (or the display interface) is an area-based layout, the mobile phone A and the mobile phone B may perform splicing display in the companion mode. It should be understood that, when splicing display is performed in the companion mode, according to a rule customized in the application program, the mobile phone A may display content in a specific area on the mobile phone A, and send content in another area to the mobile phone B for display.

For example, if the mobile phone A is displaying a video playback interface in full screen when receiving the first indication information, when the mobile phone A determines that the type of the currently displayed application program is a video application program and the layout type of the page (or the display interface) is a full-screen layout, the mobile phone A and the mobile phone B may perform splicing display in the full-screen mode. It should be understood that when the mobile phone A displays a video playback interface in full screen, the playback interface may further include operation controls (for example, a start/pause control, a progress bar, and a video switching control). When the mobile phone A does not detect a touch operation of the user within preset duration, the mobile phone A may automatically hide these operation controls.

S4604: The second electronic device displays the second part of image information in response to receiving the second part of image information.

In this embodiment of this application, after receiving the first indication information of the second electronic device, the first electronic device may determine, based on a type of a currently displayed application program, a mode for performing splicing display with the second electronic device. In this way, the first electronic device and the second electronic device can be triggered to perform splicing display in a mode suitable for the type of the current application program, without a need to manually select the splicing display mode by the user. This reduces learning costs of the user for mode selection, helps improve an intelligence degree of the electronic device, and helps improve user experience.

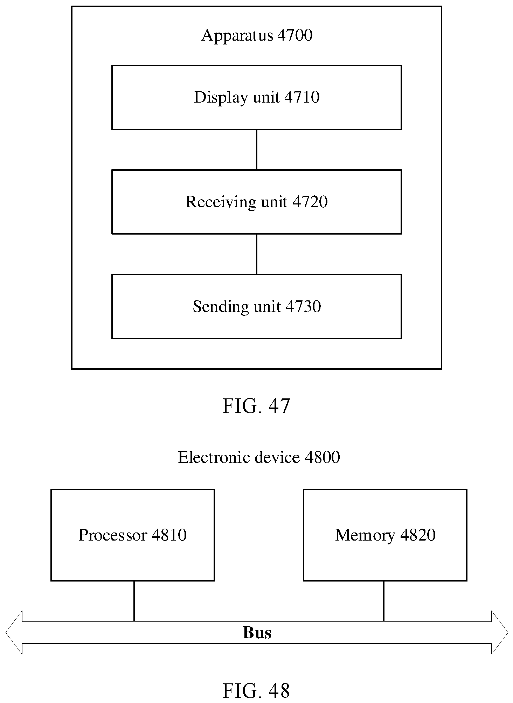

FIG. 47 is a schematic block diagram of an apparatus 4700 according to an embodiment of this application. The apparatus 4700 may be disposed in the first electronic device in FIG. 46. The apparatus 4700 includes: a display unit 4710, configured to display a display interface of a first application program; a receiving unit 4720, configured to receive first indication information sent by a second electronic device, where the first indication information indicates the apparatus to perform splicing display with the second electronic device, where the display unit 4710 is further configured to display a first part of image information based on a type of the first application program; and a sending unit 4730, configured to send a second part of image information to the second electronic device, where the first part of image information and the second part of image information are associated with the display interface.

FIG. 48 is a schematic diagram of a structure of an electronic device 4800 according to an embodiment of this application. As shown in FIG. 48, the electronic device includes one or more processors 4810 and one or more memories 4820. The one or more memories 4820 store one or more computer programs, and the one or more computer programs include instructions. When the instructions are run by the one or more processors 4810, a first electronic device or a second electronic device is enabled to perform the technical solution in the foregoing embodiments.

An embodiment of this application provides a system, including a first electronic device and a second electronic device. The system is configured to perform the technical solutions in the foregoing embodiments. Implementation principles and technical effects thereof are similar to those of the foregoing method embodiments. Details are not described herein again.

An embodiment of this application provides a computer program product. When the computer program product runs on a first electronic device (or a source device), the first electronic device is enabled to perform the technical solutions in the foregoing embodiments. Implementation principles and technical effects thereof are similar to those of the foregoing method embodiments. Details are not described herein again.

An embodiment of this application provides a readable storage medium. The readable storage medium includes instructions. When the instructions are run on a first electronic device (or a source device), the first electronic device is enabled to perform the technical solutions in the foregoing embodiments. Implementation principles and technical effects thereof are similar to those above. Details are not described herein again.

An embodiment of this application provides a chip. The chip is configured to execute instructions. When the chip runs, the technical solutions in the foregoing embodiments are performed. Implementation principles and technical effects thereof are similar to those above. Details are not described herein again.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A system, wherein the system comprises a first electronic device and a second electronic device, and the first electronic device communicates with the second electronic device through a short-distance wireless connection;

   the first electronic device is configured to display a display interface of a first application program;
   the second electronic device is further configured to send first indication information to the first electronic device in response to detecting a first input of a user, wherein the first indication information indicates the first electronic device to perform splicing display with the second electronic device;
   the first electronic device is further configured to display a first part of image information and send a second part of image information to the second electronic device based on a type of the first application program in response to receiving the first indication information, wherein the first part of image information and the second part of image information are associated with the display interface; and
   the second electronic device is further configured to display the second part of image information in response to receiving the second part of image information.

2. The system according to claim 1, wherein the first electronic device is specifically configured to:
   display the first part of image information and send the second part of image information to the second electronic device based on the type of the first application program and a layout type of the display interface.

3. The system according to claim 2, wherein the type of the first application program is a multimedia application program, the layout type of the display interface is displaying a first multimedia file in full screen, and the first electronic device is specifically configured to:
   expand and segment image information corresponding to the display interface based on a quantity of electronic devices that perform splicing display, a size of a display of the first electronic device, and a size of a display of the second electronic device, to obtain the first part of image information and the second part of image information.

4. The system according to claim 2, wherein the type of the first application program is a multimedia application program, the layout type of the display interface is a layout of a first area and a second area, the first area is a display area of a first multimedia file, and the second area is a display area of a details page of the first multimedia file;

   the first electronic device is specifically configured to: display the first multimedia file in full screen, and send image information corresponding to the details page of the first multimedia file to the second electronic device; and
   the second electronic device is specifically configured to display the details page of the first multimedia file in response to receiving the image information corresponding to the details page of the first multimedia file.

5. The system according to claim 1, wherein the type of the first application program is a document application program, the display interface displays first-page content of a first document, and the first document further comprises second-page content;

   the first electronic device is specifically configured to: display the first-page content, and send image information corresponding to the second-page content to the second electronic device; and

the second electronic device is specifically configured to display the second-page content in response to receiving the image information corresponding to the second-page content.

6. The system according to claim 1, wherein the type of the first application program is a shopping application program or a social application program, the display interface comprises a first interface element, and the first interface element is associated with another display interface of the first application program;

the first electronic device is specifically configured to: display the display interface, and send image information corresponding to the another display interface to the second electronic device; and
the second electronic device is specifically configured to display the another display interface in response to receiving the image information corresponding to the another display interface.

7. The system according to claim 2, wherein the type of the first application program is a drawing application program, the layout type of the display interface is a layout of a first area and a second area, the first area is a picture display area, and the second area is a drawing function display area;

the first electronic device is specifically configured to: display the picture display area, and send image information corresponding to the drawing function display area to the second electronic device; and
the second electronic device is specifically configured to display the drawing function display area in response to receiving the image information corresponding to the drawing function display area.

8. A splicing display method, wherein the method is applied to a first electronic device, the first electronic device communicates with a second electronic device through a short-distance wireless connection, and the method comprises:

displaying, by the first electronic device, a display interface of a first application program;
receiving, by the first electronic device, first indication information sent by the second electronic device, wherein the first indication information indicates the first electronic device to perform splicing display with the second electronic device; and
displaying, by the first electronic device, a first part of image information and sending a second part of image information to the second electronic device based on a type of the first application program in response to receiving the first indication information, wherein the first part of image information and the second part of image information are associated with the display interface.

9. The method according to claim 8, wherein the displaying, by the first electronic device, a first part of image information and sending a second part of image information to the second electronic device based on a type of the first application program comprises:
displaying, by the first electronic device, the first part of image information and sending the second part of image information to the second electronic device based on the type of the first application program and a layout type of the display interface.

10. The method according to claim 9, wherein the type of the first application program is a multimedia application program, the layout type of the display interface is displaying a first multimedia file in full screen, and the method further comprises:
expanding and segmenting, by the first electronic device, image information corresponding to the display interface based on a quantity of electronic devices that perform splicing display, a size of a display of the first electronic device, and a size of a display of the second electronic device, to obtain the first part of image information and the second part of image information.

11. The method according to claim 9, wherein the type of the first application program is a multimedia application program, the layout type of the display interface is a layout of a first area and a second area, the first area is a display area of a first multimedia file, and the second area is a display area of a details page of the first multimedia file; and

the displaying, by the first electronic device, the first part of image information and sending the second part of image information to the second electronic device based on the type of the first application program and a layout type of the display interface comprises:
displaying, by the first electronic device, the first multimedia file in full screen, and sending image information corresponding to the details page of the first multimedia file to the second electronic device.

12. The method according to claim 8, wherein the type of the first application program is a document application program, the display interface displays first-page content of a first document, and the first document further comprises second-page content; and

the displaying, by the first electronic device, a first part of image information and sending a second part of image information to the second electronic device based on a type of the first application program comprises: displaying, by the first electronic device, the first-page content, and sending image information corresponding to the second-page content to the second electronic device.

13. The method according to claim 8, wherein the type of the first application program is a shopping application program or a social application program, the display interface comprises a first interface element, and the first interface element is associated with another display interface of the first application program; and

the displaying, by the first electronic device, a first part of image information and sending a second part of image information to the second electronic device based on a type of the first application program comprises: displaying, by the first electronic device, the display interface, and sending image information corresponding to the another display interface to the second electronic device.

14. The method according to claim 9, wherein the type of the first application program is a drawing application program, the layout type of the display interface is a layout of a first area and a second area, the first area is a picture display area, and the second area is a drawing function display area; and

the displaying, by the first electronic device, a first part of image information and sending a second part of image information to the second electronic device based on a type of the first application program comprises: displaying, by the first electronic device, the picture display area, and sending image information corresponding to the drawing function display area to the second electronic device.

15. An electronic device, comprising:

one or more processors; and
one or more memories, wherein
the one or more memories store one or more computer programs, the one or more computer programs comprise instructions, and when the instructions are executed by the one or more processors, the electronic device is enabled to perform the method according to any one of claims 8 to 14.

16. A computer-readable storage medium, comprising computer instructions, wherein when the computer instructions are run on an electronic device, the electronic device is enabled to perform the method according to any one of claims 8 to 14.

Electronic device 100

Antenna 1                                    Antenna 2

| Mobile communication module 2G/3G/4G/5G [150] | Wireless communication module BT/WLAN/GNSS/NFC/IR/FM [160] |

| Speaker [170A] | | | Sensor module [180] |
| Receiver [170B] | Audio module [170] | | Pressure sensor [180A] |
| Microphone [170C] | | | Gyroscope sensor [180B] |
| Headset jack [170D] | | | Barometric pressure sensor [180C] |

| Displays 1 to N [194] | | Magnetic sensor [180D] |
| Cameras 1 to N [193] | | Acceleration sensor [180E] |
| Indicator [192] | Processor [110] | Distance sensor [180F] |
| Motor [191] | | Optical proximity sensor [180G] |
| Compass [190] | | Fingerprint sensor [180H] |
| Internal memory [121] | | Temperature sensor [180J] |
| SIM card interfaces 1 to N [195] | | Touch sensor [180K] |
| External memory interface [120] | | Ambient light sensor [180L] |

| USB interface [130] | Charging management module [140] | Power management module [141] | Bone conduction sensor [180M] |
| Charging input | | Battery [142] | |

FIG. 1

FIG. 2

FIG. 3(a)

Mobile phone A

Mobile phone B

Area 302

Area 303

FIG. 3(b)

FIG. 3(c)

Mobile phone A  Mobile phone B  Mobile phone C

Area 304  Area 305  Area 306

FIG. 3(d)

Mobile phone A

Mobile phone B

FIG. 4(a)

Mobile phone A

Mobile phone B

Area 401

Area 402

Area 403

FIG. 4(b)

Mobile phone A

Mobile phone B

Mobile phone C

Exit

4G 4G

08:08

08:08
Sunday,
September 6

35°C
Xi'an

App 1    App 2    App 3    App 4

App 5    App 6    App 7    App 8

App 9    App 10   App 11   App 12

FIG. 4(c)

EP 4 273 675 A1

Mobile phone A    Mobile phone B    Mobile phone C

Area 404    Area 405    Area 406    Area 407    Area 408

FIG. 4(d)

FIG. 5(a)

Mobile phone A          Mobile phone B          Mobile phone C

FIG. 5(b)

FIG. 5(c)

FIG. 6(a)

Mobile phone A

Mobile phone B

FIG. 6(b)

FIG. 6(c)

Mobile phone A

Mobile phone B

Parallel

Dual-application

Paging

Exit

607

00:20

02:47

"Media title"
Episode selection

Introduction >

| 1 | 2 | 3 |

| 7 | ▶ | 9 |

| 4 | 5 | 6 |

| 10 | 11 | ... |

FIG. 6(d)

EP 4 273 675 A1

Mobile phone A

Mobile phone B

Parallel

Dual-application

Paging

Exit

00:20

02:47

FIG. 6(e)

EP 4 273 675 A1

FIG. 7(a)

Mobile phone A

Mobile phone B

4G 4G 📶 🔋 08:08

**08:08**

☀️☁️ 35°C
Xi'an

Thursday, August 6

App 1    App 2    App 3    App 4 (hidden)

App 5    App 6    App 7    App 8

● ○ ○

App 9    App 10    App 11    App 12

◁ ○ □

4G 4G 📶 🔋 08:08

( Parallel )  ( Full-screen )  ( Paging )  ( Exit )

08:08    ☁️    Xi'an

Thursday, August 6

App 1    App 2    App 3    App 4

App 5    App 6    App 7    App 8

● ○ ○

App 9    App 10    App 11    App 12

◁ ○ □

FIG. 7(b)

FIG. 7(c)

Mobile phone A

Mobile phone B

4G 4G 📶 📶 🛜                    🔋 08:08

App 3

Movies        TV series        Shows

"Movie 1"              "Movie 2"

"Movie 3"              "Movie 4"

◁    ○    □

4G 4G 📶 📶 🛜                    🔋 08:08

App 4    Parallel    Full-screen    Paging    Exit

Today          8 photos and 4 videos

July 24, 2020

◁    ○    □

FIG. 7(d)

EP 4 273 675 A1

FIG. 8(a)

FIG. 8(b)

FIG. 8(c)

Mobile phone A

Mobile phone B

4G 4G

08:08

08:08

Thursday, August 6

Parallel   Dual-application   Paging   Exit

Xi'an

App 1          App 2

App 3          App 4

App 5          App 6

App 7          App 8

App 9          App 10

App 11         App 12

FIG. 9(a)

EP 4 273 675 A1

Mobile phone A

Mobile phone B

4G 4G 📶 🔋 08:08

**08:08**

☀️☁️ 35°C
Xi'an

Thursday, August 6

App 1    App 2    App 3    App 4

App 5    App 6    App 8

App 9    App 10    App 11    App 12

4G 4G 📶 🔋 08:08

Full-screen    Dual-application    Paging    Exit

35°C

Thursday, August 6
High-tech zone ◉

App 13    App 14    App 15    App 16

App 17    App 18    App 19    App 20

○ ● ○

App 21    App 22    App 23    App 24

FIG. 9(b)

EP 4 273 675 A1

Mobile phone A

Mobile phone B

4G||| 4G||| 🛜                    ▯▭ 08:08

App 6

**Dad**                              Yesterday
                                          21:30
Good night!

**Mom**

Happy birthday!

**Sam**                              Saturday

Happy birthday!

**Lucy**                             Friday

Bye!

◁          ○          □

4G||| 4G||| 🛜                    ▯▭ 08:08

Full-screen     Dual-application     Paging     Exit

Thursday, August 6
High-tech zone ⊚

App 13     App 14     App 15     App 16

App 17     App 18     App 19     App 20

○  ●  ○

App 21     App 22     App 23     App 24

◁          ○          □

FIG. 9(c)

EP 4 273 675 A1

Mobile phone A

Mobile phone B

FIG. 9(d)

EP 4 273 675 A1

Mobile phone A

Full-screen | Dual-application | Paging | Exit

Dad

Awaiting response...

Cancel

Mobile phone B

4G 4G 🛜                    🔋 08:08

‹        Dad

Yesterday 21:30

Good night!

Send

Photos          Camera          Video call

● ○

FIG. 9(e)

FIG. 9(f)

FIG. 10(a)

4G 4G

1005  1004  1003

Exit  Paging  Dual-application  Parallel

1006

35°C

App 13  App 14

App 17  App 18

App 21  App 22

08:08

08:08

Thursday, August 6

High-tech zone

App 15  App 16

App 19  App 20

App 23  App 24

FIG. 10(b)

EP 4 273 675 A1

Mobile phone A　　　　　　　　　　　　Mobile phone B

4G 4G 🛜　　　　🔋 08:08

08:08

☀️☁️ 35°C
Xi'an

Thursday, August 6

1101

App1　App 2　App 3　App 4

App 5　App 6　App 7　App 8

● ○ ○

App 9　App 10　App 11　App 12

◁　○　▢

4G 4G 🛜　　　　🔋 08:08

☀️☁️

35°C

08:08

Thursday, August 6

High-tech zone ◉

1102

App 1　　4　App 15　App 16

App 17　App 18　App 19　App 20

○ ● ○

App 21　App 22　App 23　App 24

◁　○　▢

EP 4 273 675 A1

83

FIG. 11(a)

FIG. 11(b)

Mobile phone A

Mobile phone B

4G 4G 📶

08:08

Thursday, August 6

Parallel | Dual-application | Paging | Exit

☀️☁️ 35°C
Xi'an

App 1 App 2

App 3 App 4

App 5 App 6

App 7 App 8

App 9 App 10

App 11 App 12

◁ ○ □

◁ ○ □

FIG. 11(c)

EP 4 273 675 A1

EP 4 273 675 A1

Mobile phone A

Mobile phone B

08:08

35°C
Xi'an

Thursday, August 6

35°C

08:08

Thursday, August 6

High-tech zone ⦿

1201

1202

App1   App 2   App 3   App 4

App 14   App 15   App 16

App 5   App 6   App 7   App 8

App 17   App 18   App 19   App 20

App 9   App 10   App 11   App 12

App 21   App 22   App 23   App 24

FIG. 12(a)

FIG. 12(b)

4G‖4G‖ 📶

Exit      Paging      Dual-application      Parallel

35°C

08:08

Thursday, August 6

High-tech zone ◎

App 13      App 14

App 17      App 18

App 21      App 22

App 15      App 16

App 19      App 20

App 23      App 24

FIG. 12(c)

EP 4 273 675 A1

FIG. 13(a)

Mobile phone B

Exit

Paging

Dual-application

Parallel

35°C Xi'an

App 4

App 8

App 12

App 3

App 7

App 11

Mobile phone A

08:08

Thursday, August 6

App 2

App 6

App 10

App 1

App 5

App 9

4G 4G

FIG. 13(b)

The mobile phone B is away from the mobile phone A

Exit

Paging

Dual-application

Parallel

App 4

App 8

App 12

App 3

App 7

App 11

App 2

App 6

App 10

App 1

App 5

App 9

35°C
Xi'an

08:08

Thursday, August 6

4G 4G

FIG. 14(a)

Mobile phone A

Mobile phone B

08:08
Thursday, August 6

35°C
Xi'an

35°C

08:08
Thursday, August 6

High-tech zone

App 1    App 2    App 3    App 4

App 5    App 6    App 7    App 8

App 9    App 10    App 11    App 12

App 13    App 14    App 15    App 16

App 17    App 18    App 19    App 20

App 21    App 22    App 23    App 24

FIG. 14(b)

Mobile phone A

Mobile phone B

4G 4G 📶 🛜                    🔋 08:08

Video App

Movies        **TV series**        Shows

"TV series 1"        "TV series 2"

"TV series 3"        "TV series 4"

◁        ○        ▢

4G 4G 📶 🛜                    🔋 08:08

⛅ 35°C

# 08:08

Sunday, September 6

High-tech zone ◎

App 1        App 2        App 3

App 4        App 5        App 6

○ ● ○

App 7        App 8        App 9

◁        ○        ▢

FIG. 15(a)

EP 4 273 675 A1

Mobile phone A

Mobile phone B

4G 4G 📶      🔋08:08

4G 4G 📶      🔋08:08

1501

⛅ 35°C

08:08

Sunday, September 6

High-tech zone ◎

▶ ━━━━━●━━━━

1502

"TV series 2"

Episode selection

| 1 | 2 | 3 | 4 | 5 |

| 6 | ▶ | 8 | 9 | ... |

App 1    App 2    App 3

App 4    App 5    App 6

○ ● ○

1503

👤 Write your comments!

App 7    App 8    App 9

◁ ○ □

◁ ○ □

FIG. 15(b)

EP 4 273 675 A1

Mobile phone A                    Mobile phone B

FIG. 15(c)

EP 4 273 675 A1

Mobile phone A

Mobile phone B

4G 4G

Videos

App

08:08

Movies          **TV series**

Shows          Short videos

"TV series 1"

"TV series 2"

"TV series 3"

"TV series 4"

FIG. 16(a)

EP 4 273 675 A1

Mobile phone A

Mobile phone B

"TV series 1"

Episode selection

| 1 | 2 | 3 | 4 | 5 |
| 6 | ▲ | 8 | 9 | ⋯ |

Write your comments!

Comment 1
This TV series is very good

Comment 2
The animation effect is very good

Comment 3
Looking forward to more new works

FIG. 16(b)

Mobile phone B

Mobile phone A

FIG. 17(a)

Mobile phone A

Mobile phone B

4G 4G 📶 🔋 08:08

Document 1

**PDF 1/8**

**PDF 2/8**

FIG. 17(b)

EP 4 273 675 A1

99

Mobile phone A

Mobile phone B

4G 4G 📶 🔋 08:08

1801

1802

T ▮ ↻ √

Brightness ————●————
Contrast ratio ————●————
Shadow ————●————

4G 4G 📶 🔋 08:08

⛅ 35°C

08:08

Sunday, September 6

⟶ High-tech zone ◉

App 1    App 2    App 3

App 4    App 5    App 6

○ ● ○

App 7    App 8    App 9

FIG. 18(a)

EP 4 273 675 A1

100

FIG. 18(b)

Mobile phone A

Mobile phone B

4G 4G 🛜                    ▭ 08:08

Music App

"Pop"

"Folk"

"Rap"

● ○ ○

4G 4G 🛜                    ▭ 08:08

⛅ 35°C

08:08

Sunday, September 6

High-tech zone ◉

App 1      App 2      App 3

App 4      App 5      App 6

○ ● ○

App 7      App 8      App 9

FIG. 19(a)

EP 4 273 675 A1

FIG. 19(b)

Mobile phone A

4G 4G 08:08

App 4
Just now
**Li Hua**
There is a conference at
9 a.m.

2001

00:30 01:40

Mobile phone B

4G 4G 08:08

35°C
08:08
Thursday, August 6
High-tech zone

App 13　App 14　App 15　App 16
App 17　App 18　App 19　App 20
App 21　App 22　App 23　App 24

FIG. 20(a)

Mobile phone A

Mobile phone B

4G 4G             08:08

4G 4G             08:08

There is a conference at 9 a.m.

2002

Send

00:30          01:40

Photos     Camera     Video call

FIG. 20(b)

EP 4 273 675 A1

**Mobile phone B**

4G 4G
08:08

There is a conference
at 9 a.m.

Send

Photos

Camera

Video call

**Mobile phone A**

4G 4G
08:08

00:30
01:40

FIG. 20(c)

Mobile phone A

Mobile phone B

4G 4G ⊪ᵢₗₗ ⊪ₗₗₗ    ▭ 08:08

4G 4G ⊪ᵢₗₗ ⊪ₗₗₗ 🛜    ▭ 08:08

⛅ 35°C

**08:08**

Thursday, August 6

High-tech zone ◎

| | | | |
|---|---|---|---|
| App 13 | App 14 | App 15 | App 16 |
| App 17 | App 18 | App 19 | App 20 |

○ ● ○

| | | | |
|---|---|---|---|
| App 21 | App 22 | App 23 | App 24 |

00:30                                            01:40

◁        ○        ▢

◁        ○        ▢

FIG. 20(d)

EP 4 273 675 A1

Mobile phone B

Mobile phone A

08:08

01:40

00:30

FIG. 20(e)

FIG. 21(a)

4G 4G          08:08

App 4        Just now   — 2101

**Li Hua**

There is a conference at 9 a.m.

"Movie 1"      "Movie 2"

"Movie 3"      "Movie 4"

4G 4G          08:08

Photos

**8 photos and 4 videos**

**Today**

**July 24, 2020**

FIG. 21(b)

Mobile phone A

Li Hua

There is a
conference at 9 a.m.

Send

Photos    Camera    Video call

Mobile phone B

Photos

Today    8 photos and 4 videos

July 24, 2020

FIG. 21(c)

FIG. 22(a)

Mobile phone A

Mobile phone B

App 4
Li Hua
There is a conference at 9 a.m.

Just now

2201

00:22

02:47

FIG. 22(b)

Mobile phone A

Mobile phone B

4G 4G  ▢ 08:08

4G 4G  ▢ 08:08

Li Hua

There is a
conference at 9 a.m.

00:28                    02:47

Send

Photos        Camera       Video call

FIG. 22(c)

Mobile phone A

Mobile phone B

App 12        Just now    2301
Amy
Happy birthday!

00:20

02:47

FIG. 23(a)

EP 4 273 675 A1

Mobile phone A

Mobile phone B

4G 4G     08:08

4G 4G     08:08

Amy

Happy birthday!

Send

Photos     Camera     Video call

00:28     02:47

FIG. 23(b)

Mobile phone B

02:47

Mobile phone A

00:45

FIG. 23(c)

FIG. 24(a)

Mobile phone A

Mobile phone B

App 4
Li Hua
There is a conference
at 9 a.m.

Just now

00:22

02:47

FIG. 24(b)

EP 4 273 675 A1

Mobile phone A

Mobile phone B

4G .ıllı 4G .ıllı ▭◗ 08:08

Li Hua

‹

There is a
conference at 9 a.m.

4G .ıllı 4G .ıllı ▭◗ 08:08

00:21                    02:47

◁        ○        ▢

◁        ○        ▢

FIG. 24(c)

FIG. 25(a)

Mobile phone A                    Mobile phone B

App 4
Li Hua
There is a conference at 9 a.m.

Just now

00:22                    02:47

FIG. 25(b)

EP 4 273 675 A1

Mobile phone A

Li

There is a conference at 9 a.m.

Mobile phone B

08:08

Hua

FIG. 25(c)

Mobile phone A

2601

App 7
The price of the commodity 1 that you
are concerned about has been reduced!

Good night!

**Mom**                    Saturday
Happy birthday!

**Sam**                    Saturday
Happy birthday!

**Lucy**                   Friday
Bye!

Mobile phone B

Dad

Yesterday 21:30

Good night!

Send

Photos      Camera      Video call

FIG. 26(a)

EP 4 273 675 A1

Mobile phone A

| 4G 4G | | 08:08 |

App 6

**Dad** Yesterday 21:30
Good night!

**Mom** Saturday
Happy birthday!

**Sam** Saturday
Happy birthday!

**Lucy** Friday
Bye!

▽ ○ □

Mobile phone B

| 4G 4G | | 08:08 |

⋀ Commodity 1

[Tap to play ▲] 1/4

¥ 6999

Introduction to a commodity 2

Detailed descriptions of the commodity 1

☆
⌂ Store  Favorites  [Add to cart] [Buy now]

▽ ○ □

FIG. 26(b)

4G 4G 08:08

App 4

Subscription content

Content 1

xxxxxxxxxxx

Content 2

xxxxxxxxxxx

Content 3

xxxxxxxxxxx

4G 4G 08:08

Content 1

xxxxxxxxxxxxxxxxxxxxxxxxxxxxxxx
xxxxxxxxxxxxxxxxxxxxxxxxxxxxxxx

Message content is from App 5.
Click the link to view Link — 2701

FIG. 27(a)

Mobile phone A

Mobile phone B

4G ,ıll 4G ,ıll 🤖                        ▭ 08:08

App 4

Subscription content

Content 1

xxxxxxxxxxx

Content 2

xxxxxxxxxxx

Content 3

xxxxxxxxxxx

◁        ◯        ▢

4G ,ıll 4G ,ıll 🤖                        ▭ 08:08

< Content 1

xxxxxxxxxxxxxxxxxxxxxxxxxxxx
xxxxxxxxxxxxxxxxxxxxxxxxxxxx
x

Message content is from App 5. Click
the link to view Link

2702

Whether to open App 5 to view
the content 1

2703                                2704

Cancel                        Confirm

◁        ◯        ▢

FIG. 27(b)

EP 4 273 675 A1

Mobile phone A

Mobile phone B

| 4G 4G | 08:08 |
|---|---|

App 4

Subscription content

Content 1

xxxxxxxxxxx

Content 2

xxxxxxxxxxx

Content 3

xxxxxxxxxxx

| 4G 4G | 08:08 |
|---|---|

App 5

Content 1

xxxxxxxxxxxxxxxxxxxxxxxxxxxxxxx
xxxxxxxxxxxxxxxxxxxxxxxxxxxxx

FIG. 27(c)

FIG. 28

Source device

Application program layer

App 1 | App 2 | ...

Application program framework layer

Layer management | Input subsystem | ...

Native layer

Layer synthesis module | Layer cropping module | ...

Server layer

Audio/Video stream capture module | Virtual screen management module

Network module

Sink device

Application program layer

App 13 | App 14 | ...

Application program framework layer

Sound system | Display system
Input system | ...

Native layer

Video rendering module | Audio/Video decoding module
Reverse input event capture module | ...

Server layer

Network module

EP 4 273 675 A1

129

| Source device | Sink device 1 | Sink device 2 |
|---|---|---|

S2901: Establish a wireless connection

S2902: Indicate to enter a full-screen mode

S2903: Double a canvas

S2904: Crop a doubled canvas, where a cropped part is displayed on the source device, and the other cropped part is placed into a virtual screen

S2905: Projection

S2906: Establish a wireless connection

S2907: Indicate to enter the full-screen mode

S2908: Triple the canvas

S2909: Crop a tripled canvas, where a first cropped part is displayed on the source device, a second cropped part is placed into a virtual screen 1, and a third cropped part is placed into a virtual screen 2

| TO FIG. 29B | TO FIG. 29B | TO FIG. 29B |
|---|---|---|

FIG. 29A

CONT.
FROM
FIG. 29A

CONT.
FROM
FIG. 29A

CONT.
FROM
FIG. 29A

——— S2910: Projection ———→

———————————— S2910: Projection ————————————→

S2911: Detect an operation
of exiting the full-screen
mode

←——— S2912: Indicate to exit the full-screen mode ———

S2913: Adjust a canvas size, and re-
perform splicing with the sink device 1

S2914: Detect an operation of
exiting the full-screen mode

←—— S2915: Indicate to exit
the full-screen mode

S2916: Restore single-device display

FIG. 29B

(1080, 2340)                                                            (2160, 2340)

Original canvas  2340        Double ———►                                2340

(0, 0)   1080                (0, 0)        2160

(1080, 2340)                                                            (2160, 2340)

Cropped area 1                              Cropped area 2

(0, 0)          Place into the virtual      (1080, 0)
                screen 0 after cropping                   Shift leftwards
                                                          by 1080 after
                                                          cropping, and
                                                          place into the
                                                          virtual screen 1

Virtual screen 0                            Virtual screen 1

FIG. 30

(1080, 2340)

Z    (2160, 2340)

Original canvas    2340

Double →

Area that needs to be removed

2340

(0, 0)    1080

(0, 0)    2160

(1080, 2340)

(2160, 2340)

Area that needs to be removed

Cropped area 3

Area that needs to be removed

Cropped area 4

(0, 0)

Place into the virtual screen 0 after cropping

(1080+x, 0)

Shift leftwards by 1080+x after cropping, and place into the virtual screen 1

Virtual screen 0

Virtual screen 1

FIG. 31

FIG. 32

FIG. 33

Source device                  Sink device

S3401: Establish a wireless connection

S3402: Indicate to enter a paging mode

S3403: Double a canvas

S3404: Obtain half of a doubled canvas through cropping for display, and display the other half obtained through cropping on a virtual screen 1

S3405: Projection

S3406: Detect an operation of starting an App by a user, and loads content on a second page on the doubled canvas

S3407: Obtain half of the doubled canvas through cropping for display, and display the other half on the virtual screen 1

S3408: Projection

FIG. 34

08:08

08:08
Thursday, August 6

35°C
Xi'an

App 1    App 2    App 3    App 4

App 5    App 6    App 7    App 8

App 9    App 10    App 11    App 12

08:08

App 25    App 26    App 27    App 28

First desktop page of a mobile phone A

Second desktop page of the mobile phone A

~
TO
FIG. 35B

FIG. 35A

CONT.
FROM
FIG. 35A
~

3501

3502

4G 4G                    ▭ 08:08

08:08          ☁    35°C
                    Xi'an
Thursday, August 6

| App 1 | App 2 | App 3 | App 4 | | App 25 | App 26 | App 27 | App 28 |

App 5    App 6    App 7    App 8

● ○ ○

App 9    App 10    App 11    App 12

↓                                        ↓

Place into a display 0 after cropping          Shift leftwards by 1080 after
                                        cropping, and place into a display 1

FIG. 35B

| Source device | | Sink device |
|---|---|---|

S3601: Establish a wireless connection

S3602: Indicate to enter a parallel mode

S3603: Double a canvas

S3604: When detecting that a user starts an App, display a home page of the App on half of a doubled canvas

S3605: When detecting that the user taps an activity page on the home page of the App, display the activity page on the other half of the doubled canvas

S3606: Obtain half of the canvas through cropping for display on a display, and display the other half on a virtual screen 1

S3607: Projection

FIG. 36

3701　　　　　　　　　　　　　　　　　　3702

CONT.
FROM
FIG. 37A

4G‖ 4G‖ 📶　　　　　　🔋 08:08　　4G‖ 4G‖ 📶　　　　　　🔋 08:08

App 6　　　　　　　　　　　< 　　　　Dad

**Dad**　　　　　Yesterday　　　　　　Yesterday 21:30
　　　　　　　　　21:30
Good night!　　　　　　　　　　　　　　Good night!

**Mom**　　　　　Saturday

Happy birthday!

**Sam**　　　　　Saturday

Happy birthday!

**Lucy**　　　　　Friday

Bye!

Place into the virtual　　　　Shift leftwards by 1080 after
screen 0 after cropping　　　cropping, and place into the
　　　　　　　　　　　　　　　virtual screen 1

TO　　　　　　　　　　　　TO
FIG. 37C　　　　　　　　FIG. 37C

FIG. 37B

CONT.
FROM
FIG. 37B
~

Virtual screen 0

CONT.
FROM
FIG. 37B
~

Virtual screen 1

FIG. 37C

| Source device | | Sink device |
|---|---|---|

S3801: Establish a wireless connection

S3802: Indicate to enter a dual-application mode

S3803: Create a virtual screen, and place a canvas corresponding to a desktop into the virtual screen

S3804: Projection

S3805: Touch event and coordinate information

S3806: Start a first application program, and run the first application program in the virtual screen

S3807: Projection

FIG. 38

```
┌─────────────────────┐                    ┌─────────────────────┐
│    Source device    │                    │     Sink device     │
└─────────────────────┘                    └─────────────────────┘
```

◄────── S3901: Establish a wireless connection ──────►

┌───────────────────────────┐
│ S3902: Display a first interface,
│ where the first interface includes
│ a plurality of areas
└───────────────────────────┘

◄────── S3903: Indicate to perform splicing display ──────

┌───────────────────────────┐
│ S3904: Create a virtual screen 1
└───────────────────────────┘

┌───────────────────────────┐
│ S3905: Display content of a first
│ area, and place content of a second
│ area into the virtual screen 1
└───────────────────────────┘

├── S3906: Project the virtual screen 1 to the sink device ──►

FIG. 39

1501

1502

1503

"TV series 2"

Episode selection

| 1 | 2 | 3 | 4 | 5 |

| 6 | ▶ | 8 | 9 | ... |

Ⓠ Write your comments!

Double a
canvas, and
rearrange areas

"TV series 2"

Episode selection

| 1 | 2 | 3 | 4 | 5 |

| 6 | ▶ | 8 | 9 | ... |

Ⓠ Write your comments!

Comment 1
This TV series is very good

Comment 2
The animation effect is very good

Comment 3
Looking forward to more new works

~
TO
FIG. 40B

~
TO
FIG. 40B

FIG. 40A

"TV series 2"
Episode selection

| 1 | 2 | 3 | 4 | 5 |

| 6 | ► | 8 | 9 | ... |

Ⓠ ( Write your comments! )

Comment 1
This TV series is very good

Comment 2
The animation effect is very good

Comment 3
Looking forward to more new works

Place into the virtual screen 0 after cropping

"TV series 2"
Episode selection

| 1 | 2 | 3 | 4 | 5 |

| 6 | ► | 8 | 9 | ... |

Ⓠ ( Write your comments! )

Comment 1
This TV series is very good

Comment 2
The animation effect is very good

Comment 3
Looking forward to more new works

Shift leftwards by 1080 after cropping, and place into the virtual screen 1

FIG. 40B

"TV series 2"

| 1 | 2 | 3 | 4 | 5 |
| 6 | ▶ | 8 | 9 | ... |

Write your comments!

Comment 1
This TV series is very good

Comment 2
The animation effect is very good

Comment 3
Looking forward to more new works

FIG. 40C

| Source device | | Sink device |
|---|---|---|

S4101: Establish a wireless connection

S4102: Indicate to perform splicing display

S4103: Create a virtual screen 1

S4104: Crop a doubled canvas, display content including a first tab, and places, into a display 1, content that includes a second tab and that is obtained through cropping

S4105: Project the virtual screen 1 to the sink device

FIG. 41

FIG. 42A

First tab of the music App

~
TO
FIG. 42B

FIG. 42A

Second tab of the music App

4201

4202

4G .ıllı 4G .ıllı ▭▶ 08:08

Music App

"Pop"

"Folk"

"Rap"

● ○ ○

"Pure"

"Electronic"

"Rock"

○ ● ○

Place into a display 0
after cropping

Shift leftwards by 1080
after cropping, and place
into a display 1

FIG. 42B

EP 4 273 675 A1

A source device and a sink device establish a connection ⌒4301

Determine a type of a currently displayed application program ⌒4302

Determine whether the type is suitable for multi-device splicing display ⌒4303

Yes

No

Determine a splicing display mode suitable for a layout type of a current page ⌒4304

Display a display interface of the application program in a single-device mode

Perform splicing display in a full-screen mode

Perform splicing display in a paging mode

Perform splicing display in a parallel mode

Perform splicing display in a companion mode

FIG. 43

FIG. 44

```
                                                                    4501
        ┌────────────────────────────────────────────────────┐
        │ A source device and a sink device establish a connection │
        └────────────────────────────────────────────────────┘
                                    │
                                    ▼
                              ╱─────────╲      4502
                            ╱   Determine   ╲
         No            ╱ whether a plurality of application ╲        Yes
     ◄─────────────── ╲   programs are currently   ╱ ───────────►
                        ╲        run        ╱
                          ╲─────────────╱
```

| Continue to display a display interface of a first application program | 4507 | | The source device and the sink device separately display a first application program and a second application program in a dual-application mode | 4503 |

```
        ┌─────────────┐                              ┌─────────────┐
        │  Determine whether  │  4508                │  Determine whether  │  4504
        │  a pop-up window for jumping to a  │        │  a pop-up window for jumping to a  │
  No ◄──│  third-party application program  │        │  third-party application program  │──► No
        │  is popped up  │                            │  is popped up  │
        └─────────────┘                              └─────────────┘
              │ Yes                                        │ Yes
              ▼                                            ▼
        ┌─────────────┐  4509                         ┌─────────────┐  4505
        │   Determine   │                             │   Determine   │
  No ◄──│ whether a user chooses to jump │            │ whether a user chooses to jump │──► No
        │ to the third application │                  │ to the third application │
        │    program    │                             │    program    │
        └─────────────┘                              └─────────────┘
              │ Yes                                        │ Yes
              ▼                                            ▼
```

| The source device and the sink device separately display the first application program and the third application program in a dual-application mode | 4510 | | The source device or the sink device displays a display interface of the third application program | 4506 |

FIG. 45

```
┌─────────────────────────┐                    ┌─────────────────────────┐
│  First electronic device │                    │ Second electronic device │
└─────────────────────────┘                    └─────────────────────────┘
            │                                               │
┌─────────────────────────┐                                │
│ S4601: Display a display │                                │
│ interface of a first     │                                │
│ application program      │                                │
└─────────────────────────┘                                │
            │◄──── S4602: First indication information ─────│
┌─────────────────────────┐                                │
│ S4603: Display a first   │                                │
│ part of image            │                                │
│ information and send a   │                                │
│ second part of image     │                                │
│ information to the       │                                │
│ second electronic device │                                │
│ in response to receiving │                                │
│ the first indication     │                                │
│ information and based on │                                │
│ a type of the first      │                                │
│ application program      │                                │
└─────────────────────────┘                                │
            │──── Second part of image information ────────►│
            │                                   ┌─────────────────────────┐
            │                                   │ S4604: Display the second│
            │                                   │ part of image information│
            │                                   └─────────────────────────┘
            │                                               │
```

FIG. 46

Apparatus 4700

Display unit 4710

Receiving unit 4720

Sending unit 4730

FIG. 47

Electronic device 4800

Processor 4810

Memory 4820

**Bus**

FIG. 48

<div style="text-align:center">**INTERNATIONAL SEARCH REPORT**</div>

| International application No. |
| --- |
| **PCT/CN2022/075354** |

**A.  CLASSIFICATION OF SUBJECT MATTER**

G06F 3/048(2013.01)i

According to International Patent Classification (IPC) or to both national classification and IPC

**B.  FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

WPABSC; CNTXT; CJFD; ENTXTC: 显示, 共享, 无线, 拼接, 通信, display, sharing, wireless, stitching, communication

**C.  DOCUMENTS CONSIDERED TO BE RELEVANT**

| Category* | Citation of document, with indication, where appropriate, of the relevant passages | Relevant to claim No. |
| --- | --- | --- |
| X | US 2018004474 A1 (GEELY HOLDING GROUP CO., LTD. et al.) 04 January 2018 (2018-01-04) <br>   description paragraphs [0002]-[0048], [0062]-[0087], and [0134]-[0136], and description, figures 1-10 | 1-16 |
| A | US 2018121082 A1 (BEIJING XIAOMI MOBILE SOFTWARE CO., LTD.) 03 May 2018 (2018-05-03) <br>   entire document | 1-16 |
| A | CN 108205411 A (ZTE CORP.) 26 June 2018 (2018-06-26) <br>   entire document | 1-16 |
| A | CN 111954079 A (VIVO COMMUNICATION TECHNOLOGY CO., LTD.) 17 November 2020 (2020-11-17) <br>   entire document | 1-16 |
| A | US 2020372142 A1 (HUAWEI TECHNOLOGIES CO., LTD.) 26 November 2020 (2020-11-26) <br>   entire document | 1-16 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 March 2022** | **28 March 2022** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/075354**

| Patent document cited in search report | | | Publication date (day/month/year) | Patent family member(s) | | | Publication date (day/month/year) |
|---|---|---|---|---|---|---|---|
| US | 2018004474 | A1 | 04 January 2018 | EP | 3249518 | A1 | 29 November 2017 |
| | | | | EP | 3249518 | A4 | 15 August 2018 |
| | | | | EP | 3249518 | B1 | 18 December 2019 |
| | | | | JP | 2018512081 | A | 10 May 2018 |
| | | | | ES | 2770797 | T3 | 03 July 2020 |
| | | | | US | 10445049 | B2 | 15 October 2019 |
| | | | | WO | 2016116000 | A1 | 28 July 2016 |
| | | | | CN | 104679470 | A | 03 June 2015 |
| | | | | CN | 104679470 | B | 15 January 2019 |
| US | 2018121082 | A1 | 03 May 2018 | CN | 106537319 | A | 22 March 2017 |
| | | | | EP | 3316112 | A1 | 02 May 2018 |
| | | | | EP | 3316112 | B1 | 11 December 2019 |
| | | | | RU | 2680763 | C1 | 26 February 2019 |
| | | | | JP | 2018535455 | A | 29 November 2018 |
| | | | | JP | 6553719 | B2 | 31 July 2019 |
| | | | | WO | 2018076328 | A1 | 03 May 2018 |
| | | | | IN | 201747011774 | A | 06 October 2017 |
| CN | 108205411 | A | 26 June 2018 | WO | 2019062912 | A1 | 04 April 2019 |
| CN | 111954079 | A | 17 November 2020 | None | | | |
| US | 2020372142 | A1 | 26 November 2020 | WO | 2018209578 | A1 | 22 November 2018 |
| | | | | US | 2021397689 | A1 | 23 December 2021 |
| | | | | US | 11086975 | B2 | 10 August 2021 |
| | | | | CN | 109074171 | A | 21 December 2018 |
| | | | | EP | 3640787 | A1 | 22 April 2020 |
| | | | | EP | 3640787 | A4 | 19 August 2020 |
| | | | | CN | 109074171 | B | 30 March 2021 |
| | | | | IN | 201917049238 | A | 17 January 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110221565